(19) Europäisches Patentamt / European Patent Office / Office européen des brevets

(11) **EP 4 679 910 A1**

(12) **EUROPEAN PATENT APPLICATION**
published in accordance with Art. 153(4) EPC

(43) Date of publication:
**14.01.2026 Bulletin 2026/03**

(21) Application number: **23925799.1**

(22) Date of filing: **09.03.2023**

(51) International Patent Classification (IPC):
*H04W 72/0446* (2023.01)

(52) Cooperative Patent Classification (CPC):
**H04W 72/0446**

(86) International application number:
**PCT/CN2023/080632**

(87) International publication number:
**WO 2024/183082 (12.09.2024 Gazette 2024/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• **ZHAO, Zhenshan**
  **Dongguan, Guangdong 523860 (CN)**
• **ZHANG, Shichang**
  **Dongguan, Guangdong 523860 (CN)**
• **DING, Yi**
  **Dongguan, Guangdong 523860 (CN)**

(74) Representative: **Mewburn Ellis LLP**
**Aurora Building**
**Counterslip**
**Bristol BS1 6BX (GB)**

(54) **SIDELINK TRANSMISSION METHOD AND TERMINAL DEVICE**

(57) Provided are a sidelink transmission method and a terminal device. The method comprises: a first terminal device determining a DMRS pattern of a first channel in a first time unit, wherein the first time unit comprises M consecutive time slots, M being a positive integer greater than 1. In the above technical solution, sidelink sending or sidelink receiving is performed on the basis of a time unit, and one time unit comprises a plurality of time slots, such that the transmission efficiency of sidelink data can be improved. Furthermore, a DMRS pattern based on a time unit is provided in the embodiments of the present application, which is conducive to improving the demodulation performance of data.

A first terminal device performs sidelink communication in a first time unit — S1710

FIG. 17

**Description**

## TECHNICAL FIELD

The present disclosure relate to the field of communications, and in particular, to a method for sidelink transmission and a terminal device.

## BACKGROUND

In order to improve the transmission rate of a sidelink communication system, it is possible to consider extending the frequency band of sidelink communication to high frequencies (e.g., a frequency band higher than 52.6 GHz). As the frequency increases, the subcarrier spacing will increase, and accordingly, the duration corresponding to one symbol will decrease. In this case, there is no suitable scheme on how sidelink communication should be performed.

## SUMMARY

The present disclosure provides a method for sidelink transmission and a terminal device. The following is an introduction to various aspects of the present disclosure.

In a first aspect, a method for sidelink transmission is provided and includes: determining, by a first terminal device, a DMRS pattern for a first channel transmitted in a first time unit; where the first time unit includes M consecutive slots, and M is a positive integer greater than 1.

In a second aspect, a terminal device is provided, the terminal device is a first terminal device and includes: a first determining module, configured to determine a demodulation reference signal (DMRS) pattern for a first channel transmitted in a first time unit; where the first time unit includes M consecutive slots, and M is a positive integer greater than 1.

In a third aspect, a terminal device is provided and includes a transceiver, a memory and a processor. The memory is configured to store a computer program, and the processor is configured to call the computer program stored in the memory and control the transceiver to receive or transmit signals, to enable the terminal device to perform the method in the first aspect.

In a fourth aspect, an apparatus is provided and includes a processor. The processor is configured to call a computer program from a memory, to enable the apparatus to perform the method in the first aspect.

In a fifth aspect, a chip is provided and includes a processor. The processor is configured to call a computer program from a memory, to enable a device equipped with the chip to perform the method in the first aspect.

In a sixth aspect, a computer-readable storage medium is provided and is configured to store a computer program. The computer program enables a computer to perform the method in the first aspect.

In a seventh aspect, a computer program product is provided and includes a computer program. The computer program enables a computer to perform the method in the first aspect.

In an eighth aspect, a computer program is provided. The computer program enables a computer to perform the method in the first aspect.

In the embodiments of the present disclosure, sidelink transmission or sidelink reception is performed based on a time unit, and one time unit includes multiple slots, in this way, transmission efficiency of sidelink data may be improved. Furthermore, the embodiments of the present disclosure provide the DMRS pattern based on the time unit, such that it helps to improve demodulation performance of data.

## BRIEF DESCRIPTION OF THE DRAWINGS

FIG. 1 is an example diagram of a system architecture of a wireless communication system to which embodiments of the present disclosure may be applied.
FIG. 2 is an example diagram of a scenario of sidelink communication within network coverage.
FIG. 3 is an example diagram of a scenario of sidelink communication with partial network coverage.
FIG. 4 is an example diagram of a scenario of sidelink communication outside network coverage.
FIG. 5 is an example diagram of a scenario of sidelink communication based on a central control node.
FIG. 6 is an exemplary diagram of a sidelink communication manner based on broadcast.
FIG. 7 is an example diagram of a sidelink communication manner based on unicast.
FIG. 8 is an example diagram of a sidelink communication manner based on multicast.
FIG. 9A is an example diagram of a slot structure used by a sidelink communication system.

FIG. 9B is another example diagram of a slot structure used by the sidelink communication system.

FIG. 10 is an example diagram of a sidelink feedback scenario.

FIG. 11 is a schematic diagram of time domain demodulation reference signal (DMRS) patterns that may be used by a physical sidelink shared channel (PSSCH) in a time length of 13 symbols.

FIG. 12 is a schematic diagram of frequency domain positions of DMRSs of a physical sidelink control channel (PSCCH).

FIG. 13 is a schematic diagram of a slot structure for transmitting a sidelink synchronization signal block (S-SSB).

FIG. 14 is an example diagram of a communication scenario of a wide beam communication system.

FIG. 15 is an example diagram of a communication scenario of a narrow beam communication system.

FIG. 16 is a schematic flowchart of a usage manner of a transmission configuration indicator (TCI) state.

FIG. 17 is a schematic flowchart of a sidelink transmission manner provided in an embodiment of the present disclosure.

FIG. 18A is an example diagram of a structure of a time unit provided in embodiments of the present disclosure.

FIG. 18B is another example diagram of a structure of a time unit provided in embodiments of the present disclosure.

FIG. 18C is the other example diagram of a time unit provided in embodiments of the present disclosure.

FIG. 18D is the other example diagram of a time unit provided in embodiments of the present disclosure.

FIG. 19A is the other example diagram of a time unit provided in embodiments of the present disclosure.

FIG. 19B is the other example diagram of a time unit provided in embodiments of the present disclosure.

FIG. 19C is the other example diagram of a time unit provided in an embodiment of the present disclosure.

FIG. 19D is the other example diagram of a time unit provided in embodiments of the present disclosure.

FIG. 19E is the other example diagram of the time unit provided in embodiments of the present disclosure.

FIG. 19F is the other example diagram of a time unit provided in an embodiment of the present disclosure.

FIG. 20 is an example diagram of an indexing manner for a time domain resource assignment indication field provided in embodiments of the present disclosure.

FIG. 21 is the other example diagram of a time unit provided in embodiments of the present disclosure.

FIG. 22 is the other example diagram of a time unit provided in embodiments of the present disclosure.

FIG. 23 is the other example diagram of a time unit provided in embodiments of the present disclosure.

FIG. 24 is the other example diagram of a time unit provided in embodiments of the present disclosure.

FIG. 25 is the other example diagram of a time unit provided in embodiments of the present disclosure.

FIG. 26 is the other example diagram of a time unit provided in embodiments of the present disclosure.

FIG. 27 is the other example diagram of a time unit provided in embodiments of the present disclosure.

FIG. 28 is the other example diagram of a time unit provided in embodiments of the present disclosure.

FIG. 29 is the other example diagram of a time unit provided in embodiments of the present disclosure.

FIG. 30 is the other example diagram of a time unit provided in embodiments of the present disclosure.

FIG. 31 is the other example diagram of a time unit provided in embodiments of the present disclosure.

FIG. 32 is a schematic flowchart of a sidelink transmission method provided in another embodiment of the present disclosure.

FIG. 33 is an example diagram of a sidelink feedback manner provided in embodiments of the present disclosure.

FIG. 34 is another example diagram of a sidelink feedback manner provided in embodiments of the present disclosure.

FIG. 35 is yet another example diagram of a sidelink feedback manner provided in embodiments of the present disclosure.

FIG. 36 is still another example diagram of a sidelink feedback manner provided in embodiments of the present disclosure.

FIG. 37 is yet still another example diagram of a sidelink feedback manner provided in embodiments of the present disclosure.

FIG. 38 is a schematic flowchart of a method for sidelink transmission provided in embodiments of the present disclosure.

FIG. 39 is the other example diagram of a time unit provided in embodiments of the present disclosure.

FIG. 40 is the other example diagram of a time unit provided in embodiments of the present disclosure.

FIG. 41 is the other example diagram of a time unit provided in embodiments of the present disclosure.

FIG. 42 is the other example diagram of a time unit provided in embodiments of the present disclosure.

FIG. 43A is the other example diagram of a time unit provided in embodiments of the present disclosure.

FIG. 43B is the other example diagram of a time unit provided in embodiments of the present disclosure.

FIG. 43C is the other example diagram of a time unit provided in embodiments of the present disclosure.

FIG. 44A is the other example diagram of a time unit provided in embodiments of the present disclosure.

FIG. 44B is the other example diagram of a time unit provided in embodiments of the present disclosure.

FIG. 45 is the other example diagram of a time unit provided in embodiments of the present disclosure.

FIG. 46A is the other example diagram of a time unit provided in embodiments of the present disclosure.

FIG. 46B is the other example diagram of a time unit provided in embodiments of the present disclosure.
FIG. 47A is the other example diagram of a time unit provided in embodiments of the present disclosure.
FIG. 47B is the other example diagram of a time unit provided in embodiments of the present disclosure.
FIG. 47C is the other example diagram of a time unit provided in embodiments of the present disclosure.
FIG. 48 is the other example diagram of a time unit provided in embodiments of the present disclosure.
FIG. 49A is the other example diagram of a time unit provided in embodiments of the present disclosure.
FIG. 49B is the other example diagram of a time unit provided in embodiments of the present disclosure.
FIG. 50 is the other example diagram of a time unit provided in embodiments of the present disclosure.
FIG. 51 is the other example diagram of a time unit provided in embodiments of the present disclosure.
FIG. 52 is the other example diagram of a time unit provided in embodiments of the present disclosure.
FIG. 53 is the other example diagram of a time unit provided in embodiments of the present disclosure.
FIG. 54 is the other example diagram of a time unit provided in embodiments of the present disclosure.
FIG. 55 is the other example diagram of a time unit provided in embodiments of the present disclosure.
FIG. 56 is a schematic diagram of a structure of a terminal device provided in embodiments of the present disclosure.
FIG. 57 is a schematic diagram of a structure of an apparatus provided in embodiments of the present disclosure.

## DETAILED DESCRIPTION

### Communication system architecture

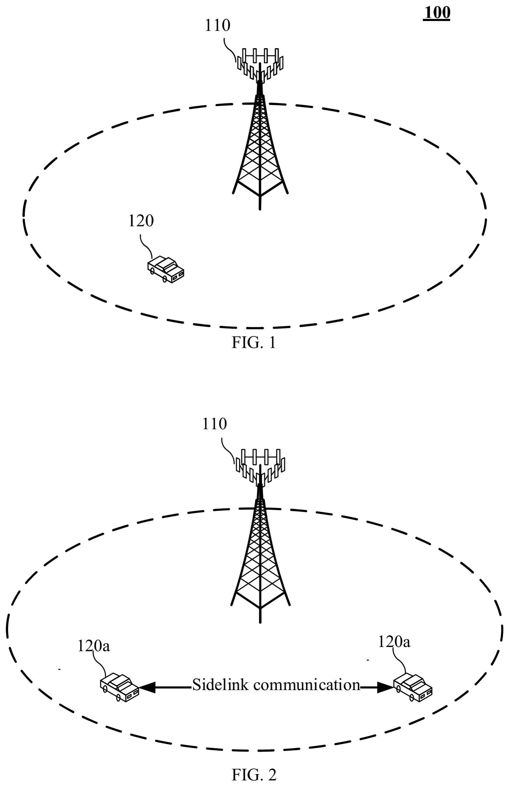

FIG. 1 is an example diagram of a system architecture of a wireless communication system 100 to which embodiments of the present disclosure may be applied. The wireless communication system 100 may include a network device 110 and a terminal device 120. The network device 110 may be a device that communicates with the terminal device 120. The network device 110 may provide communication coverage for a specific geographical area, and may communicate with the terminal device 120 located within the coverage area.

FIG. 1 exemplarily illustrates a network device and a terminal device. Optionally, the wireless communication system 100 may include one or more network devices 110 and/or one or more terminal devices 120. For one network device 110, the one or more terminal devices 120 may all be located within the network coverage range of the network device 110, or may all be located outside the network coverage range of the network device 110, or may be located partly within the network coverage range of the network device 110 and partly outside the network coverage range of the network device 110, which is not limited in the embodiments of the present disclosure.

Optionally, the wireless communication system 100 may also include other network entities such as a network controller, a mobility management entity, which is not limited in the embodiments of the present disclosure.

It should be understood that the technical solution of the embodiments of the present disclosure may be applied to various communication systems, such as a fifth-generation (5th generation, 5G) system or a new radio (NR) system, a long term evolution (LTE) system, an LTE frequency division duplex (FDD) system, an LTE time division duplex (TDD) system. The technical solution provided by the present disclosure may also be applied to future communication systems, such as a sixth-generation (6G) mobile communication system, a satellite communication system.

In the embodiments of the present disclosure, the terminal device may also be referred to as a user equipment (UE), an access terminal, a user unit, a user station, a mobile site, a mobile station (MS), a mobile terminal (MT), a remote station, a remote terminal device, a mobile device, a user terminal, a wireless communication device, a user agent or a user apparatus. In the embodiments of the present disclosure, the terminal device may refer to a device that provides voice and/or data connectivity to a user, and may be used to connect people, objects and machines, such as a handheld device or in-vehicle device with a wireless connection function. In the embodiments of the present disclosure, the terminal device may be a mobile phone, a tablet computer (Pad), a laptop computer, a handheld computer, a mobile Internet device (MID), a wearable device, a vehicle, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, etc. For example, the terminal device may act as a scheduling entity that provides sidelink signals between terminal devices in vehicle-to-everything (V2X) communication or device-to-device (D2D) communication. For example, a cellular phone and a car may communicate with each other by using sidelink signals. A cellular phone and a smart home device may communicate with each other without relaying communication signals via a base station. Optionally, the terminal device may be configured to act as a base station.

In the embodiments of the present disclosure, the network device may be a device used for communicating with a terminal device, and the network device may also be referred to as an access network device or a wireless access network device, e.g., a base station. In the embodiments of the present disclosure, the network device may refer to a radio access network (RAN) node (or device) that connects the terminal device to a wireless network. The base station may broadly cover the following various names, or may be replaced with the following names, such as: a NodeB, an evolved NodeB (eNB), a next generation NodeB (gNB), a relay station, an access point (AP), a transmitting and receiving point (TRP), a transmission point (TP), a master station (MeNB), a secondary station (SeNB), a multi-standard radio (MSR) node, a home base station, a network controller, an access node, a wireless node, an access point, a transmission node, a transceiver node, a base band unit (BBU), a remote radio unit (RRU), an active antenna unit (AAU), a remote radio head (RRH), a central unit (CU), a distributed unit (DU), a positioning node, etc. The base station may be a macro base station, a micro base station, a relay node, a donor node, or similar entities, or a combination thereof. The base station may also refer to a communication module, a modem or a chip configured to be set in the aforementioned devices or apparatuses. The base station may also be a mobile switching center, a device that performs functions of the base station in device-to-device (D2D) communication, vehicle-to-everything (V2X) communication, and machine-to-machine (M2M) communication, a network-side device in a 6G network, and a device that performs functions of the base station in a future communication system, etc. The base station may support networks with the same or different access technologies. The specific technologies used by the network device and the specific device forms of the network device are not limited in the embodiments of the present disclosure.

The base station may be immobile or mobile. For example, a helicopter or a drone may be configured to act as a mobile base station, and one or more cells may move based on the location of the mobile base station. In other examples, the helicopter or the drone may be configured to act as a device communicating with another base station.

In some deployments, the network device in the embodiments of the present disclosure may refer to a CU or a DU, or the network device includes a CU and a DU. The gNB may also include an AAU.

The network device and the terminal device may be deployed on land, which includes indoor or outdoor, in handheld or in-vehicle; may also be deployed on water; may also be deployed on an airplane, balloons and satellite in the air. The scenarios in which the network device and terminal device are located are not limited in the embodiments of the present disclosure.

## Sidelink communication under different network coverage conditions

Sidelink communication refers to a communication technology based on a sidelink. For example, the sidelink communication may be device to device (D2D) communication or vehicle to everything (V2X) communication. In a traditional cellular system, communication data is received or transmitted between a terminal device and a network device, while the sidelink communication supports direct transmission of communication data between terminal devices. Compared with traditional cellular communication, direct transmission of communication data between terminal devices may have higher spectrum efficiency and lower transmission delay. For example, the V2X system uses sidelink communication technology.

In sidelink communication, according to the network coverage conditions of the terminal devices, the sidelink communication may be classified into sidelink communication within network coverage, sidelink communication with partial network coverage, and sidelink communication outside network coverage.

FIG. 2 is an example diagram of a scenario of sidelink communication within network coverage. In the scenario illustrated in FIG. 2, two terminal devices 120a are both within the coverage range of the network device 110. Therefore, the two terminal devices 120a are both capable of receiving configuration signaling of the network device 110 (the configuration signaling may also be replaced with configuration information in the present disclosure), and determine sidelink configuration according to the configuration signaling of the network device 110. After the two terminal devices 120a have performed sidelink configuration, the sidelink communication may be performed on a sidelink.

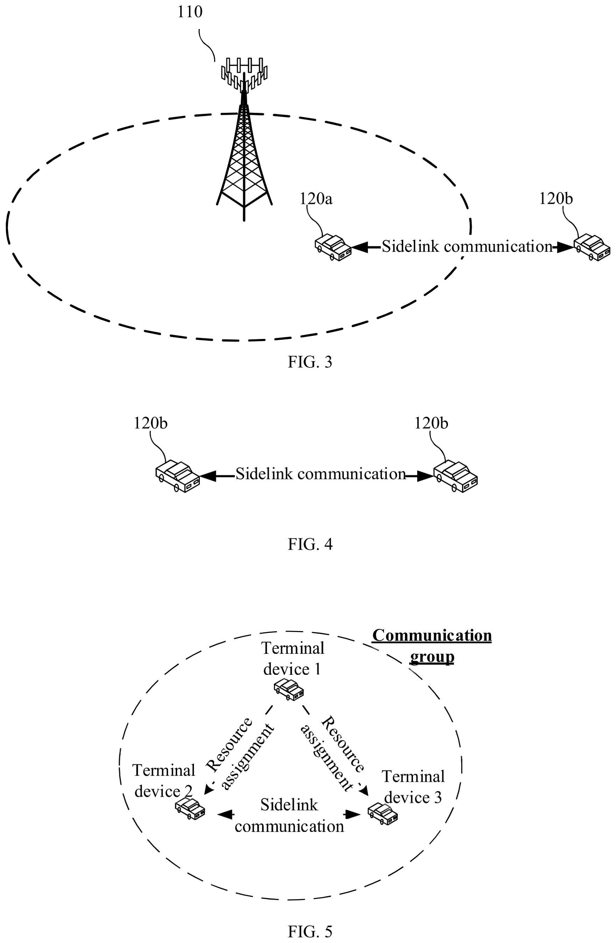

FIG. 3 is an example diagram of a scenario of sidelink communication with partial network coverage. In the scenario illustrated in FIG. 3, the terminal device 120a performs sidelink communication with the terminal device 120b. The terminal device 120a is located within the coverage range of the network device 110, then the terminal device 120a may receive configuration signaling of the network device 110 and determine sidelink configuration according to the configuration signaling of the network device 110. The terminal device 120b is located outside the network coverage range and cannot receive the configuration signaling of the network device 110. In this case, the terminal device 120b may determine the sidelink configuration according to preconfigured information and/or information carried in a physical sidelink broadcast channel (PSBCH) transmitted by the terminal device 120a within the network coverage range. After both the terminal device 120a and the terminal device 120b have performed sidelink configuration, the sidelink communication may be performed on a sidelink.

FIG. 4 is an example diagram of a scenario of sidelink communication outside network coverage. In the scenario illustrated in FIG. 4, two terminal devices 120b are both located outside the network coverage range. In this case, the two terminal devices 120b are both capable of determining sidelink configuration according to preconfigured information. After the two terminal devices 120b have performed sidelink configuration, the sidelink communication may be performed on a sidelink.

### Sidelink communication based on a central control node

FIG. 5 is an example diagram of a scenario of sidelink communication based on a central control node. In the scenario of sidelink communication, a plurality of terminal devices may form a communication group, and there is a central control node in the communication group. The central control node may be a terminal device in the communication group (e.g., a terminal device 1 in FIG. 5), and the terminal device may also be referred to as a cluster header (CH) terminal device. The central control node may be responsible for completing one or more of the following functions: establishment of a communication group, joining and leaving of group members of the communication group, coordinating resources within the communication group, assigning sidelink transmission resources for other terminal devices, receiving sidelink feedback information from other terminal devices, and coordinating resources with other communication groups.

### Sidelink communication mode

Some standards or protocols (such as third Generation Partnership Project (3GPP)) define two modes of sidelink communication: a first mode and a second mode.

In the first mode, a resource of a terminal device (the resource mentioned in the present disclosure may also be referred to as a transmission resource, such as time-frequency resource) is assigned by a network device. The terminal device may transmit data on the sidelink according to the resource assigned by the network device. The network device may assign, to the terminal device, a resource for a single transmission, or may assign, to the terminal device, a resource for a semi-persistent transmission. The first mode may be applied to a scenario with the coverage of network device, such as the scenario illustrated in FIG. 2 above. In the scenario illustrated in FIG. 2, the terminal device 120a is located within the network coverage range of the network device 110, and thus the network device 110 may assign, to the terminal device 120a, a resource for being used in the sidelink transmission process.

In the second mode, the terminal device may autonomously select one or more resources from a resource pool (RP). Then, the terminal device may perform sidelink transmission according to the selected resource. For example, in the scenario illustrated in FIG. 4, the terminal device 120b is located outside the cell coverage range. Therefore, the terminal device 120b may autonomously select resources for sidelink transmission from a preconfigured resource pool. Alternatively, in the scenario illustrated in FIG. 2, the terminal device 120a may also autonomously select one or more resources for sidelink transmission from a resource pool configured by the network device 110.

### Data transmission manner of sidelink communication

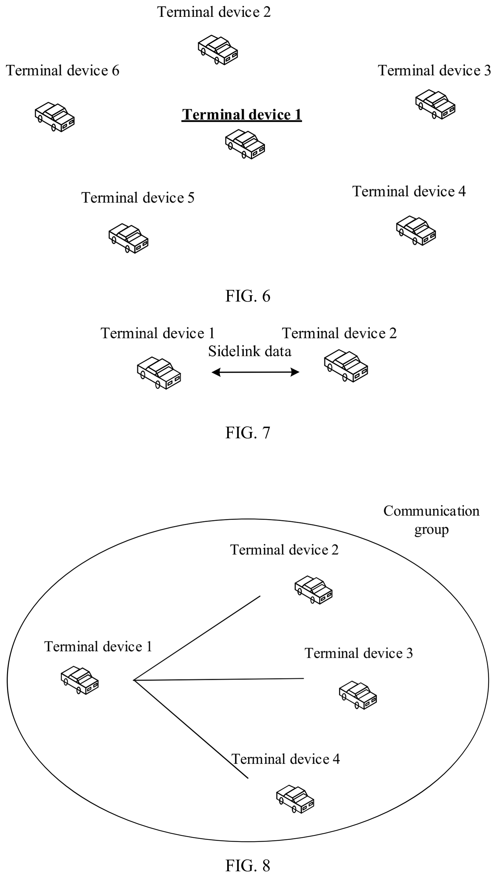

Some sidelink communication systems (e.g., long term evolution vehicle to everything (LTE-V2X)) support a data transmission manner based on broadcast (hereinafter referred to as broadcast transmission). For the broadcast transmission, a receiving terminal may be any terminal device around a transmitting terminal. Taking FIG. 6 as an example, a terminal device 1 is the transmitting terminal, and the receiving terminal corresponding to the transmitting terminal is any terminal device around the terminal device 1, such as a terminal device 2 to a terminal device 6 in FIG. 6.

In addition to the broadcast transmission, some communication systems also support a data transmission manner based on unicast (hereinafter referred to as unicast transmission) and/or a data transmission manner based on multicast (hereinafter referred to as multicast transmission). For example, new radio vehicle to everything (NR-V2X) aims to support autonomous driving. The autonomous driving imposes higher requirements on data interaction between vehicles. For example, the data interaction between vehicles requires higher throughput, lower latency, higher reliability, a larger coverage range, a more flexible resource assignment method, etc. Therefore, in order to improve the performance of data interaction between vehicles, the NR-V2X introduces the unicast transmission and the multicast transmission.

For the unicast transmission, the receiving terminal generally has only one terminal device. Taking FIG. 7 as an example, the unicast transmission is performed between a terminal device 1 and a terminal device 2. The terminal device 1 may be a transmitting terminal, and the terminal device 2 may be a receiving terminal, or the terminal device 1 may be a receiving terminal, and the terminal device 2 may be a transmitting terminal.

For the multicast transmission, the receiving terminal may be a terminal device within a communication group, or the receiving terminal may be a terminal device within a certain transmission distance. Taking FIG. 8 as an example, a terminal device 1, a terminal device 2, a terminal device 3 and a terminal device 4 constitute a communication group. If the terminal device 1 transmits data, other terminal devices (the terminal device 2 to the terminal device 4) in the communication group may all be receiving terminals.

### Slot structure of sidelink communication

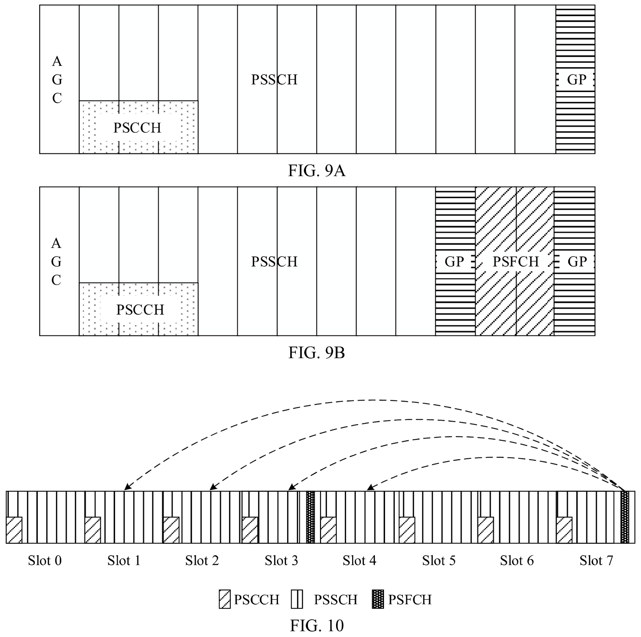

A communication system may define a frame, a subframe or a slot structure for sidelink communication. Some sidelink communication systems define various slot structures. For example, an NR-based sidelink communication system (NR SL) defines two slot structures. One of the two slot structures does not include a physical sidelink feedback channel (PSFCH), as illustrated in FIG. 9A; the other of the two slot structures includes the PSFCH, as illustrated in FIG. 9B.

A physical sidelink control channel (PSCCH) in the NR SL may take the second sidelink symbol of the slot as a starting position in time domain, and the PSCCH may occupy 2 or 3 symbols in the time domain (the symbols mentioned here may all refer to orthogonal frequency division multiplexing (OFDM) symbols). The PSCCH may occupy a plurality of physical resource blocks (PRBs) in frequency domain. For example, the number of PRBs occupied by the PSCCH may be selected from the following values: {10, 12, 15, 20, 25}.

In order to reduce the complexity of blind detection performed by a terminal device on the PSCCH, generally, only one number of symbols and one number of PRBs are configured for the PSCCH in a resource pool. In addition, since the NR SL uses a sub-channel as the minimum granularity for physical sidelink shared channel (PSSCH) resource assignment, the number of PRBs occupied by the PSCCH must be less than or equal to the number of PRBs included in a sub-channel in the resource pool.

As illustrated in FIG. 9A, for a slot structure that does not include the PSFCH, a PSSCH in the NR SL may take the second sidelink symbol of the slot as a starting position in time domain. The last sidelink symbol in the slot is used as a guard period (GP), and remaining symbols may map the PSSCH, where the guard period may also be referred to as a guard symbol. The first sidelink symbol in the slot may be a repetition of the second sidelink symbol. Generally speaking, a terminal device as a receiving uses the first sidelink symbol as a symbol for performing automatic gain control (AGC). Therefore, the data transmitted in the first sidelink symbol is generally not used for data demodulation. The PSSCH may occupy K subchannels in frequency domain, and each subchannel may include M consecutive PRBs (values of K and M may be predefined by a protocol, or preconfigured, or configured by the network device, or depend on the implementation of the terminal device).

FIG. 9B illustrates a slot structure including the PSFCH, and FIG. 9B schematically illustrates positions of symbols occupied by the PSFCH, the PSCCH, and the PSSCH in a slot. The main difference between the slot structure in FIG. 9B and the slot structure in FIG. 9A is that a second last symbol and the third-to-last symbol in the slot in FIG. 9B are used for transmitting the PSFCH, and in addition, one symbol earlier than the symbol used for transmitting the PSFCH is also used as GP (or guard symbol). It can be seen from the slot structure illustrated in FIG. 9B that in a slot, the last symbol is used as GP, a second last symbol is used for PSFCH transmission, and the data transmitted in the third-to-last symbol is the same as the data of the second last symbol used for PSFCH transmission, that is, the third-to-last symbol is used as the symbol for performing the AGC, and the fourth-to-last symbol has the same function as the last symbol and is also used as GP. In addition, the first symbol in the slot is used as AGC, the data transmitted in the first symbol is the same as the data transmitted in the second symbol in the slot, the PSCCH occupies 3 symbols, and the remaining symbols available for PSSCH transmission.

## PSFCH transmission resource

In order to reduce the overhead of the PSFCH, some communication systems define that one slot in every N slots includes a PSFCH transmission resource (or referred to as a sidelink feedback resource). That is, a period of the sidelink feedback resource is N slots. For example, a value of N may be 1, 2 or 4. The parameter N mentioned here may be preconfigured or may be configured by the network device.

FIG. 10 illustrates a sidelink feedback scenario corresponding to the value of N being 4. As illustrated in FIG. 10, sidelink feedback information of the PSSCH transmitted in a slots 1, 2, 3 and 4 is all transmitted in a slot 7. Therefore, slots {1, 2, 3, 4} may be regarded as a slot set, and a respective PSFCH corresponding to PSSCHs transmitted in each slot of the slot set is located in the same slot.

If a transmitting device (i.e., a terminal device as a transmitting) transmits the PSCCH/PSSCH in a slot n, a receiving device (i.e., a terminal device as a receiving) transmits the PSFCH in the first available slot latter than a slot n+k. The k mentioned here is a configuration parameter. The value of k may be 2 or 3. For example, in FIG. 10, it is configured by the network device that k=2, the transmitting device transmits the PSCCH/PSSCH in a slot 4, and the receiving device transmits the PSFCH in the first available slot latter than a slot 6, that is, the receiving device transmits the PSFCH in a slot 7.

## DMRS structure of PSCCH and PSSCH

The PSSCH supports a plurality of time domain DMRS patterns. Table 1 illustrates the definition of the time domain DMRS pattern of the PSSCH provided by some communication systems (e.g., the NR SL system). As illustrated in Table 1, within a resource pool, if the number of PSSCH symbols (the number of PSSCH symbols includes the first symbol used as AGC, but the number of PSSCH symbols do not include the last symbol used as GP, a PSFCH symbol, and an AGC symbol and a GP symbol earlier than the PSFCH symbol) is greater than or equal to 11, a maximum of three different time domain DMRS patterns may be configured. The three time domain DMRS patterns are respectively a time domain DMRS pattern including 2 DMRS symbols, a time domain DMRS pattern including 3 DMRS symbols, and a time domain DMRS pattern including 4 DMRS symbols. If the number of PSSCH symbols is 6, 7 or 8, only the time domain DMRS pattern including 2 DMRS symbols may be configured for the PSSCH. If the number of PSSCH symbols is 9 or 10, the time domain DMRS pattern including 2 or 3 DMRS symbols may be configured for the PSSCH. If the number of PSSCH symbols is 11, 12 or 13, the time domain DMRS pattern including 2 DMRS symbols, 3 DMRS symbols or 4 DMRS symbols may be configured for the PSSCH.

Table 1 illustrates symbol positions corresponding to PSSCH DMRS with different numbers of symbols in a case where the PSCCH occupies 2 symbols and 3 symbols respectively. It can be seen from Table 1 that the number of PSSCH symbols is greater than or equal to 6. That is, the number of symbols available for PSSCH transmission in one slot (does not include GP symbols) needs to be greater than or equal to 6.

If a plurality of time domain DMRS patterns are configured in the resource pool, the specific time domain DMRS pattern to be used is selected by the transmitting device and indicated in a first stage SCI.

Table 1: the number and position of DMRS symbols with different number of PSSCH symbols and PSCCH symbols

| The number of PSSCH symbols | position of DMRS symbol (relative to the first symbol available for PSSCH transmission) | | | | | |
| | The number of PSCCH symbols is 2 | | | The number of PSCCH symbols is 3 | | |
| | The number of DMRS symbols | | | The number of DMRS symbols | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1, 4, 7 | | 4, 8 | 1, 4, 7 | |
| 10 | 3, 8 | 1, 4, 7 | | 4, 8 | 1, 4, 7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 13 | 3, 10 | 1, 6, 11 | 1, 4, 7, 10 | 4, 10 | 1, 6, 11 | 1, 4, 7, 10 |

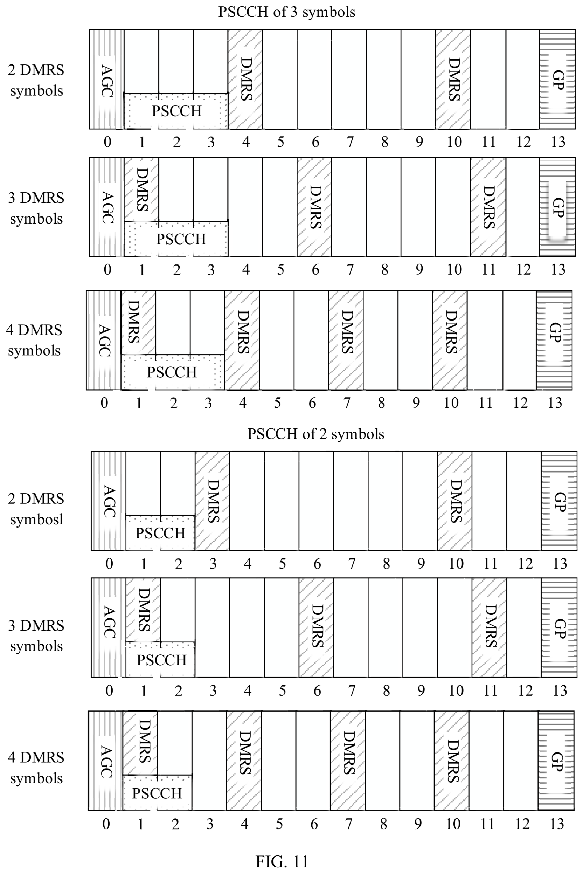

FIG. 11 illustrates a time domain DMRS pattern that may be used by a PSSCH in a time length of 13 symbols. In a case where the number of PSSCH symbols is 13, if the GP symbol is added, all 14 symbols in one slot are available for sidelink transmission. In frequency domain, in any PRB on a symbol including a DMRS, every two subcarriers include a subcarrier carrying a DMRS. For example, in one PRB, the PSSCH DMRS is located on subcarriers {#0, #2, #4, #6, #8, #10} in the PRB.

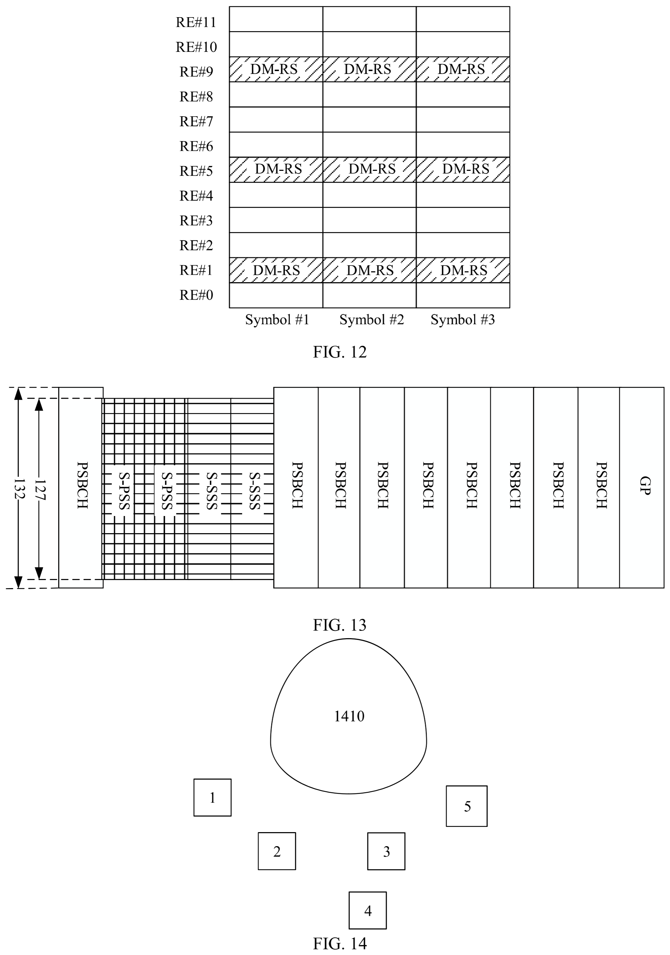

In time domain, the DMRS of the PSCCH exists in every symbol occupied by the PSCCH. In frequency domain, one PRB includes three subcarriers for carrying the PSCCH DMRS. For example, the DMRS of the PSCCH is located on subcarriers {#1, #5, #9} in one PRB, as illustrated in FIG. 12.

## PSBCH and DMRS structure of PSBCH

An S-SSB in a sidelink communication system (e.g., the NR SL) includes a sidelink synchronization signal and a PSBCH, and the sidelink synchronization signal is divided into a sidelink primary synchronization signal (S-PSS) and a sidelink secondary synchronization signal (S-SSS). The S-SSB may also be referred to as an S-SS/PSBCH block.

In time domain, the S-PSS occupies the second symbol and third symbol in a slot. The S-SSS occupies the fourth symbol and fifth symbol in a slot. The last symbol in a slot is GP (or guard symbol), and the remaining symbols are used for transmitting the PSBCH. The S-PSS and the S-SSS are consecutive in time domain, and thus a channel estimation result obtained based on the S-PSS may be applied to S-SSS detection, which is beneficial to improving the detection performance of the S-SSS.

In frequency domain, the PSBCH occupies 11 consecutive PRBs, that is, 132 subcarriers (each PRB includes 12 subcarriers). The length of each of the S-PSS and the S-SSS is 127, and thus on the symbols in which the S-PSS and the S-SSS are located, subcarriers #0, #1, #129, #130 and #131 are set to zero, as illustrated in FIG. 13.

A PSBCH DMRS is included in each symbol occupied by the PSBCH, and the PSBCH DMRS is mapped to a subcarrier #0, a subcarrier #4, and a subcarrier #8 in a resource block (RB) occupied by each PSBCH.

**Multi-beam system**

A design goal of a communication system (e.g., the NR system) include large-bandwidth communication in a high frequency band (e.g., a frequency band above 6 GHz). In a case where the operating frequency becomes higher, a path loss during a transmission process will increase, thereby affecting a coverage capability of a high frequency system. Therefore, in order to effectively ensure the coverage range of the high frequency band, an effective technical solution is forming a shaped beam with greater gain based on massive multiple input multiple output (massive MIMO), to overcome propagation loss, and ensure the coverage range of the communication system.

Currently, the most common massive MIMO is millimeter wave antenna array. Since a wavelength emitted by the millimeter wave antenna array is shorter, spacing between antenna elements of the antenna array may be shorter and an aperture of the antenna element may be smaller, and thus more physical antenna elements may be integrated into a two-dimensional antenna array of a limited size.

In addition, since the limited size of the millimeter wave antenna array, digital beamforming cannot be employed in considerations of factors such as hardware complexity, cost overhead, and power consumption. Instead, analog beamforming is generally used, which may enhances coverage of the network while reducing implementation complexity of a device.

To facilitate understanding of the multi-beam system, by taking a scenario of communication between the network device and the terminal device as an example, a communication process based on beam will be described below in conjunction with FIGS. 14 to 15.

Referring to FIG. 14, in a traditional communication system (e.g., a 2G, 3G or 4G system), a wider beam 1010 is generally used to cover an entire cell (or "sector"). In this way, terminal devices (e.g., terminal devices 1 to 5) within the cell may communicate with the network device via the wider beam at each time point, for example, to obtain transmission resources assigned by the network device.

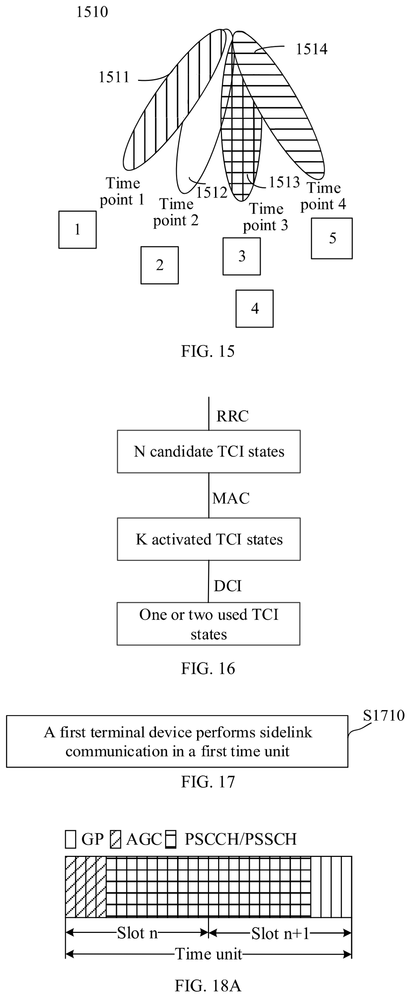

Referring to FIG. 15, in a newer communication system (e.g., a 5G system or NR system), a multi-beam system 1510 may be used to cover an entire cell. In other words, each beam in the multi-beam system (e.g., beams 1511 to 1514) covers a smaller range in the cell, and the effect of a plurality of beams covering the entire cell is achieved in a beam sweeping manner.

During a process of beam sweeping, different beams are utilized at different time points to cover different areas within the cell. For example, at a time point 1, the communication system may cover an area in which a terminal device 1 is located via a beam 1511. At a time point 2, the communication system may cover an area in which a terminal device 2 is located via beam 1512. At a time point 3, the communication system may cover an area in which a terminal device 3 and a terminal device 4 are located via a beam 1513. At a time point 4, the communication system may cover an area in which a terminal device 5 is located via a beam 1514.

For the multi-beam system, since a narrower beam is used, transmitted energy may be more focused, and thus a farther distance will be covered. However, because the beam is relatively narrow, each beam can only cover partial area within the cell, and thus a beam sweeping process of the multi-beam system can be understood as "trading time for space".

Analog beamforming may be employed not only in the network device, but also in the terminal device. Furthermore, the analog beamforming may be employed not only for transmission of signals (referred to as transmission beams), but also for reception of signals (referred to as reception beams).

Currently, different beams are identified by different signals carried in beams. For example, different synchronization signal and physical broadcast channel (PBCH) blocks (SSBs) may be transmitted on different beams, and thus the terminal device may distinguish different beams via different SSBs. For another example, different channel state information reference signals (CSI-RSs) may be transmitted on different beams, and thus the terminal device may identify different beams via CSI-RSs and/or CSI-RS resources.

In the multi-beam system, a physical downlink control channel (PDCCH) and a physical downlink shared channel (PDSCH) may be transmitted via different downlink transmission beams.

For some communication systems (e.g., communication systems with carrier frequencies below 6 GHz), an analog beam is not generally utilized by the terminal device. In such communication systems, the terminal device may use an omnidirectional antenna (or a nearly omnidirectional antenna) to receive signals transmitted by different downlink transmission beams of the network device.

For some communication systems (e.g., millimeter wave systems), the analog beam may be utilized by the terminal device. In such communication systems, the terminal device may use a downlink reception beam to receive a signal transmitted via a corresponding downlink transmission beam. In this case, beam indication information may be used to assist the terminal device in determining one or more of the following information: relevant information of a transmission beam of the network device, and relevant information of a reception beam corresponding to the terminal device.

In some communication protocols (e.g., NR-related protocols), the beam itself is not indicated by the beam indication information directly, but is indicated via quasi co-located (QCL) between signals. At the terminal device side, determination of receiving a corresponding channel/signal is also based on a QCL assumption.

The transmission beam mentioned in the embodiments of the present disclosure may also be referred to as a spatial domain transmission filter, a transmitting spatial domain transmission filter, a spatial domain transmission filter for transmission, or other names. Accordingly, the reception beam mentioned in the embodiments of the present disclosure may also be referred to as a spatial domain reception filter, a receiving spatial domain transmission filter, a spatial domain transmission filter for reception, or other names. Alternatively, the transmission beam mentioned in the embodiment of the present disclosure may also be referred to as a spatial domain transmission parameter. Correspondingly, the reception beam mentioned in the embodiments of the present disclosure may also be referred to as a spatial domain reception parameter.

**QCL indication/assumption for downlink transmission**

To enhance a receiving performance, when receiving a signal, the terminal device may improve a receiving algorithm by utilizing a characteristic of transmission environment corresponding to data transmission. For example, a design and parameter of a channel estimator may be optimized by the terminal device utilizing a statistical characteristic of the channel. In some communication systems (e,g,. NR systems), the characteristics of the transmission environment corresponding to the data transmission may be represented by QCL information (QCL-Info).

In a case where different transmission and receiving points (TRPs)/panels/beams are used for downlink data transmission, the characteristic of the transmission environment corresponding to the data transmission may also change. Therefore, in some communication systems (e.g., NR systems), in a case where a downlink control channel or a downlink data channel needs to be transmitted, the network device may indicate the corresponding QCL information to the terminal device via a transmission configuration indicator (TCI) state.

One TCI state may include the following configuration information: a TCI state identity (ID), QCL information 1, and QCL information 2 (optional). The TCI state ID may be used to identify the TCI state.

The QCL information may include the following information: QCL type configuration and QCL reference signal configuration. The QCL type configuration may be one of QCL-Type A, QCL-Type B, QCL-Type C or QCL-Type D. The QCL reference signal configuration may include a cell identity (cell ID) in which the reference signal is located, a bandwidth part (BWP), and an identity of the reference signal (such as a CSI-RS resource identity or an SSB index).

If both the QCL information 1 and the QCL information 2 are configured, a QCL type of at least one of the QCL information 1 and the QCL information 2 must be one of the QCL-Type A, the QCL-Type B, and the QCL-Type C, and a QCL type of the other QCL information must be the QCL type D.

Definitions of different QCL type configurations are as follows.

QCL-Type A: {Doppler shift, Doppler spread, average delay, delay spread}
QCL-Type B: {Doppler shift, Doppler spread}
QCL-Type C: {Doppler shift, average delay}
QCL-Type D: {spatial domain reception parameter}.

In the NR system, the network device may indicate a corresponding TCI state for a downlink signal or a downlink channel. If the network device configures, through the TCI state, a QCL reference signal of a target downlink channel or a target downlink signal as the SSB or the CSI-RS, and the QCL type is configured to the QCL-Type A, the QCL-Type B or the QCL-Type C, the terminal device may assume that a large-scale parameter of the target downlink signal is the same as that of the SSB or the CSI-RS. Specific content of the large-scale parameter may be determined based on the QCL type configuration.

Similarly, if the network device configures, through the TCI state, the QCL reference signal of the target downlink channel or downlink signal to the SSB or the CSI-RS, and the QCL type is configured to the QCL-Type D, the terminal device may use the same reception beam as that for receiving the SSB or the CSI-RS (i.e., the same spatial domain reception parameter (spatial Rx parameter)) to receive the target downlink signal. Generally speaking, at the network device side, the target downlink channel (or the target downlink signal) and the SSB or the CSI-RS to which the target downlink channel refers may be transmitted by the same TRP/panel/beam. If TRPs/panels/beams for transmitting two downlink signals (or downlink channels) are different, different TCI states are generally configured for the two downlink signals (or downlink channels).

For a downlink control channel, a TCI state of a control resource set (CORESET) corresponding to the downlink control channel may be indicated by RRC signaling or RRC signaling plus medium access control (MAC) signaling.

For the downlink data channel (i.e., the PDSCH), as illustrated in FIG. 16, a set of TCI states available for the downlink data channel may be indicated via the RRC signaling, and some of the TCI states may be activated via MAC layer signaling. Finally, one or two TCI states are indicated from activated TCI states via the TCI state indication field in the DCI for a downlink data channel scheduled by the DCI.

**New frequency band (high frequency) of communication system**

The research on some communication systems (e.g., NR systems) currently mainly considers the following two frequency bands: frequency range 1 (FR1) and frequency range 2 (FR2). The frequency bands included in the FR1 and the FR2 are illustrated in Table 2 below.

Table 2: definition of frequency bands corresponding to the FR1 and the FR2

| Definition of frequency band | Corresponding frequency range |
|---|---|
| FR1 | 410 MHz - 7.125 GHz |
| FR2 | 24.25 GHz - 52.6 GHz |

With the evolution of communication systems (e.g., NR systems), technologies in new frequency bands (generally referred to as high frequency) have also begun to be studied. The frequency of the new frequency band mentioned here may be higher than the FR1 and the FR2, and for example, may include the frequency range illustrated in Table 3 below.

Table 3: a possible definition of the new frequency band

| Definition of frequency band | Corresponding frequency range |
|---|---|
| FRX | 52.6 GHz - 71 GHz |

FRX used here represents the new frequency band, which is only for distinguishing it from the FR1 and the FR2, and is not intended to limit the name of the new frequency band. For example, the FRX may also be referred to as FR3. For another example, the FR2 in the above Table 2 may be recorded as FR2-1, and the FRX in Table 3 may be recorded as FR2-2. Of course, in addition to the two manners listed above, other manners may be used to identify the new frequency band, which is not limited in the embodiments of the present disclosure.

The FRX frequency band may include both licensed and unlicensed spectrum. In other words, the FRX frequency band may include both shared spectrum and non-shared spectrum. The unlicensed spectrum mentioned here is generally a spectrum assigned by a country or a region available for radio device communication, and the unlicensed spectrum is generally considered to be a spectrum shared by communication device in different communication systems. That is, as long as the communication device in different communication systems meets the regulatory requirements set by the country or the region on the spectrum, the spectrum may be used without applying for exclusive spectrum authorization from the government. In order to enable various communication systems that use unlicensed spectrum for wireless communication to coexist in a friendly manner on the spectrum, some countries or regions have stipulated regulatory requirements that must be met for the use of the unlicensed spectrum. For example, the communication device follows the "listen before talk (LBT)" principle, that is, before the communication device transmits a signal on a channel of the unlicensed spectrum, it needs to first perform channel listening. Only when the channel listening result shows that the channel is idle can the communication device transmit the signal. If the result of channel listening by the communication device on the channel of the unlicensed spectrum is that the channel is busy, the communication device cannot transmit the signal. For another example, in order to ensure fairness, in one transmission, a duration that the communication device uses the channel of the unlicensed spectrum to transmit the signal cannot exceed a certain duration. For another example, in order to avoid the power of the signal transmitted on the channel of the unlicensed spectrum being too high and affecting the transmission of other important signals on the channel, the communication device needs to comply with the restriction of not exceeding the maximum power spectral density in a case where using the channel of the unlicensed spectrum for signal transmission.

A subcarrier spacing of the FRX frequency band may be larger than a subcarrier spacing of the FR2. Currently, candidate subcarrier spacings of the FRX frequency band may include one or more of the following: 120 kHz, 240 kHz, 480 kHz, 960 kHz, 1.92 MHz, and 3.84 MHz. Taking subcarrier spacing of 120 kHz, 480 kHz and 960 kHz as examples, the corresponding numerology under the above candidate subcarrier spacings is illustrated in Table 4 below.

Table 4: numerology corresponding to candidate subcarrier spacings

| Subcarrier spacing | Symbol length | Normal cyclic prefix (NCP) length | Extended cyclic prefix (ECP) length | Sum of symbol length and NCP length | Slot length |
|---|---|---|---|---|---|
| 120 kHz | 8.32 $\mu$s | 0.586 $\mu$s | 2.08 $\mu$s | 8.906 $\mu$s | 125 $\mu$s |

(continued)

| Subcarrier spacing | Symbol length | Normal cyclic prefix (NCP) length | Extended cyclic prefix (ECP) length | Sum of symbol length and NCP length | Slot length |
|---|---|---|---|---|---|
| 480 kHz | 2.08 μs | 0.146 μs | 0.52 μs | 2.226 μs | 31.25 μs |
| 960 kHz | 1.04 μs | 0.073 μs | 0.26 μs | 1.113 μs | 15.625 μs |

In order to improve the transmission rate of the sidelink communication system, it is possible to consider introducing a new frequency band into the sidelink communication system. The new frequency band may refer to a millimeter wave frequency band. Alternatively, the new frequency band may refer to a frequency band having a frequency higher than 52.6 GHz, for example, the FRX (or FR2-2) frequency band having a frequency range between 52.6 GHz and 71 GHz.

The subcarrier spacing supported in different frequency ranges may be different. For example, the FR1 may support the subcarrier spacing of 15 kHz, 30 kHz, and 60 kHz. The FR2-1 may support the subcarrier spacing of 60 kHz and 120 kHz. The FRX may support the subcarrier spacing of 120 kHz and above, such as the FRX may support the subcarrier spacing of 120 kHz, 480 kHz and 960 kHz.

The related art defines a slot structure corresponding to the following subcarrier spacings: 15 kHz, 30 kHz, 60 kHz and 120 kHz. However, in a case where the subcarrier spacing is greater than 120 kHz, such as in a case where the subcarrier spacing reaches 480 kHz and 960 kHz, how the slot structure of the sidelink communication system should be designed has not yet been discussed.

In view of the above problems, a possible slot structure design solution is to continue to use the slot structure illustrated in FIG. 9A and FIG. 9B. However, a careful study will reveal that if the slot structure illustrated in FIG. 9A and FIG. 9B is continued to be used, the communication process will be difficult to implement. The specific reasons are discussed as follows.

As illustrated in FIG. 9A or FIG. 9B, in one slot for sidelink communication, the first symbol is generally an AGC symbol for the receiving device to perform AGC adjustment or AGC training; the last symbol is used as GP, which is generally used for RX/TX switching or TX/RX switching of the terminal device. In a case where the subcarrier spacing is different, the duration corresponding to one symbol is different. For example, in a case where the subcarrier spacing is 15 kHz, the duration corresponding to one symbol is approximately 66.7 us. If the duration of 4.69 us corresponding to cyclic prefix (CP) is added, in a case where the subcarrier spacing is 15 kHz, a total duration of one symbol is approximately 71 us to 72 us. For example, in a case where the subcarrier spacing is 120 kHz, a total duration of one symbol (a sum of the symbol and CP length) is approximately 8 us to 9 us. Therefore, in a case where the subcarrier spacing is 120 kHz, the AGC adjustment time does not exceed 8 us to 9 us, and a receive-transmit conversion time or a transmit-receive conversion time of the terminal device is about 7 us.

Duration corresponding to the conversion time in the FR1 and the FR2 (which may include the FR2-1 and the FR2-2) may be determined based on Table 5 below.

Table 5: receive-transmit conversion time and transmit-receive conversion time

| | First frequency range (FR1) | Second frequency range (FR2) |
|---|---|---|
| Transmit-receive conversion time | 25600 | 13792 |
| Receive-transmit conversion time | 25600 | 13792 |

Values in Table 5 represent the number of time units. The duration corresponding to one time unit may be determined by the following equation: $T_c = 1/(\Delta f_{max} \cdot N_f)$, where $\Delta f_{max} = 480 \cdot 10^3$Hz, $N_f = 4096$.

In a case where the subcarrier spacing is greater than 120 kHz, a duration corresponding to one symbol will continue to shorten. For example, in a case where the subcarrier spacing of the sidelink system is 480 kHz, the duration of one symbol is approximately 2 us to 3 us (as illustrated in Table 4); in a case where the subcarrier spacing of the sidelink system is 960 kHz, the duration of one symbol is approximately 1 us (as illustrated in Table 4). It can be seen that as the frequency increases, the duration corresponding to one symbol may be too short, making it difficult for the terminal device to complete AGC adjustment, receive-transmit conversion or transmit-receive conversion in such a short time. Therefore, more symbols are needed for the AGC adjustment and the receive-transmit conversion (or transmit-receive conversion). However, if a plurality of symbols are used as AGC or GP, the number of symbols used for sidelink data transmission becomes relatively small, thereby greatly reducing the transmission efficiency of the communication system.

In response to the above problems, the embodiments of the present disclosure propose a time unit available for sidelink transmission (refer to Embodiment 1 for details). The time unit may include a plurality of slots, thereby alleviating the problem caused by the short duration corresponding to the symbol to a certain extent. For the convenience of description, the following content mainly performs introduction from the perspective of a first time unit. The first time unit may be any time unit used for sidelink communication. As illustrated in FIG. 17, based on the introduction of the first time unit, a first terminal device may perform sidelink communication (e.g., sidelink transmission or sidelink reception, as illustrated in step S1710 of FIG. 17) in the first time unit. The sidelink communication process may involve the transmission of one or more of the PSSCH, the PSCCH or the PSFCH, and thus the embodiments of the present disclosure further propose how to perform PSSCH transmission based on the time unit (refer to Embodiment 2 for details) and how to determine the transport block size (TBS) (refer to Embodiment 3 for details), how to perform side feedback based on the time unit (refer to Embodiment 4 for details), how to determine PSFCH transmission resource and PSFCH configuration information (refer to Embodiment 5 for details), and how to determine DMRS pattern based on the time unit (refer to Embodiment 6 for details). It should be understood that, in the absence of conflict, implementations provided by these embodiments may be arbitrarily combined with each other.

## Embodiment 1: a first time unit including M consecutive slots

The first time unit may include M consecutive slots (M is a positive integer greater than 1). The first time unit may also be understood as a slot structure based on a plurality of slots. In some implementations, the first time unit may be referred to as an aggregate slot, a slot aggregation, a super slot, a slot group, or multiple slot or multi-slot.

In some implementations, a value of M may be determined based on one or more of the following: information predefined in a protocol; resource pool configuration information; sidelink BWP configuration information; or indication information from a terminal device. The terminal device may be a transmitting device of sidelink data, or may be a receiving device of sidelink data.

In some implementations, M slots included in a first time unit are M consecutive physical slots. Physical slots are called relative to logical slots. Generally speaking, a slot belonging to a resource pool is referred to as a logical slot, and the $10240 \cdot 2^{\mu_{SL}}$ slots included in a system frame number (SFN) period (including 10240 ms) are referred to as physical slots, and $\mu_{SL}$ is a parameter related to the sidelink subcarrier spacing, and a value of $\mu_{SL}$ may be determined based on Table 6.

Table 6

| $\mu_{SL}$ | Subcarrier spacing $\Delta f = 2^{\mu} \cdot 15$ [kHz] |
|---|---|
| 0 | 15 |
| 1 | 30 |
| 2 | 60 |
| 3 | 120 |
| 5 | 480 |
| 6 | 960 |

The consecutive slots in the resource pool may not be consecutive physical slots. If the M consecutive slots are set as the M consecutive slots in a resource pool, the middle of the M slots may include slots belonging to other resource pools. In this way, in a case where the terminal device uses the M slots for transmission, it may need to perform reception on slots belonging to other resource pools, resulting in additional GP overhead for receive-transmit conversion. Therefore, setting the M slots as M consecutive physical slots may reduce the GP overhead caused by the receive-transmit conversion.

In some implementations, M slots included in a first time unit are consecutive slots available for sidelink transmission (slots in a resource pool are determined from the slots available for sidelink transmission).

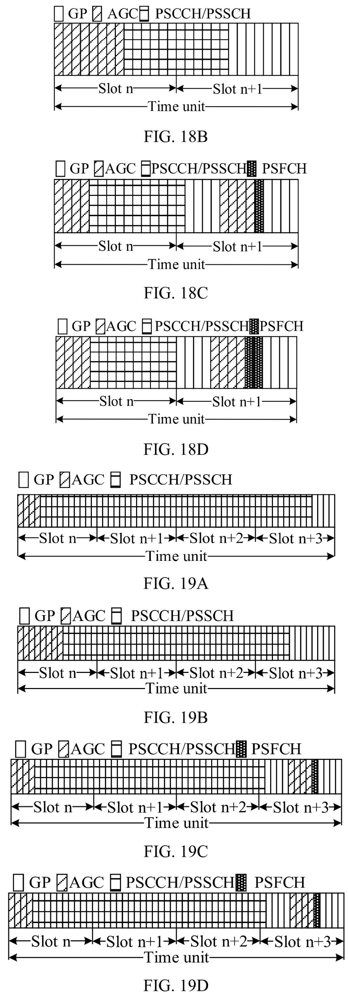

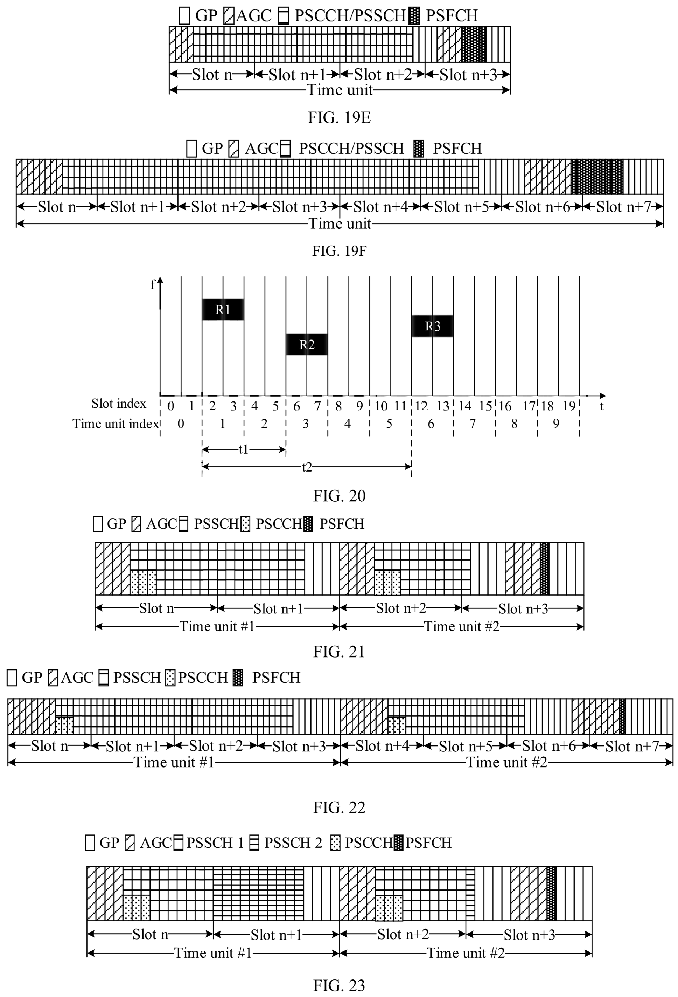

In some implementations, a first time unit may include a PSCCH transmission resource and a PSSCH transmission resource. Alternatively, the first time unit may include the PSCCH transmission resource, the PSSCH transmission resource and PSFCH transmission resource. The following uses of each symbol in the first time unit are illustrated with reference to FIG. 18 and FIG. 19. In the first time unit illustrated in FIG. 18 and FIG. 19, the first symbol used to transmit the PSCCH or the PSSCH is located at the (A+1)-th symbol in the first time unit, that is, the first A symbols in the first time unit are AGC symbols which are available for AGC adjustment or AGC training, and the last B1 symbols in the first time unit are guard symbols or GP symbols.

FIG. 18A illustrates an example of a first time unit. In FIG. 18A, the first time unit includes 2 slots (slot n and slot (n+1) in FIG. 18A), that is, M is equal to 2. In the 2 slots, the first 4 symbols are used as AGC and the last 4 symbols are used as GP. The first time unit using the slot structure illustrated in FIG. 18A, for example, may be applied to the case where the sidelink subcarrier spacing is 480 kHz.

FIG. 18B illustrates another example of the first time unit. In FIG. 18B, the first time unit includes 2 slots (slot n and slot (n+1) in FIG. 18B), that is, M is equal to 2. In the 2 slots, the first 8 symbols are used as AGC and the last 8 symbols are used as GP. The first time unit using the slot structure illustrated in FIG. 18B, for example, may be applied to the case where the sidelink subcarrier spacing is 480 kHz or 960 kHz.

FIG. 18C illustrates yet another example of a first time unit. In FIG. 18C, the first time unit includes 2 slots (slot n and slot (n+1) in FIG. 18C), that is, M is equal to 2. In the 2 slots, the first 4 symbols are used as AGC and the last 4 symbols are used as GP. The first time unit also includes a PSFCH transmission resource. The PSFCH transmission resource occupies 5 symbols, one of which is used to transmit sidelink feedback information (e.g., hybrid automatic repeat reQuest (HARQ) information) or conflict indication information, and the remaining 4 symbols are used as AGC. In addition, 4 symbols used as GP are included earlier than the symbol corresponding to the PSFCH transmission resource. The first time unit using the slot structure illustrated in FIG. 18C, for example, may be applied to the case where the sidelink subcarrier spacing is 480 kHz.

FIG. 18D illustrates yet another example of a first time unit. In FIG. 18D, the first time unit includes 2 slots (slot n and slot (n+1) in FIG. 18D), that is, M is equal to 2. In the 2 slots, the first 4 symbols are used as AGC and the last 4 symbols are used as GP. The first time unit also includes the PSFCH transmission resource. The PSFCH transmission resource occupies 6 symbols, 2 symbols of which are used to transmit the sidelink feedback information (e.g., the HARQ information) or the conflict indication information, and the remaining 4 symbols are used as AGC. In addition, 4 symbols used as GP are included earlier than the symbol corresponding to the PSFCH transmission resource. The first time unit using the slot structure illustrated in FIG. 18D, for example, may be applied to the case where the sidelink subcarrier spacing is 480 kHz.

FIG. 19A illustrates yet another example of a first time unit. In FIG. 19A, the first time unit includes 4 slots (i.e., slot n, slot (n+1), slot (n+2), and slot (n+3) in FIG. 19A), that is, M is equal to 4. In the 4 slots, the first 4 symbols are used as AGC and the last 4 symbols are used as GP. The first time unit using the slot structure illustrated in FIG. 19A, for example, may be applied to the case where the sidelink subcarrier spacing is 480 kHz.

FIG. 19B illustrates yet another example of a first time unit. In FIG. 19B, the first time unit includes 4 slots (i.e., slot n, slot (n+1), slot (n+2), and slot (n+3) in FIG. 19A), that is, M is equal to 4. In the 4 slots, the first 8 symbols are used as AGC and the last 8 symbols are used as GP. The first time unit using the slot structure illustrated in FIG. 19B, for example, may be applied to the case where the sidelink subcarrier spacing is 480 kHz or 960 kHz.

FIG. 19C illustrates yet another example of a first time unit. In FIG. 19C, the first time unit includes 4 slots (i.e., slot n, slot (n+1), slot (n+2), and slot (n+3) in FIG. 19C), that is, M is equal to 4. In the 4 slots, the first 4 symbols are used as AGC and the last 4 symbols are used as GP. The first time unit includes the PSFCH transmission resource. The PSFCH transmission resource occupies 5 symbols, one of which is used to transmit the sidelink feedback information (e.g., the HARQ information) or the conflict indication information, and the remaining 4 symbols are used as AGC. In addition, 4 symbols used as GP are included earlier than the symbol corresponding to the PSFCH transmission resource. The first time unit using the slot structure illustrated in FIG. 19C, for example, may be applied to the case where the sidelink subcarrier spacing is 480 kHz.

FIG. 19D illustrates yet another example of a first time unit. In FIG. 19D, the first time unit includes 4 slots (i.e., slot n, slot (n+1), slot (n+2), and slot (n+3) in FIG. 19D), that is, M is equal to 4. In the 4 slots, the first 8 symbols are used as AGC and the last 8 symbols are used as GP. The first time unit includes the PSFCH transmission resource. The PSFCH transmission resource occupies 9 symbols, one of which is used to transmit the sidelink feedback information (e.g., the HARQ information) or the conflict indication information, and the remaining 8 symbols are used as AGC. In addition, 8 symbols used as GP are included earlier than the symbol corresponding to the PSFCH transmission resource. The first time unit using the slot structure illustrated in FIG. 19D, for example, may be applied to the case where the sidelink subcarrier spacing is 480 kHz or 960 kHz.

FIG. 19E illustrates yet another example of a first time unit. In FIG. 19E, the first time unit includes 4 slots (i.e., slot n, slot (n+1), slot (n+2), and slot (n+3) in FIG. 19E), that is, M is equal to 4. In the 4 slots, the first 4 symbols are used as AGC and the last 4 symbols are used as GP. The first time unit includes the PSFCH transmission resource. The PSFCH transmission resource occupies 8 symbols, of which 4 symbols are used to transmit the sidelink feedback information (e.g., the HARQ information) or the conflict indication information, and the remaining 4 symbols are used as AGC. In addition, 4 symbols used as GP are included earlier than the symbol corresponding to the PSFCH transmission resource. The first time unit using the slot structure illustrated in FIG. 19E, for example, may be applied to the case where the sidelink subcarrier spacing is 480 kHz. FIG. 19E can be understood as a time unit structure including multi-slot obtained by proportionally expanding (4 times expansion) a single-slot structure corresponding to a 120 kHz subcarrier spacing.

FIG. 19F illustrates yet another example of a first time unit. In FIG. 19F, the first time unit includes 8 slots (i.e., slot n to slot (n+7) in FIG. 19F), that is, M is equal to 8. In the 8 slots, the first 8 symbols are used as AGC and the last 8 symbols are used as GP. The first time unit includes the PSFCH transmission resource. The PSFCH transmission resource occupies 16 symbols, 8 symbols of which are used to transmit the sidelink feedback information (e.g., the HARQ information), and the remaining 8 symbols are used as AGC. In addition, 8 symbols used as GP are included earlier than the symbol corresponding to the PSFCH transmission resource. The first time unit using the slot structure illustrated in FIG. 19F, for example, may be applied to the case where the sidelink subcarrier spacing is 480 kHz or 960 kHz. FIG. 19F can be understood as a time unit structure including multi-slot obtained by proportionally expanding (8 times expansion) a single-slot structure corresponding to a 120 kHz subcarrier spacing.

Embodiment 1.1: a guard symbol in a first time unit

The guard symbol may also be referred to as a symbol used as GP. In some implementations, the guard symbol may be used by a terminal device to perform a receive-transmit conversion or a transmit-receive conversion. In some implementations, no data may be mapped on the guard symbol.

In some implementations, a first time unit may include a first guard symbol, the first guard symbol includes B1 consecutive symbols, and the B1 symbols are the last B1 symbols in the first time unit, and B1 is a positive integer greater than 1.

In some implementations, the first time unit may include a first guard symbol, the first guard symbol includes B1 consecutive symbols, and the B1 symbols are the last B1 symbols available for sidelink transmission in the first time unit, and B1 is a positive integer greater than 1.

In some implementations, a first guard symbol is located in the last slot of the first time unit.

In some implementations, if the first time unit includes a first time domain resource for transmitting a PSFCH, the first time unit may include second guard symbols, the second guard symbols include B2 consecutive symbols, and B2 is a positive integer greater than 1. The B2 symbols in the second guard symbol may be earlier than the first time domain resource. The B2 symbols may be adjacent to the first time domain resource, that is, the last symbol of the B2 symbols and the first symbol of the first time domain resource are adjacent symbols in the first time unit.

In some implementations, the second guard symbols are located in the last slot and/or a second last slot of the first time unit.

In some implementations, the value of B1 and a value of B2 are the same. For example, B1 and B2 are both equal to B, and B is a positive integer greater than 1. In some other implementations, the value of B1 and the value of B2 are different. For example, B1 is greater than B2, or B2 is greater than B1.

The determination manner of the value of B is described in detail below. It should be understood that the determination manner of the value of B may be applicable to the B1, and may also be applicable to the B2.

In some implementations, the value of B is equal to 4. Furthermore, in some implementations, if the value of B is equal to 4, and a sidelink subcarrier spacing corresponding to the first time unit is 480 kHz. For example, in examples of time units illustrated in FIGS. 18A, 18C, 18D, 19A, 19C, and 19E, the value of B is 4.

In some implementations, a value of B is equal to 8. Furthermore, in some implementations, if the value of B is equal to 8, and a sidelink subcarrier spacing corresponding to the first time unit is 480 kHz or 960 kHz. For example, in examples of time units illustrated in FIGS. 18B, 19B, 19D, and 19F, the value of B is 8.

In some implementations, the value of B is determined based on one or more of the following information: information predefined in a protocol; resource pool configuration information; sidelink BWP configuration information; or indication information from a terminal device. The terminal device may be a transmitting device of sidelink data, or may be a receiving device of sidelink data.

In some implementations, the value of B may be determined based on first indication information. The first indication information may be used to indicate one or more of the following: the value of B; a time domain position of the first symbol available for sidelink transmission in one slot or time unit (the time unit mentioned in various embodiments of the present disclosure may refer to a time unit containing M consecutive slots, or a time unit containing M consecutive slots available for sidelink transmission, which will not be repeated below); a length or a number of symbols available for sidelink transmission in one time unit; and a number of slots included in one time unit.

As an example, first indication information may be used to directly indicate the value of B. Alternatively, the value of B may be determined based on the value indicated by the first indication information.

As another example, the first indication information may include information 1 and information 2. The information 1 indicates the time domain position of the first symbol available for sidelink transmission in one slot or one time unit. The information 2 indicates a length or the number of symbols available for sidelink transmission in one time unit. The value of B may be determined based on the information 1 and the information 2. For example, the information 1 indicates that the time domain position of the first symbol available for sidelink transmission in one time unit is symbol 0; the information 2 indicates that the number of symbols available for sidelink transmission in one time unit is 24. According to the information 1 and the information 2, it can be assumed that the first time unit includes 2 slots. In the case of normal CP, the first time unit includes 28 symbols, and thus the number of symbols used as GP is 4, that is, the value of B is 4.

As another example, the first indication information may include information 3. The information 3 indicates the length or the number of symbols available for sidelink transmission in one time unit. The value of B may be determined based on the information 3. For example, the information 3 indicates that the number of symbols available for sidelink transmission in one time unit is 24. The value indicated by the information 3 is greater than the number of symbols included in one slot and less than the number of symbols included in two slots. Therefore, it can be assumed that the first time unit includes two slots and both the two slots are available for sidelink transmission. In the case of normal CP, two slots include a total of 28 symbols, and thus the number of GP symbols is 4, that is, a value of B is 4 (in this example, it is assumed that the starting symbol corresponding to the sidelink transmission resource in the first time unit is the first symbol of the first time unit).

As another example, the first indication information may include information 4 and information 5. The information 4 indicates the length or the number of symbols available for sidelink transmission in one time unit. The information 5 indicates the number of slots included in one time unit. The value of B may be determined based on the information 4 and the information 5. For example, the information 4 indicates that the number of symbols available for sidelink transmission in one time unit is 24, and the information 5 indicates that one time unit includes 2 slots. In the case of normal CP, two slots include a total of 28 symbols, and thus the number of GP symbols is 4, that is, the value of B is 4 (in this example, it is assumed that the starting symbol corresponding to the sidelink transmission resource in the first time unit is the first symbol of the first time unit).

In some implementations, the first indication information may be included in resource pool configuration information or sidelink BWP configuration information. Alternatively, the first indication information may be indicated by a terminal device. The terminal device may be a transmitting device of the sidelink data, or may be a receiving device of sidelink data.

In some implementations, the value of B may be determined based on a first sidelink subcarrier spacing and a second sidelink subcarrier spacing. The first sidelink subcarrier spacing is different from the second sidelink subcarrier spacing.

In some implementations, the first sidelink subcarrier spacing may be greater than the second sidelink subcarrier spacing.

In some implementations, the first sidelink subcarrier spacing is a sidelink subcarrier spacing corresponding to the first time unit.

In some implementations, the first subcarrier spacing is determined based on information predefined in a protocol, resource pool configuration information, or sidelink BWP configuration information. Taking the first sidelink subcarrier spacing being determined based on the sidelink BWP configuration information as an example, the sidelink BWP configuration information may be used to configure a BWP corresponding to the first time unit.

In some implementations, the second subcarrier spacing is determined based on information predefined in a protocol, resource pool configuration information, or sidelink BWP configuration information. The second subcarrier spacing may sometimes also be referred to as a reference subcarrier spacing.

In some implementations, the first sidelink subcarrier spacing is 480 kHz or 960 kHz.

In some implementations, the second subcarrier spacing is 15 kHz, 30 kHz, 60 kHz or 120 kHz.

For example, the first sidelink subcarrier spacing is represented by $\mu_{SL1}$, the second sidelink subcarrier spacing is represented by $\mu_{SL2}$, and B satisfies the following equation: $B = \dfrac{2^{\mu_{SL1}}}{2^{\mu_{SL2}}}$. Assuming that $\mu_{SL1} = 5$ and $\mu_{SL2} = 3$, that is, the first sidelink subcarrier spacing is a subcarrier spacing of 480 kHz, and the second sidelink subcarrier spacing is a subcarrier spacing of 120 kHz. In this case, B is equal to 4. Assuming that $\mu_{SL1} = 6$ and $\mu_{SL2} = 3$, that is, the first sidelink subcarrier spacing is 960 kHz subcarrier spacing, and the second sidelink subcarrier spacing is 120 kHz subcarrier spacing. In this case, B is equal to 8.

In some implementations, the first time unit may include two adjacent slots, a third guard symbol is set between symbols used for sidelink transmission in the two adjacent slots.

In some implementations, the third guard symbol includes C symbols, and C may be a positive integer greater than or equal to 1. For example, a value of C is 1 or 2. For another example, the value of C is less than or equal to the value of B.

In some implementations, the third guard symbol corresponds to the last C symbols in the previous one of two slots. In other words, the last C symbols of the previous slot of the two adjacent slots are used as guard symbols.

In some implementations, the third guard symbol corresponds to the first C symbols of the latter slot of two slots. In other words, the first C symbols of the latter slot of the two adjacent slots are used as guard symbols.

In some implementations, the value of C is determined based on one or more of the following: information predefined in a protocol; resource pool configuration information; sidelink BWP configuration information; or indication information from a terminal device. The terminal device may be a transmitting device of sidelink data, or may be a receiving device of sidelink data.

In some implementations, if the first time unit is used to transmit a plurality of PSSCHs, and the plurality of PSSCHs correspond to different transport blocks (TBs) (for a detailed description of transmitting a plurality of PSSCHs in one time unit, and a plurality of PSSCHs corresponding to different TBs, Embodiment 2.3 below may be referred to), the third guard symbol may be set between adjacent slots in the first time unit. Since a plurality of PSSCHs correspond to different TBs, a plurality of PSSCHs may be PSSCHs transmitted to different receiving devices, and therefore a plurality of PSSCHs may correspond to different transmission beams. In this case, the transmitting device needs to switch the transmission beam when transmitting the PSSCH, and a duration corresponding to the third guard symbol may be used by the transmitting device to switch the transmission beam.

In some implementations, if the first time unit is used to transmit a plurality of PSSCHs, a fourth guard symbol is set between transmission resources of two adjacent PSSCHs in the plurality of PSSCHs.

In some implementations, the fourth guard symbol includes D symbols, and D is a positive integer greater than or equal to 1. For example, a value of D is 1 or 2. For another example, the value of D is less than or equal to the value of B.

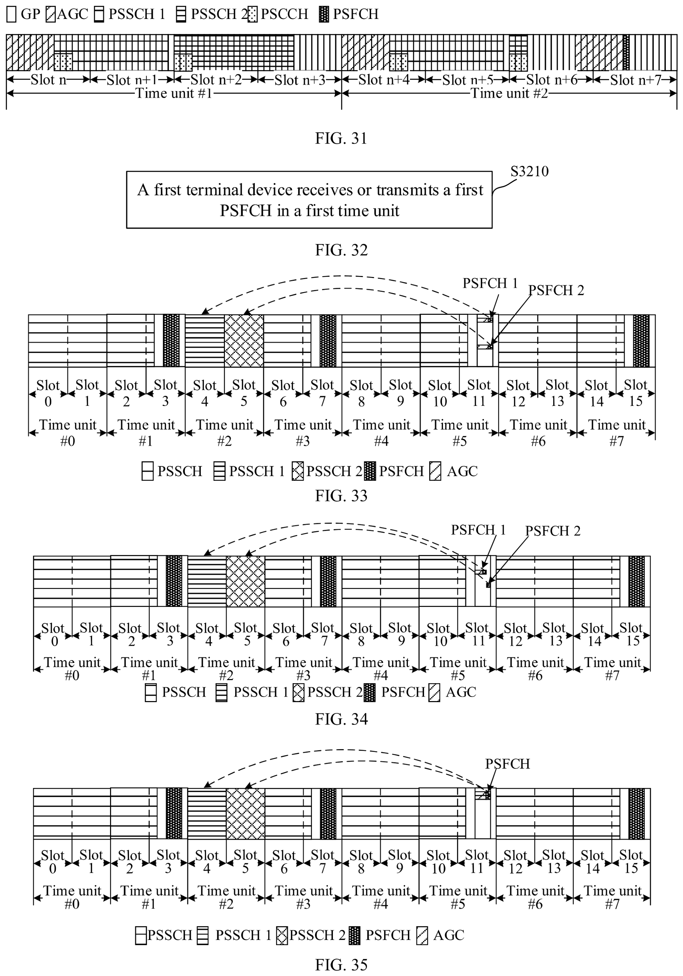

In some implementations, the fourth guard symbol corresponds to the last D symbols in the last slot of slots occupied by the previous PSSCH of two adjacent PSSCHs transmitted in the first time unit. In other words, the last D symbols in the last slot of slots occupied by the previous PSSCH of the two adjacent PSSCHs are used as guard symbols. For details, please refer to the example illustrated in FIG. 31 below. In this example, two PSSCHs in one time unit are separated by one guard symbol (i.e., D is equal to 1).

In some implementations, the fourth guard symbol corresponds to the first D symbols in the first slot of slots occupied by the later PSSCH of two adjacent PSSCHs transmitted in the first time unit. In other words, the first D symbols in the first slot of slots occupied by the latter PSSCH of the two adjacent PSSCHs are used as guard symbols.

In some implementations, a value of D is determined based on one or more of the following: information predefined in a protocol; resource pool configuration information; sidelink BWP configuration information; or indication information from a terminal device. The terminal device may be a transmitting device of sidelink data, or may be a receiving device of sidelink data.

In some implementations, if the first time unit is used to transmit a plurality of PSSCHs, and the plurality of PSSCHs correspond to different TBs (for a detailed description of transmitting a plurality of PSSCHs in one time unit, and a plurality of PSSCHs corresponding to different TBs, Embodiment 2.3 below may be referred to), the fourth guard symbol may be set between adjacent slots in the first time unit. Since a plurality of PSSCHs correspond to different TBs, a plurality of PSSCHs may be PSSCHs transmitted to different receiving devices, and thus a plurality of PSSCHs may correspond to different transmission beams. In this case, the transmitting device needs to switch the transmission beam when transmitting the PSSCH, and a duration corresponding to the fourth guard symbol may be used by the transmitting device to switch the transmission beam.

In some implementations, if the first time unit is used to transmit one PSSCH (for detailed description, Embodiment 2.1 below may be referred to), a third guard symbol may not be set between adjacent slots in the first time unit.

In some implementations, if the first time unit is used to transmit a plurality of PSSCHs, and the plurality of PSSCHs correspond to the same TB (for detailed description, Embodiment 2.2 below may be referred to), the third guard symbol may not be set between adjacent slots in the first time unit; or the fourth guard symbol may not be set between adjacent PSSCHs of the plurality of PSSCHs.

In some implementations, at least one slot of M slots included in the first time unit does not include a guard symbol. As an implementation, remaining slots other than the last slot of the M slots included in the first time unit do not include a guard symbol.

For example, in FIG. 18A and FIG. 18B, the first time unit includes 2 slots, that is, a slot n and a slot (n+1). The slot (n+1) includes a guard symbol used as GP, and the slot n does not include a guard symbol used as GP.

As another example, in FIG. 19A and FIG. 19B, the first time unit includes four slots, that is, a slot n, a slot (n+1), a slot (n+2), and a slot (n+3). The slot (n+3) includes a guard symbol used as GP, and the slots n, (n+1), and (n+2) do not include a guard symbol used as GP.

In some implementations, if the first time unit includes a time domain resource for transmitting a PSFCH, the last slot and/or a second last slot of the M slots includes a guard symbol. Furthermore, in some implementations, remaining slots other than the last slot and/or the second last slot of the M slots does include a guard symbol.

Embodiment 1.2: time-frequency resources of a PSCCH in a first time unit

In some implementations, a first time unit includes second time domain resources for transmitting a PSCCH, a starting symbol of the second time domain resources is an (A+1)-th symbol in the first time unit, and A is a positive integer greater than 1.

In some implementations, a value of A is equal to 4. Furthermore, in some implementations, if the value of A is equal to 4, a sidelink subcarrier spacing corresponding to a first time unit is 480 kHz. For example, in the examples of the time unit illustrated in FIGS. 18A, 18C, 18D, 19A, 19C, and 19E, the value of A is 4.

In some implementations, a value of A is equal to 8. Furthermore, in some implementations, if the value of A is equal to 8, a sidelink subcarrier spacing corresponding to a first time unit is 480 kHz or 960 kHz. For example, in the examples of the time unit illustrated in FIGS. 18B, 19B, 19D, and 19F, the value of A is 8.

In some implementations, a value of A is determined based on one or more of the following information: information predefined in a protocol; resource pool configuration information; sidelink BWP configuration information; or indication information from a terminal device. The terminal device may be a transmitting device of sidelink data, or may be a receiving device of sidelink data.

In some implementations, a value of A is determined based on the second indication information. For example, the second indication information is used to indicate one or more of the following: the value of A; a time domain position of the first symbol available for transmitting a PSSCH in one time unit; a time domain position of the first symbol available for transmitting a PSCCH in one time unit; a time domain position of the first symbol used to map the PSSCH in one time unit; a time domain position of the first symbol used to map the PSCCH in one time unit; a time domain position of the first symbol of PSSCH resource assignment in one time unit; a time domain position of the first symbol of PSCCH resource assignment in one time unit; and a time domain position of the first symbol available for sidelink transmission in one slot or in one time unit.

As an example, the second indication information directly indicates the value of A. Alternatively, the value of A is determined based on the value indicated by the second indication information.

As another example, the second indication information indicates a time domain position of the first symbol available for transmitting the PSSCH or the PSCCH in one time unit. The value of A may be determined based on the second indication information. For example, the second indication information indicates that the first symbol position of the PSSCH is the fifth symbol in the first time unit, the value of A is 4 (in this example, it is assumed that a starting symbol corresponding to the sidelink transmission resource in the first time unit is the first symbol of the first time unit).

As another example, the second indication information may indicate information 6 and information 7. The information 6 is used to indicate a time domain position of the first symbol available for transmitting the PSSCH or PSCCH in one time unit. The information 7 is used to indicate the time domain position of the first symbol available for sidelink transmission in one slot or in one time unit. The value of A may be determined based on the information 6 and the information 7. For example, the information 6 indicates that the time domain position of the first symbol available for transmitting the PSSCH is a symbol 6, and the information 7 indicates that the time domain position of the first symbol available for sidelink transmission in one slot is a symbol 2. According to the information 6 and the information 7, it may be determined that the value of A is 4.

In some implementations, the second indication information may be included in resource pool configuration information or sidelink BWP configuration information. Alternatively, the second indication information may be indication information from a terminal device. The terminal device may be a transmitting device of sidelink data, or may be a receiving device of sidelink data.

In some implementations, a value of A is determined based on a third sidelink subcarrier spacing and a fourth sidelink subcarrier spacing. The third sidelink subcarrier spacing is different from the fourth sidelink subcarrier spacing.

In some implementations, the third sidelink subcarrier spacing may be greater than the fourth sidelink subcarrier spacing.

In some implementations, the third sidelink subcarrier spacing is a sidelink subcarrier spacing corresponding to the first time unit.

In some implementations, the third sidelink subcarrier spacing is determined based on sidelink BWP configuration information, where the sidelink BWP configuration information is used to configure a BWP corresponding to the first time unit.

In some implementations, the third subcarrier spacing is determined based on information predefined in a protocol, resource pool configuration information, or sidelink BWP configuration information.

In some implementations, the third sidelink subcarrier spacing is 480 kHz or 960 kHz.

In some implementations, the fourth sidelink subcarrier spacing is 15 kHz, 30 kHz, 60 kHz or 120 kHz.

In some implementations, the third sidelink subcarrier spacing is equal to the first sidelink subcarrier spacing; and/or, the fourth sidelink subcarrier spacing is equal to the second sidelink subcarrier spacing.

For example, the third sidelink subcarrier spacing is represented by $\mu_{SL3}$, the fourth sidelink subcarrier spacing is represented by $\mu_{SL4}$, and A satisfies the following equation: $A = \frac{2^{\mu_{SL3}}}{2^{\mu_{SL4}}}$. Assuming that $\mu_{SL3} = 5$ and $\mu_{SL4} = 3$, that is, the third sidelink subcarrier spacing is a subcarrier spacing of 480 kHz, and the fourth sidelink subcarrier spacing is a subcarrier spacing of 120 kHz. In this case, A is equal to 4. Assuming that $\mu_{SL3} = 6$ and $\mu_{SL4} = 3$, the third sidelink subcarrier spacing is 960 kHz subcarrier spacing, and the fourth sidelink subcarrier spacing is 120 kHz subcarrier spacing. In this case, A is equal to 8.

In some implementations, the first A symbols of the first time unit (or the first A symbols available for sidelink transmission in the first time unit) are used as AGC.

In some implementations, data transmitted in the first A symbols in the first time unit (or the first A symbols available for sidelink transmission in the first time unit) are repeated data of data transmitted in a target symbol in the first time unit. The target symbol may include one or more symbols of remaining symbols in the first time unit other than the first A symbols.

In some implementations, the target symbol is an (A+1)-th symbol to a 2A-th symbol in the first time unit. That is, data transmitted in the first A symbols in the first time unit are repeated data of data transmitted in the (A+1)-th symbol to the 2A-th symbol in the first time unit. For example, data transmitted in the first symbol in the first time unit are repeated data of data transmitted in the (A+1)-th symbol in the first time unit; data transmitted in the second symbol in the first time unit are repeated data of data transmitted in the (A+2)-th symbol in the first time unit; and so on, data transmitted in a A-th symbol in the first time unit are repeated data of data transmitted in the 2A-th symbol in the first time unit.

In some implementations, the target symbol is an (A+1)-th symbol of the first time unit. That is, data transmitted in the first A symbols of the first time unit are repeated data of data transmitted in the (A+1)-th symbol of the first time unit. It can be seen that in this implementation, the first A symbols and the (A+1)-th symbol of the first time unit transmit the same data.

In some implementations, the second time domain resource includes P consecutive symbols. A value of P may be a positive integer greater than or equal to 1, for example, the value of P may be 3.

In some implementations, a value of P is determined based on one or more of the following: information predefined in a protocol; resource pool configuration information; sidelink BWP configuration information; or indication information from a terminal device. The terminal device may be a transmitting device of sidelink data, or may be a receiving device of sidelink data.

In some implementations, in a case where a PSCCH is transmitted in a first time unit, the PSCCH may occupy Q PRBs in frequency domain, and Q is a positive integer greater than or equal to 1.

In some implementations, a value of Q is determined based on one or more of the following: information predefined in a protocol; resource pool configuration information; sidelink BWP configuration information; or indication information from a terminal device. The terminal device may be a transmitting device of sidelink data, or may be a receiving device of sidelink data.

In some implementations, a PSCCH may be used to schedule a PSSCH, and a frequency domain starting position of the Q PRBs may be the same as a frequency domain starting position of the PSSCH.

In some implementations, a PSCCH may be used to schedule a PSSCH, and the Q PRBs are located in the first subchannel corresponding to a transmission resource of the PSSCH.


Embodiment 1.3: time-frequency resources of a PSSCH in a first time unit

In some implementations, a first time unit includes third time domain resources for transmitting a PSSCH, a starting symbol of the third time domain resources may be an (A+1)-th symbol in the first time unit, and A is a positive integer greater than 1.

In some implementations, the first time unit includes third time domain resources for transmitting a PSSCH, a starting symbol of the third time domain resources may be an (A+1)-th symbol available for sidelink transmission in the first time unit, and A is a positive integer greater than 1.

For the determination manner of a value of A, the description of Embodiment 1.2 may be referred to, which will not be repeated here for the sake of brevity. Alternatively, in some embodiments, A in Embodiment 1.2 may be A1, and A in Embodiment 1.3 may be A2, and A1 and A2 may be the same or different.

In some implementations, if the first time unit does not include a PSFCH transmission resource, an ending symbol of the third time domain resources is a symbol preceding a symbol corresponding to a first guard symbol. For the relevant description of the first guard symbol, the above Embodiment 1.1 may be referred to, which will not be described in detail here. For example, in FIG. 18A, the time domain resource of the PSSCH includes the fifth symbol in a slot n to the fifth-to-last symbol in a slot (n+1). In FIG. 18B, the time domain resource of the PSSCH includes the ninth symbol in a slot n to the sixth symbol in a slot (n+1) (i.e., the ninth-to-last symbol). In FIG. 19A, the time domain resource of the PSSCH includes the fifth symbol in a slot n to the fifth-to-last symbol in a slot (n+3). In FIG. 19B, the time domain resource of the PSSCH includes the ninth symbol in a slot n to the sixth symbol in a slot (n+3) (i.e., the ninth-to-last symbol).

In some implementations, an ending symbol of third time domain resources is the last symbol available for transmitting a PSSCH in a first time unit.

In some implementations, if the first time unit includes a PSFCH transmission resource, an ending symbol of the third time domain resources is a symbol preceding a symbol corresponding to a second guard symbol. For the relevant description of the second guard symbol, the above Embodiment 1.1 may be referred to, which will not be described in detail here. For example, in FIG. 18C, the time domain resource of the PSSCH includes the fifth symbol in a slot n to the first symbol in a slot (n+1). In FIG. 19C, the time domain resource of the PSSCH includes the fifth symbol of a slot n to the first symbol of a slot (n+3); in FIG. 19D, the time domain resource of the PSSCH includes the ninth symbol of a slot n to the third symbol of a slot (n+2).

Embodiment 1.4: time-frequency resources of a PSFCH in a first time unit

In some implementations, the first time unit includes fourth time domain resources for transmitting a PSFCH, the fourth time domain resources may include K symbols, and K is a positive integer greater than 1.

In some implementations, the K symbols are K symbols earlier than the first guard symbol and adjacent to the first guard symbol (i.e., the last symbol of the K symbols is a symbol preceding the first guard symbol).

In some implementations, a value of K is determined based on one or more of the following: information predefined in a protocol; resource pool configuration information; sidelink BWP configuration information; or indication information from a terminal device. The terminal device may be a transmitting device of sidelink data, or may be a receiving device of sidelink data.

In some implementations, the fourth time domain resources are located in the first H slots of the first time unit or the last H slots of the first time unit. H is a positive integer greater than or equal to 1, and a value of H may be 1 or 2 for example. For example, in a case where the value of A or B is 4, the value of H may be 1. For another example, in a case where the value of A or B is 8, the value of H may be 2.

In some implementations, a value of H is determined based on one or more of the following: information predefined in a protocol; resource pool configuration information; sidelink BWP configuration information; or indication information from a terminal device. The terminal device may be a transmitting device of sidelink data, or may be a receiving device of sidelink data.

In some implementations, the fourth time domain resources are located in the first slot of the first time unit.

In some implementations, the fourth time domain resources are located in the last slot of the first time unit (the implementation is mainly used as an example below for description, and the embodiments of the present disclosure are not limited thereto).

In some implementations, the K symbols occupied by the fourth time domain resources include K1 symbols and K2 symbols. K1 and K2 are positive integers, and K is equal to a sum of K1 and K2. The K2 symbols may be located earlier than the K1 symbols and adjacent to the K2 symbols. The K1 symbols may be used to transmit the PSFCH (e.g., used to transmit sidelink feedback information or conflict information). Data transmitted in the K2 symbols may be repeated data of data transmitted in the K1 symbols. The K2 symbols may be used for AGC adjustment or AGC training.

In some implementations, a value of K1 is determined based on one or more of the following: information predefined in a protocol; resource pool configuration information; sidelink BWP configuration information; or indication information from a terminal device. The terminal device may be a transmitting device of sidelink data, or may be a receiving device of sidelink data.

In some implementations, a value of K1 may be determined based on a fifth sidelink subcarrier spacing and a sixth sidelink subcarrier spacing. The fifth sidelink subcarrier spacing is different from the sixth sidelink subcarrier spacing.

In some implementations, the fifth sidelink subcarrier spacing may be greater than the sixth sidelink subcarrier spacing.

In some implementations, the fifth sidelink subcarrier spacing is a sidelink subcarrier spacing corresponding to the first time unit.

In some implementations, the fifth subcarrier spacing is determined based on information predefined in a protocol, resource pool configuration information, or sidelink BWP configuration information. Taking the first sidelink subcarrier spacing being determined based on the sidelink BWP configuration information as an example, the sidelink BWP configuration information may be used to configure a BWP corresponding to a first time unit.

In some implementations, the sixth sidelink subcarrier spacing is determined based on information predefined in a protocol, resource pool configuration information, or sidelink BWP configuration information. The sixth sidelink subcarrier spacing may sometimes also be referred to as a reference subcarrier spacing.

In some implementations, the fifth sidelink subcarrier spacing is 480 kHz or 960 kHz.

In some implementations, the sixth sidelink subcarrier spacing is 15 kHz, 30 kHz, 60 kHz or 120 kHz.

In some implementations, a value of K2 is determined based on one or more of the following: information predefined in a protocol; resource pool configuration information; sidelink BWP configuration information; or indication information from a terminal device. The terminal device may be a transmitting device of sidelink data, or may be a receiving device of sidelink data.

In some implementations, a value of K2 may be determined based on a seventh sidelink subcarrier spacing and an eighth sidelink subcarrier spacing. The seventh sidelink subcarrier spacing is different from the eighth sidelink subcarrier spacing.

In some implementations, the seventh sidelink subcarrier spacing may be greater than the eighth sidelink subcarrier spacing.

In some implementations, the seventh sidelink subcarrier spacing is a sidelink subcarrier spacing corresponding to the first time unit.

In some implementations, the seventh subcarrier spacing is determined based on information predefined in a protocol, resource pool configuration information, or sidelink BWP configuration information. Taking the first sidelink subcarrier spacing being determined based on the sidelink BWP configuration information as an example, the sidelink BWP configuration information may be used to configure a BWP corresponding to the first time unit.

In some implementations, the eighth sidelink subcarrier spacing is determined based on information predefined in a protocol, resource pool configuration information, or sidelink BWP configuration information. The eighth sidelink subcarrier spacing may sometimes also be referred to as a reference subcarrier spacing.

In some implementations, the seventh sidelink subcarrier spacing is 480 kHz or 960 kHz.

In some implementations, the eighth sidelink subcarrier spacing is 15 kHz, 30 kHz, 60 kHz or 120 kHz.

In some implementations, K1 is less than or equal to K2. For example, K1 is equal to 1, K2 is equal to A. Alternatively, K1 is equal to A, K2 is equal to A. A may be a positive integer greater than 1. For example, a value of A may be determined based on a time domain position of the first symbol corresponding to transmission resources of the PSSCH in the first time unit. For the determination manner of a value of A, the description of the Embodiment 1.2 may be referred to and will not be described in detail here.

In some implementations, if K1 is greater than 1, each of the K1 symbols is used to transmit a PSFCH.

In some implementations, if K1 is greater than 1, K1 symbols are commonly used to transmit one PSFCH, that is, the transmission resource of one PSFCH corresponds to the K1 symbols.

In some implementations, if K1 is equal to 1, data transmitted in each symbol of the K2 symbols is repeated data of the data transmitted in the K1 symbols.

In some implementations, if K1 is greater than 1, data transmitted in every L symbols (L is equal to K1) from an end to a start of the K2 symbols are repeated data of the data transmitted in the K1 symbols. L is equal to K1. For example, K1 is equal to 2, and the data transmitted in every two symbols from the end to the start of the K2 symbols are repeated data of the data transmitted in the K1 symbols.

For example, referring to FIG. 18D, the time domain resource of the PSFCH include symbols 4 to 9 in a slot (n+1) (the first symbol corresponds to a symbol 0), where symbols 4 to 7 are used as AGC, and symbols 8 and 9 are used to transmit sidelink feedback information. In FIG. 18D, K1 is equal to 2. In a case where the data transmitted in every two symbols from the end to the start of the K2 symbols are repeated data of the data transmitted in the K1 symbols, the data transmitted in the symbol 7 is repeated data of the data transmitted in the symbol 9, the data transmitted in the symbol 6 is repeated data of the data transmitted in the symbol 8, the data transmitted in the symbol 5 is repeated data of the data transmitted in the symbol 9, and the data transmitted in the symbol 4 is repeated data of the data transmitted in the symbol 8.

In some implementations, if K1 is greater than 1, data transmitted in every L symbols from the start to the end of the K2 symbols are repeated data of the data transmitted in the K1 symbols. L is equal to K1. For example, K1 is equal to 2, and the data transmitted in every two symbols from the start to the end of the K2 symbols are repeated data of the data transmitted in the K1 symbols.

For example, referring to FIG. 18D, time domain resources of a PSFCH include symbols 4 to 9 in a slot (n+1) (the first symbol corresponds to a symbol 0), where symbols 4 to 7 are used as AGC, and symbols 8 and 9 are used to transmit sidelink feedback information. In FIG. 18D, K1 is equal to 2. In a case where the data transmitted in every two symbols from the end to the start of the K2 symbols are repeated data of the data transmitted in the K1 symbols, the data transmitted in the symbol 4 is repeated data of the data transmitted in the symbol 8, the data transmitted in the symbol 5 is repeated data of the data transmitted in the symbol 9, the data transmitted in the symbol 6 is repeated data of the data transmitted in the symbol 8, and the data transmitted in the symbol 7 is repeated data of the data transmitted in the symbol 9.

In some implementations, in a case where the first time unit includes time domain resources for transmitting a PSFCH, the PSFCH may occupy X PRBs in frequency domain, and X is a positive integer greater than or equal to 1.

In some implementations, a value of X is determined based on one or more of the following: information predefined in a protocol; resource pool configuration information; sidelink BWP configuration information; or indication information from a terminal device. The terminal device may be a transmitting device of sidelink data, or may be a receiving device of sidelink data.

In some implementations, in a case where X is greater than 1, sidelink feedback information transmitted over the PSFCH is carried in a first sequence, a length of the first sequence is equal to T. T may be equal to the number of subcarriers included in one PRB. For example, a value of T may be 12. In this implementation, the first sequence may be mapped to one PRB of the X PRBs, and data transmitted over remaining PRBs of the X PRBs other than the one PRB is determined based on the first sequence. For example, data transmitted over remaining PRBs of the X PRBs other than the one PRB is determined directly based on the first sequence, or may be determined based on multiplying the first sequence by a rotation factor.

In some implementations, in a case where X is greater than 1, sidelink feedback information transmitted over the PSFCH is carried in a second sequence, a length of the second sequence may be determined based on a value of X multiplied by T. T may be equal to the number of subcarriers included in a PRB. For example, the value of T may be 12. The second sequence may be mapped to all or part of the subcarriers corresponding to the X PRBs. For example, the length of the second sequence is X multiplied by T, and the second sequence may be mapped to all subcarriers corresponding to X PRBs respectively. For another example, the length of the second sequence is a maximum prime number less than X multiplied by T, and the second sequence may be mapped to some subcarriers corresponding to X PRBs, and the data transmitted in the remaining subcarriers is 0, or the data transmitted in the remaining subcarriers is a repetition of a partial sequence in the second sequence.

Embodiment 1.5: information/parameters determined based on a number or index of time units

In some implementations, the first time unit includes a transmission resource for first stage SCI, for example, the first stage SCI is carried by a PSCCH. The first stage SCI may include an information field for indicating time resource assignment, a value of the information field for indicating time domain resource assignment (e.g., a time resource indication value (TRIV)) may be determined based on time offsets of remaining (W-1) transmission resources of W transmission resources other than the first transmission resource relative to the first transmission resource, and the time offset may be represented based on a number of time units. W is a positive integer greater than 1. The value of W may be determined based on a number of transmission resources indicated by the first stage SCI.

Taking FIG. 20 as an example, one time unit includes 2 slots. The first time unit may be the time unit with an index of 1 in FIG. 20, that is, a time unit 1. First SCI transmitted in the time unit 1 includes an information field for indicating time domain resource assignment, and the value of the information field is determined based on a time interval t1 between a second transmission resource R2 and a first transmission resource R1 of three transmission resources (i.e., the first transmission resource R1, the second transmission resource R2 and the third transmission resource R3 in FIG. 20), and a time interval t2 between the third transmission resource R3 and the first transmission resource. As can be seen from FIG. 20, t1 includes 2 time units and t2 includes 5 time units.

In some implementations, the sidelink transmission resource corresponding to sidelink transmission or sidelink reception is determined based on first DCI (e.g., the terminal device is in a first mode), and the first DCI may include third indication information. The third indication information may be used to indicate one of the following: a time interval between reception of the first DCI and a sidelink transmission resource; a time interval between a slot in which the first DCI is located and a first time unit in which the sidelink transmission resource is located; and a time interval between start time of the downlink slot carrying the first DCI and start time of a sidelink transmission resource. The time interval may be represented based on a number of time units.

In some implementations, the sidelink transmission resource corresponding to sidelink transmission or sidelink reception is a sidelink configured grant (CG) transmission resource, and the sidelink configured grant transmission resource is determined only based on the RRC signaling transmitted by the network device (e.g., the sidelink configuration grant is a first type of sidelink configuration grant). The RRC signaling may include sixth indication information. The sixth indication information may be used to indicate a time interval between the sidelink transmission resource and a reference SFN time domain position. The time interval may be represented based on a number of time units. The reference SFN time domain position may be determined based on a configuration parameter sl-TimeReferenceSFN-Type1.

In some implementations, the first terminal device may determine a first reservation period based on one or more of the following: a second reservation period indicated by indication information in SCI (e.g., the SCI indicates the second reservation period via a resource reservation period information field); and a number of time units in a resource pool. The first reservation period may be represented based on a number of time units, and the second reservation period may be represented based on milliseconds.

For example, the first reservation period satisfies the following equation:

$$P'_{\text{rsvp}} = \left\lceil \frac{T'_{max}}{10240 \ ms} \times P_{\text{rsvp}} \right\rceil$$

Herein, $P_{\text{rsvp}}$ represents the second reservation period, and $T'_{max}$ represents a number of time units included in a resource pool during 10240 milliseconds (ms).

In some implementations, a period of the PSFCH may be represented based on a number of time units. For example, the period of the PSFCH may be indicated based on fourth indication information in the resource pool configuration information, where the period of the PSFCH indicated by the fourth indication information is represented in the number of time units.

In a case where the sidelink subcarrier spacing is greater than 120 kHz (e.g., in a case where the sidelink subcarrier spacing is 480 kHz or 960 kHz), in order to have enough time for AGC adjustment, receive-transmit conversion or transmit-receive conversion, a plurality of symbols used as AGC or GP are required. In this case, the number of symbols available for PSCCH/PSSCH transmission in one slot becomes very small, resulting in increased system overhead and reduced spectrum efficiency. According to the embodiment of the present disclosure, a time unit structure that aggregates a plurality of slots is introduced. If sidelink transmission or sidelink reception is performed based on the time unit structure, even if a plurality of symbols used as AGC or GP are introduced, one time unit will have enough symbols available for PSCCH/PSSCH transmission, thereby reducing system overhead and improving spectrum efficiency.

**Embodiment 2: a PSSCH transmission manner based on a first time unit**

It should be understood that a PSSCH transmission manner described in Embodiment 2 may be based on the time unit structure provided in Embodiment 1. In the absence of conflict, the content of Embodiment 2 may be arbitrarily combined with the implementation in Embodiment 1. For example, the first A symbols of the first time unit in Embodiment 2 may be used as AGC. For another example, the last B symbols of the first time unit in Embodiment 2 are guard symbols and can be used as GP. For another example, the symbols in the middle part of Embodiment 2 may include transmission resources for transmitting one or more of the PSCCH, the PSSCH or the PSFCH.

In some implementations, the first time unit may be used to transmit a PSSCH.

In some implementations, the first time unit may be used to transmit R PSSCHs (R is a positive integer greater than 1). In a case where R PSSCHs are transmitted in the first time unit, the R PSSCHs may correspond to the same TB or different TBs.

In some implementations, the value of R is determined based on one or more of the following: information predefined in a protocol; preconfigured information; configuration information from a network device; resource pool configuration information; sidelink BWP configuration information; or indication information from a terminal device. The terminal device may be a transmitting device of sidelink data, or may be a receiving device of sidelink data.

In some implementations, the R PSSCHs transmitted in the first time unit include a first PSSCH, and the time domain resource of the first PSSCH includes S slots, and S is a positive integer greater than or equal to 1. That is, the transmission resource of the first PSSCH includes the resource in the S slots available for PSSCH transmission.

In some implementations, a value of S is determined based on one or more of the following: information predefined in a protocol; preconfigured information; configuration information from a network device; resource pool configuration information; sidelink BWP configuration information; or indication information from a terminal device. The terminal device may be a transmitting device of sidelink data, or may be a receiving device of sidelink data.

In some implementations, S is determined based on the quotient of M and R.

In some implementations, a terminal device does not expect that M cannot be divisible by R, that is, M should be an integer multiple of R.

For example, S=M/R-T. A value of T may be 0, 1 or 2.

In some implementations, the first PSSCH is any one PSCCH in the R PSSCHs, and the value of T is 0.

Furthermore, in some implementations, if the first PSSCH corresponds to the first R-1 PSSCHs of R PSSCHs, the value of T is a first value; and/or, if the first PSSCH corresponds to the last PSSCH of R PSSCHs, the value of T is a second value. As an example, the first value is 0 and the second value is 1 or 2.

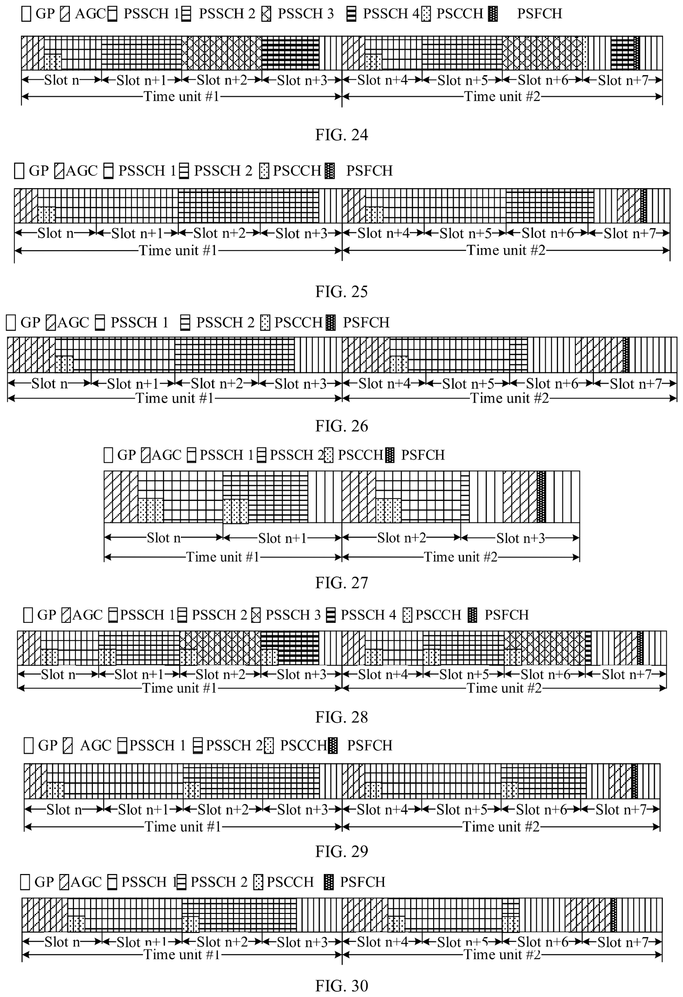

Taking the first time unit as a time unit #2 in FIG. 26 as an example, the time unit #2 occupies 4 slots and transmits 2 PSSCHs (i.e., PSSCH 1 and PSSCH 2 in the time unit #2), and thus M is equal to 4, R is equal to 2. As can be seen from FIG. 26, the PSSCH 1 transmitted in the time unit #2 occupies 2 slots (i.e., S=M/R), and the PSSCH 2 transmitted in the time unit #2 occupies 1 slot (i.e., S=M/R-1).

In some implementations, R PSSCHs transmitted in a first time unit include a first PSSCH, and a slot occupied by the first PSSCH includes a first slot. For example, the manner described above may be used to determine S slots occupied by the first PSSCH based on M and R, and the first slot may be any slot of the S slots or the last slot of the S slots. The usage manner of the first slot may be determined based on the relationship between the first slot and a first threshold value.

For example, if the number of symbols available for transmitting the PSSCH in the first slot is less than a first threshold value (a value of the first threshold value may be, for example, 2, 3 or 4), the first slot is not used for transmitting the PSSCH and/or second stage SCI.

For example, if the number of symbols available for transmitting the PSSCH in the first slot is less than a first threshold value (a value of the first threshold value may be, for example, 2, 3 or 4), the data of PSSCH in the first slot is determined based on redundant bits, filling bits or random bits. Alternatively, the receiving device does not expect to receive data transmitted on the PSSCH transmission resource in the first slot.

For example, if the number of symbols available for transmitting the PSSCH in the first slot is less than a first threshold value (a value of the first threshold value may be, for example, 2, 3 or 4), the data of the PSSCH in the first slot is repeated data of the data in the slot earlier than the first slot (e.g., the previous slot). Taking FIG. 28 mentioned later as an example, if the first time unit is a time unit #2 in FIG. 28, it can be seen from FIG. 28 that the number of symbols available for transmitting the PSSCH in the last slot (i.e., a slot (n+7)) of the time unit #2 is 1 (i.e., the first symbol of the last slot). Assuming that the first threshold value is 3, the data transmitted on the first symbol in the last slot of the time unit #2 may be repeated data of a PSSCH 1 transmitted in the first slot (i.e., a slot (n+4)) of the time unit #2 or a PSSCH 3 transmitted in the previous slot (i.e., a slot (n+6)) of the last slot. As a more specific example, the data transmitted on the first symbol in the last slot of the time unit #2 is repeated data of the data transmitted in the first symbol or the last symbol in the slot (n+6).

In some implementations, the first threshold is determined based on one or more of: information predefined in a protocol; preconfigured information; configuration information from a network device; resource pool configuration information; sidelink BWP configuration information; or indication information from a terminal device. The terminal device may be a transmitting device of sidelink data, or may be a receiving device of sidelink data.

In some implementations, if R PSSCHs transmitted in a first time unit correspond to different TBs, the first slot uses the implementation method based on the first threshold value described above.

In some implementations, if R PSSCHs transmitted in a first time unit correspond to a same TB, the first slot is used to transmit the PSSCH and/or second stage SCI.

In some implementations, the first threshold is determined based on the number of symbols included in a PSCCH transmission resource. Furthermore, in some implementations, a first threshold value is equal to the number of symbols included in the PSCCH transmission resource. For example, if the PSCCH transmission resource includes 2 symbols, the first threshold value is equal to 2. For another example, if the PSCCH transmission resource includes 3 symbols, the first threshold value is equal to 3.

In some implementations, transmission of one PSSCH or R PSSCHs in a first time unit is determined based on configuration information. The configuration information may include one or more of the following information: information predefined in a protocol; resource pool configuration information; sidelink BWP configuration information; or indication information from a terminal device. The terminal device may be a transmitting device of sidelink data, or may be a receiving device of sidelink data.

In some implementations, in a case where R PSSCHs are transmitted in a first time unit, whether the R PSSCHs corresponding to a same TB or different TBs is determined based on configuration information. The configuration information may include one or more of the following information: information predefined in a protocol; resource pool configuration information; sidelink BWP configuration information; or indication information from a terminal device. The terminal device may be a transmitting device of sidelink data, or may be a receiving device of sidelink data.

A more detailed explanation of the PSSCH transmission manner based on the first time unit will be elaborated below in conjunction with Embodiment 2.1 to Embodiment 2.3.

Embodiment 2.1: a first time unit is used to transmit one PSSCH

In this embodiment, only one PSSCH may be transmitted in the first time unit. For example, one PSSCH may be mapped to all time domain resources available for PSSCH transmission in the first time unit. The one PSSCH may transmit one TB, and the TB may be transmitted via a plurality of slots (which may be referred to as transmission block over multiple slots).

For example, a starting mapping position of the PSSCH may be located at the (A+1)-th symbol of the first time unit. If the first time unit does not include PSFCH transmission resources, an ending mapping position of the PSSCH may be a symbol preceding a symbol corresponding to a first guard symbol; if the first time unit includes PSFCH transmission resources, an ending symbol of the PSSCH is a symbol preceding a symbol corresponding to a second guard symbol. For the relevant description of the first guard symbol and the second guard symbol, the embodiment 1.1 may be referred to, which will not be described in detail here.

In some implementations, a third guard symbol and a fourth guard symbol are not included in the first time unit. For the relevant description of the third guard symbol and the fourth guard symbol, the embodiment 1.1 may be referred to, which will not be described in detail here.

In some implementations, the first time unit is also used to transmit one PSCCH and/or one second stage SCI. For example, the first time unit may transmit only one PSCCH and one second stage SCI.

In some implementations, a starting mapping position of second stage SCI is determined based on one or more of the following: information predefined in a protocol; resource pool configuration information; sidelink BWP configuration information; or indication information from a terminal device. The terminal device may be a transmitting device of sidelink data, or may be a receiving device of sidelink data.

In some implementations, the second stage SCI is mapped starting from the first PSSCH DMRS symbol of the first time unit.

In some implementations, if the first PSSCH DMRS symbol of the first time unit includes a subcarrier available for mapping second stage SCI, the second stage SCI is mapped starting from the first PSSCH DMRS symbol; and/or, if the first PSSCH DMRS symbol of the first time unit does not include a subcarrier available for mapping the second stage SCI, the second stage SCI is mapped starting from the next symbol of the first PSSCH DMRS symbol.

In some implementations, the second stage SCI is mapped starting from the first symbol corresponding to a PSSCH transmission resource in the first time unit.

In some implementations, the second stage SCI is mapped starting from the first symbol used to map a PSSCH in the first time unit.

In some implementations, the second stage SCI is mapped starting from the first symbol of PSSCH resource assignment in the first time unit.

In some implementations, the second stage SCI is mapped starting from the first symbol corresponding to a PSCCH transmission resource in the first time unit.

In some implementations, the second stage SCI is mapped starting from the first symbol used to map a PSCCH in the first time unit.

In some implementations, the second stage SCI is mapped starting from the first symbol of PSCCH resource assignment in the first time unit.

For example, the first time unit may be a time unit #1 or a time unit #2 in FIG. 21. In the example illustrated in FIG. 21, one time unit includes 2 slots, that is, M is equal to 2. The time unit #1 does not include PSFCH transmission resources, and the time unit #2 includes a PSFCH transmission resource. The resource assignment of PSSCH in one time unit starts from the fifth symbol, that is, A is equal to 4. The first 4 symbols of one time unit may be used as AGC, and the last 4 symbols of one time unit are used as GP, that is, B is equal to 4. The time domain resource of PSFCH in the time unit #2 includes 5 symbols. The first 4 symbols of the five symbols may be used as AGC, and the fifth symbol may be used to transmit the PSFCH. Therefore, the data transmitted in the first 4 symbols of the five symbols may be the same as the data transmitted in the fifth symbol. In the example illustrated in FIG. 21, one time unit transmits one PSCCH and one PSSCH, the PSSCH is used to transmit one TB, and the PSSCH is mapped to two slots included in the corresponding time unit.

For another example, the first time unit may be a time unit #1 or a time unit #2 in FIG. 22. In the example illustrated in FIG. 22, one time unit includes 4 slots, that is, M is equal to 4. The time unit #1 does not include PSFCH transmission resources, and the time unit #2 includes a PSFCH transmission resource. The resource assignment of PSSCH in one time unit starts from the ninth symbol, that is, A is equal to 8. The first 8 symbols in one time unit may be used as AGC, and the last 8 symbols in one time unit are used as GP, that is, B is equal to 8. The time domain resource of PSFCH in the time unit #2 includes 9 symbols. The first 8 symbols of the 9 symbols may be used as AGC, and the ninth symbol may be used to transmit the PSFCH. Therefore, the data transmitted in the first 8 symbols of the 9 symbols may be the same as the data transmitted in the ninth symbol. In the example illustrated in FIG. 22, one time unit transmits one PSCCH and one PSSCH, the PSSCH is used to transmit one TB, and the PSSCH is mapped to four slots included in the corresponding time unit.

It can be seen from the above description of Embodiment 2.1 that Embodiment 2.1 assigns more time domain resources (i.e., time domain resources occupying a plurality of slots) to a TB, so that transmission may be performed with fewer frequency domain resources. Compared with a method in which one TB is transmitted via one slot and more frequency domain resources are assigned to the TB, in Embodiment 2.1, the transmission power of each PRB may be increased, thereby achieving the purpose of improving transmission performance.

Embodiment 2.2: a first time unit is used to transmit R PSSCHs, and the R PSSCHs correspond to a same TB

In some implementations, each of the R PSSCHs may occupy S slots (e.g., refer to the above description for the determination manner of the S slots). The manner in which each PSSCH is mapped to the S slots may be similar to that of Embodiment 2.1, that is, starting from the first symbol available for transmitting the PSSCH of the S slots, the PSSCH is sequentially mapped to the last symbol available for transmitting the PSSCH of the S slots.

In some implementations, the R PSSCHs correspond to R redundancy versions (RVs) respectively.

In some implementations, values of the R redundancy versions may be exactly the same.

In some implementations, values of the R redundancy versions may be different from each other.

In some implementations, values of the R redundancy versions may be at least partially different.

In some implementations, R redundancy versions are determined based on fifth indication information (or redundancy version indication information) carried in SCI (which may be first stage SCI or second stage SCI).

For example, the fifth indication information may be used to indicate the first redundancy version of R redundancy versions. The first redundant version may be, for example, a redundant version corresponding to the first PSSCH (a PSSCH with the earliest time domain position) of the R PSSCHs. The remaining redundancy versions of the R redundancy versions other than the first redundancy version may be determined according to the first redundancy version. For example, the remaining redundancy versions may be determined according to a redundancy version sequence predefined in a protocol. As an example, the protocol predefines a cyclic order of redundancy versions as [0, 2, 3, 1]. Two PSSCHs are transmitted in the first time unit. The SCI transmitted in the first time unit indicates that the redundancy version is 0 via the fifth indication information. Then the redundancy version of the first PSSCH is 0 and the redundancy version of the second PSSCH is 2. Alternatively, if the SCI transmitted in the first time unit indicates that the redundancy version is 2 via the fifth indication information, the redundancy version of the first PSSCH is 2 and the redundancy version of the second PSSCH is 3. Alternatively, if the SCI transmitted in the first time unit indicates that the redundancy version is 1 via the fifth indication information, the redundancy version of the first PSSCH is 1 and the redundancy version of the second PSSCH is 0.

For another example, the fifth indication information may be used to indicate each redundancy version of the R redundancy versions. For example, the information field in which the fifth indication information is located includes R sub-information fields, and the R sub-information fields are respectively used to indicate the R redundant versions. As an example, two PSSCHs are transmitted in the first time unit, and the SCI transmitted in the first time unit indicates that the redundancy version 0 and the redundancy version 2 respectively via the fifth indication information. Then the redundancy version of the first PSSCH is 0, and the redundancy version of the second PSSCH is 2. Alternatively, the SCI transmitted in the first time unit indicates that the redundancy version 0 and the redundancy version 3 respectively via the fifth indication information, the redundancy version of the first PSSCH is 0, and the redundancy version of the second PSSCH is 3. Alternatively, the SCI transmitted in the first time unit indicates that the redundancy version 3 and the redundancy version 1 respectively via the fifth indication information, the redundancy version of the first PSSCH is 3, and the redundancy version of the second PSSCH is 1.

In some implementations, R PSSCHs correspond to a same HARQ process number.

In some implementations, the first time unit is also used to transmit one PSCCH and one second stage SCI. Of course, in other implementations, the first time unit may also transmit one PSCCH and R second stage SCIs; or, the first time unit may also transmit R PSCCHs and R second stage SCIs.

In some implementations, if the first time unit is used to transmit one second stage SCI, a starting mapping position of the second stage SCI may be determined based on one or more of the following: information predefined in a protocol; resource pool configuration information; sidelink BWP configuration information; or indication information from a terminal device. The terminal device may be a transmitting device of sidelink data, or may be a receiving device of sidelink data.

In some implementations, the second stage SCI is mapped starting from the first PSSCH DMRS symbol of the first time unit.

In some implementations, if the first PSSCH DMRS symbol of the first time unit includes a subcarrier available for mapping second stage SCI, the second stage SCI is mapped starting from the first PSSCH DMRS symbol; and/or, if the first PSSCH DMRS symbol of the first time unit does not include a subcarrier available for mapping the second stage SCI, the second stage SCI is mapped starting from the next symbol of the first PSSCH DMRS symbol.

In some implementations, the second stage SCI is mapped starting from the first symbol corresponding to a PSSCH transmission resource in the first time unit.

In some implementations, the second stage SCI is mapped starting from the first symbol used to map a PSSCH in the first time unit.

In some implementations, the second stage SCI is mapped starting from the first symbol of the PSSCH resource assignment in the first time unit.

In some implementations, the second stage SCI is mapped starting from the first symbol corresponding to a PSCCH transmission resource in a first time unit.

In some implementations, the second stage SCI is mapped starting from the first symbol used to map a PSCCH in a first time unit.

In some implementations, the second stage SCI is mapped starting from the first symbol of the PSCCH resource assignment in a first time unit.

For example, the first time unit may be a time unit #1 or a time unit #2 illustrated in FIG. 23. As can be seen from FIG. 23, one time unit includes 2 slots, that is, M is equal to 2. The resource assignment of PSSCH in one time unit starts from the fifth symbol, that is, A is equal to 4. The first 4 symbols of one time unit may be used as AGC, and the last 4 symbols of one time unit are used as GP, that is, B is equal to 4. Two PSSCHs are transmitted in one time unit, that is, each slot is used to transmit one PSSCH. The time domain resources of the PSCCH include 3 symbols starting from the fifth symbol in one time unit. In the time unit #2, there is only one symbol available for transmitting the PSSCH in the second slot, but since PSSCH 2 transmitted in the second slot and PSSCH 1 transmitted in the first slot are used to transmit different redundant versions of the same TB, the PSSCH 2 may still be transmitted in the second slot.

For another example, the first time unit may be a time unit #1 or a time unit #2 as illustrated in FIG. 24. As can be seen from FIG. 24, one time unit includes 4 slots, that is, M is equal to 4. The resource assignment of PSSCH in one time unit starts from the fifth symbol, that is, A is equal to 4. The first 4 symbols of one time unit may be used as AGC, and the last 4 symbols of one time unit are used as GP, that is, B is equal to 4. Four PSSCHs are transmitted in one time unit, that is, each slot is used to transmit one PSSCH. The time domain resources of the PSCCH include 3 symbols starting from the fifth symbol in one time unit. The time unit #2 includes PSFCH transmission resources, so that there is only one symbol available for transmitting the PSSCH in the fourth slot of the time unit #2. However, since PSSCH 4 transmitted in the fourth slot and the PSSCH transmitted in the other 3 slots in the time unit #2 belong to different redundant versions of the same TB, PSSCH 4 may still be transmitted in the fourth slot.

For another example, the first time unit may be a time unit #1 or a time unit #2 as illustrated in FIG. 25. As can be seen from FIG. 25, one time unit includes 4 slots, that is, M is equal to 4. The resource assignment of PSSCH in one time unit starts from the fifth symbol, that is, A is equal to 4. The first 4 symbols of one time unit may be used as AGC, and the last 4 symbols of one time unit are used as GP, that is, B is equal to 4. Two PSSCHs are transmitted in one time unit, that is, every two slots are used to transmit one PSSCH. The time domain resources of the PSCCH include 3 symbols starting from the fifth symbol in the first time unit. In one time unit, the first two slots transmit PSSCH 1, and the last two slots transmit PSSCH 2. The time unit #2 includes PSFCH transmission resources, so that in the third and fourth slots of the time unit #2, the number of symbols available for transmitting the PSSCH 2 is less than the number of symbols available for transmitting the PSSCH 1 in the first two slots of the time unit #2.

For another example, the first time unit may be a time unit #1 or a time unit #2 as illustrated in FIG. 26. As can be seen from FIG. 26, one time unit includes 4 slots, that is, M is equal to 4. The resource assignment of PSSCH in one time unit starts from the ninth symbol, that is, A is equal to 8. The first 8 symbols in one time unit may be used as AGC, and the last 8 symbols in one time unit are used as GP, that is, B is equal to 8. Two PSSCHs are transmitted in one time unit, that is, every two slots are used to transmit one PSSCH. The time domain resources of the PSCCH include 3 symbols starting from the ninth symbol in one time unit. The time unit #2 includes PSFCH transmission resources, so that there are only 3 symbols available for transmitting PSSCH in the third and fourth slots of the time unit #2. However, since PSSCH 2 transmitted in the third and fourth slots of the time unit #2 and PSSCH 1 transmitted in the first 2 slots of the time unit #2 transmit different redundant versions of the same TB, the PSSCH 2 may still be transmitted in the first 2 slots of the time unit #2.

In Embodiment 2.2, the first time unit is used to perform multiple transmissions on the TB, which may improve the transmission reliability of the TB and reduce latency.

Embodiment 2.3: a first time unit is used to transmit R PSSCHs, and the R PSSCHs correspond to different TBs

In some implementations, each of the R PSSCHs may occupy S slots (for the determination manner of the S slots, refer to the above description). The manner in which each PSSCH is mapped to S slots may be similar to that of Embodiment 2.1, that is, starting from the first symbol available for transmitting the PSSCH of the S slots, the PSSCH is sequentially mapped to the last symbol available for transmitting the PSSCH of the S slots.

In some implementations, R PSSCHs are used to transmit different TBs.

In some implementations, R PSSCHs correspond to the same receiving device.

In some implementations, R PSSCHs do not correspond to the same receiving device. For example, R PSSCHs correspond to R different receiving devices.

In some implementations, R PSSCHs correspond to the same spatial domain transmission filter.

In some implementations, R PSSCHs do not correspond to the same spatial domain transmission filter. For example, R PSSCHs correspond to R spatial domain transmission filters.

Since different PSSCHs are used to carry different TBs, the parameters (e.g., priority information, modulation and coding scheme (MCS) information, new data indicator (NDI), HARQ process number, redundant version) corresponding to each TB may be different. Therefore, in order to indicate the parameters corresponding to different TBs, the PSCCH in the first time unit and the second stage SCI may be implemented in various different manners. For example, the first time unit may include one PSCCH or may include R PSCCHs; and/or, the first time unit may include one second stage SCI or may include R second stage SCIs.

Based on Embodiment 2.3.1 to Embodiment 2.3.3, the following three possible implementations of PSCCH and second stage SCI transmitted in the first time unit are provided.

Embodiment 2.3.1: a first time unit is used to transmit R PSCCHs and R second stage SCIs

In this embodiment, the R PSCCHs transmitted in the first time unit correspond one-to-one with the R PSSCHs, and the R second stage SCIs transmitted in the first time unit correspond one-to-one with the R PSSCHs. That is, each of the R PSSCHs corresponds to a respective PSCCH and second stage SCI. The respective PSCCH corresponding to each PSSCH carries first stage SCI, and the first stage SCI and the second stage SCI corresponding to each PSSCH respectively carry information required for demodulating each PSSCH.

In some implementations, the starting mapping position of second stage SCI is determined based on one or more of the following: information predefined in a protocol; resource pool configuration information; sidelink BWP configuration information; or indication information from a terminal device. The terminal device may be a transmitting device of sidelink data, or may be a receiving device of sidelink data.

In some implementations, respective second stage SCI corresponding to each of R PSSCHs transmitted in a first time unit is mapped starting from the first PSSCH DMRS symbol corresponding to each PSSCH.

In some implementations, respective second stage SCI corresponding to each of R PSSCHs transmitted in the first time unit is mapped starting from the first symbol corresponding to each PSSCH.

In some implementations, respective second stage SCI corresponding to each of R PSSCHs transmitted in the first time unit is mapped starting from the first symbol of a target PSCCH. The target PSCCH refers to the respective PSCCH corresponding to each PSSCH.

Embodiment 2.3.2: a first time unit is used to transmit one PSCCH and one second stage SCI

In some implementations, the second stage SCI includes a first information field. The first information field may include R sub-information fields, and the R sub-information fields are respectively used to indicate HARQ process numbers of R PSSCHs.

In some implementations, the second stage SCI includes a second information field (or called a new data indication field). The second information field may include R sub-information fields, and the R sub-information fields are respectively used to indicate whether the data transmitted by R PSSCHs are new data.

In some implementations, the second stage SCI includes a third information field. The third information field may include R sub-information fields, and the R sub-information fields are respectively used to indicate redundant versions of data transmitted by R PSSCHs.

In some implementations, the second stage SCI includes a fourth information field and a fifth information field. The fourth information field is used to indicate a source ID, and the fifth information field is used to indicate a destination ID, and both the source ID and the destination ID are determined based on a layer 2 ID. For example, if R PSSCHs do not correspond to the same receiving device, the fifth information field may include R sub-information fields, and the R sub-information fields are respectively used to indicate the destination IDs corresponding to the R PSSCHs.

In some implementations, the second stage SCI includes a sixth information field. The sixth information field may be used to indicate activation or deactivation of sidelink feedback, and the indication of the sixth information field is applicable to R PSSCHs. The indication information carried by the sixth information field may also be referred to as HARQ feedback enabled/disabled indicator. In this implementation, the sixth information field may include, for example, information of 1 bit.

In some implementations, the second stage SCI includes a sixth information field. The sixth information field includes R sub-information fields, and the R sub-information fields are respectively used to indicate whether R PSSCHs activate or deactivate sidelink feedback. In this implementation, the sixth information field may include, for example, R bits of information.

In some implementations, the second stage SCI includes a seventh information field. The seventh information field is used to indicate a cast type, and the indication of the seventh information field is applicable to R PSSCHs. The information carried by the seventh information field may be referred to as a cast type indicator. For example, the cast type includes unicast transmission, broadcast transmission, multicast transmission supporting ACK/NACK feedback, and multicast transmission supporting only NACK feedback.

In some implementations, the second stage SCI includes a seventh information field. The seventh information field includes R sub-information fields, and the R sub-information fields are respectively used to indicate a cast type corresponding to R PSSCHs.

In some implementations, the second stage SCI includes an eighth information field. The eighth information field is used to indicate whether a receiving device needs to report CSI. The information carried in the eighth information field may be referred to as a CSI request. A value of the eighth information field may include the first value. In a case where the value of the eighth information field is the first value, it may indicate that the transmitting device transmits a CSI-RS and/or that the receiving device needs to report CSI.

As an example, in a case where the value of the eighth information field is a first value (e.g., 1), transmission resources of R PSSCHs transmitted in the first time unit all carry CSI-RS, that is, the transmitting device transmits CSI-RS in transmission resources of each PSSCH in the R PSSCHs.

As another example, in a case where the value of the eighth information field is the first value (e.g., 1), a target PSSCH of the R PSSCHs transmitted in the first time unit carries the CSI-RS. The target PSSCH may be part of the R PSSCHs, such as one PSSCH of the R PSSCHs. For example, the target PSSCH may be the first PSSCH of the R PSSCHs, the last PSSCH of the R PSSCHs, or a PSSCH determined based on configuration information. The configuration information mentioned here may include, for example, one or more of resource pool configuration information, sidelink BWP configuration information, or PC5-radio resource control (PC5-RRC) signaling. If the target PSSCH is one of the R PSSCHs, the transmitting device transmits one CSI-RS only on the target PSSCH, and does not transmit CSI-RS on the remaining PSSCHs.

In some implementations, the second stage SCI includes a ninth information field. The ninth information field is used to carry TCI state indication. The ninth information field is used to indicate the beam information used by a transmitting device, or may be used by a receiving device to determine the reception beam.

In some implementations, the indication of the ninth information field is applicable to R PSSCHs. That is, the indication information carried in the ninth information field may indicate a TCI state, and the R PSSCHs are all transmitted using the transmission beam corresponding to the TCI state, or a receiving device may use the same reception beam to receive the R PSSCHs.

In some implementations, if R PSSCHs transmitted in a first time unit do not correspond to the same receiving device, the ninth information field includes R sub-information fields, and the R sub-information fields are respectively used to indicate TCI states corresponding to the R PSSCHs. In this implementation, the R PSSCHs may be transmitted using different transmission beams, or the receiving device may receive the R PSSCHs using different reception beams.

In some implementations, if R PSSCHs transmitted in a first time unit do not correspond to the same spatial domain transmission filter, the ninth information field includes R sub-information fields, and the R sub-information fields are respectively used to indicate TCI states corresponding to the R PSSCHs. The TCI states corresponding to the R PSSCHs may be different, that is, the R PSSCHs may be transmitted using different transmission beams or received using different reception beams.

In some implementations, if R PSSCHs transmitted in a first time unit do not correspond to the same receiving device, the ninth information field includes R sub-information fields, and the R sub-information fields are used to determine the spatial domain transmission filter or spatial domain reception filter corresponding to the R PSSCHs. The spatial domain transmission filters or spatial domain reception filters corresponding to the R PSSCHs may be different, that is, the R PSSCHs may be transmitted using different transmission beams or received using different reception beams.

In some implementations, if R PSSCHs transmitted in a first time unit do not correspond to the same spatial domain transmission filter, the ninth information field includes R sub-information fields, and the R sub-information fields are used to determine the spatial domain transmission filter or spatial domain reception filter corresponding to the R PSSCHs. The spatial domain transmission filters or spatial domain reception filters corresponding to the R PSSCHs may be different, that is, the R PSSCHs may be transmitted using different transmission beams or received using different reception beams.

The information field of the second stage SCI is described in detail above. A PSCCH transmitted in the first time unit includes first stage SCI. The information field in the first stage SCI is described in detail below with examples.

In some implementations, the first stage SCI includes a tenth information field, and the tenth information field is used to indicate a SCI format of second stage SCI.

In some implementations, the first stage SCI includes an eleventh information field, the eleventh information field is used to carry priority indication information, and a value of the eleventh information field is determined based on the highest priority or the lowest priority of priorities corresponding to the R PSSCHs. A value of a priority corresponding to a PSSCH of the R PSSCHs may be determined based on a priority of one or more logical channels corresponding to the PSSCH (e.g., the highest priority of one or more logical channels). If a medium access control protocol data unit (MAC PDU) associated with the PSSCH includes a medium access control control element (MAC CE), a value of a priority corresponding to the PSSCH may be determined based on the priority of one or more logical channels corresponding to the PSSCH and a priority of the MAC CE (e.g., the highest priority between the priority of the one or more logical channels and the priority of the MAC CE).

In some implementations, the first stage SCI includes an eleventh information field, the eleventh information field includes R sub-information fields, and the R sub-information fields are respectively used to indicate priorities corresponding to the R PSSCHs. A value of a priority corresponding to a PSSCH of the R PSSCHs may be determined based on a priority of one or more logical channels corresponding to the PSSCH (e.g., the highest priority of the one or more logical channels). If a MAC PDU associated with the PSSCH includes a MAC CE, a value of a priority corresponding to the PSSCH may be determined based on the priority of one or more logical channels corresponding to the PSSCH and a priority of the MAC CE (e.g., the highest priority between the priority of one or more logical channels and the priority of the MAC CE).

In some implementations, the first stage SCI includes a twelfth information field, the twelfth information field (e.g., Beta_offset indicator) is used to carry a beta offset indicator, and the beta offset indicator is applicable to second stage SCI.

In some implementations, the first stage SCI includes a thirteenth information field, the thirteenth information field (e.g., number of DMRS port) is used to indicate the number of DMRS ports, and the number of DMRS ports is applicable to R PSSCHs, that is, applicable to the DMRS of the R PSSCHs.

In some implementations, the first stage SCI includes a fourteenth information field, the fourteenth information field is used to indicate MCS, and the R PSSCHs all use the MCS indicated by the fourteenth information.

In some implementations, the first stage SCI includes a fifteenth information field, the fifteenth information field (e.g., additional MCS table indicator) is used to indicate a MCS table, and the R PSSCHs all use the MCS table indicated by the fifteenth information field.

Embodiment 2.3.3: a first time unit is used to transmit one PSCCH and R second stage SCIs

In this embodiment, R second stage SCIs correspond one-to-one with R PSSCHs transmitted in the first time unit.

In some implementations, the starting mapping position of second stage SCI is determined based on one or more of the following: information predefined in a protocol; resource pool configuration information; sidelink BWP configuration information; or indication information from a terminal device. The terminal device may be a transmitting device of sidelink data, or may be a receiving device of sidelink data.

In some implementations, respective second stage SCI corresponding to each PSSCH in R second stage SCIs is mapped starting from the first PSSCH DMRS symbol corresponding to each PSSCH.

In some implementations, respective second stage SCI corresponding to each of R PSSCHs is mapped starting from the first symbol corresponding to each PSSCH.

In some implementations, first stage SCI in the PSCCH includes a tenth information field, the tenth information field is used to indicate an SCI format of second stage SCI. R second stage SCIs may use the same or different SCI formats. For example, if a format of respective second stage SCI corresponding to each PSSCH in the R PSSCHs is the same, the tenth information field may be used to indicate the second stage SCI format. For another example, if formats of second stage SCIs corresponding to different PSSCHs of the R PSSCHs may be different, the tenth information field may respectively indicate a format of respective second stage SCI corresponding to each PSSCH.

In some implementations, first stage SCI in the PSCCH includes an eleventh information field, the eleventh information field is used to carry priority indication information, and a value of the eleventh information field is determined based on the highest priority or the lowest priority of priorities corresponding to R PSSCHs. A value of a priority corresponding to a PSSCH of the R PSSCHs may be determined based on a priority of one or more logical channels corresponding to the PSSCH (e.g., the highest priority of one or more logical channels). If a MAC PDU associated with the PSSCH includes a MAC CE, the value of the priority corresponding to the PSSCH may be determined based on the priority of one or more logical channels corresponding to the PSSCH and a priority of the MAC CE (e.g., the highest priority between the priority of one or more logical channels and the priority of the MAC CE).

In some implementations, first stage SCI in the PSCCH includes an eleventh information field, the eleventh information field includes R sub-information fields, and the R sub-information fields are respectively used to indicate priorities corresponding to the R PSSCHs. A value of a priority corresponding to a PSSCH of the R PSSCHs may be determined based on a priority of one or more logical channels corresponding to the PSSCH (e.g., the highest priority of the one or more logical channels). If a MAC PDU associated with the PSSCH includes a MAC CE, the value of the priority corresponding to the PSSCH may be determined based on the priority of one or more logical channels corresponding to the PSSCH and a priority of the MAC CE (e.g., the highest priority between the priority of one or more logical channels and the priority of the MAC CE).

In some implementations, first stage SCI in the PSCCH includes a twelfth information field, the twelfth information field (e.g., Beta_offset indicator) is used to carry a beta offset indicator, and the beta offset indicator is applicable to R second stage SCIs.

In some implementations, first stage SCI in the PSCCH includes a thirteenth information field, the thirteenth information field (e.g., number of DMRS port) is used to indicate the number of DMRS ports, and the number of DMRS ports is applicable to R PSSCHs, that is, applicable to the DMRS of the R PSSCHs.

In some implementations, first stage SCI in the PSCCH includes a fourteenth information field, the fourteenth information field is used to indicate the MCS, and the R PSSCHs all use the MCS indicated by the fourteenth information.

In some implementations, first stage SCI in the PSCCH includes a fifteenth information field, the fifteenth information field (e.g., additional MCS table indicator) is used to indicate a MCS table, and the R PSSCHs all use the MCS table indicated by the fifteenth information field.

Based on the specific examples illustrated in FIGS. 27 to 31 below, a more detailed illustration of Embodiment 2.3 is provided. In the examples given in FIG. 27 to FIG. 31, a plurality of PSSCHs are transmitted in one time unit, and the plurality of PSSCHs correspond to different TBs. Each of the plurality of PSSCHs corresponds to a respective PSCCH and second stage SCI (for the case where only one PSCCH is transmitted in one time unit, the transmission resources of PSCCH and PSSCH may be designed in a manner similar to FIGS. 23 to 26). FIGS. 27 to 31 only illustrate respective resources of the PSCCH corresponding to each PSSCH, and do not illustrate the transmission resources corresponding to the second stage SCI. In addition, in the examples of FIGS. 27 to 31, the first threshold value is set to 3. It should be noted that the examples in FIGS. 27 to 31 are only intended to help those skilled in the art understand the embodiments of the present disclosure, and are not intended to limit the embodiments of the present disclosure to the specific numerical values or specific scenarios illustrated. It is apparent that those skilled in the art may make various equivalent modifications or changes based on the examples of FIGS. 27 to 31, and such modifications or changes also fall within the scope of the embodiments of the present disclosure.

Referring to FIG. 27, the first time unit may be a time unit #1 or a time unit #2 illustrated in FIG. 27. In the example of FIG. 27, one time unit includes 2 slots. The resource assignment of PSSCH in a time unit starts from the fifth symbol, that is, A is equal to 4. The first 4 symbols of a time unit may be used as AGC, and the last 4 symbols of a time unit are used as GP, that is, B is equal to 4. Two PSSCHs are transmitted in one time unit, that is, each slot is used to transmit one PSSCH. The second slot of the time unit #2 includes only one symbol for transmitting the PSSCH. Since the number of symbols available for PSSCH transmission included in the second slot of the time unit #2 is less than the first threshold value, the data transmitted by the PSSCH in the slot is repeated data of the first symbol or the last symbol of the PSSCH (i.e., PSSCH 1) in the previous slot.

Referring to FIG. 28, the first time unit may be a time unit # 1 or a time unit # 2 illustrated in FIG. 28. In the example of FIG. 28, one time unit includes 4 slots. The resource assignment of PSSCH in one time unit starts from the fifth symbol, that is, A is equal to 4. The first 4 symbols of one time unit may be used as AGC, and the last 4 symbols of one time unit are used as GP, that is, B is equal to 4. Four PSSCHs are transmitted in one time unit, that is, each slot is used to transmit one PSSCH. The fourth slot of the time unit #2 includes only 1 symbol for transmitting PSSCH. Since the number of symbols available for PSSCH transmission in the fourth slot of the time unit #2 is less than the first threshold value, the data transmitted over the PSSCH in the slot is repeated data of the first symbol or the last symbol of the PSSCH (i.e., PSSCH 3) in the previous slot.

Referring to FIG. 29, the first time unit may be a time unit #1 or a time unit #2 illustrated in FIG. 29. In the example of FIG. 29, one time unit includes 4 slots. The resource assignment of PSSCH in a time unit starts from the fifth symbol, that is, A is equal to 4. The first 4 symbols of a time unit may be used as AGC, and the last 4 symbols of a time unit are used as GP, that is, B is equal to 4. Two PSSCHs are transmitted in one time unit, that is, every two slots are used to transmit one PSSCH. In one time unit, the first two slots transmit PSSCH 1, and the last two slots transmit PSSCH 2. PSFCH transmission resources are included in the time unit #2.

Referring to FIG. 30, the first time unit may be a time unit #1 or a time unit #2 illustrated in FIG. 30. In the example of FIG. 30, one time unit includes 4 slots. The resource assignment of PSSCH in a time unit starts from the ninth symbol, that is, A is equal to 8. The first 8 symbols in a time unit may be used as AGC, and the last 8 symbols in a time unit are used as GP, that is, B is equal to 8. Two PSSCHs are transmitted in one time unit, that is, every two slots are used to transmit one PSSCH. PSFCH transmission resources are included in the time unit #2. The third slot of the time unit #2 includes 3 symbols for transmitting the PSSCH. Since the number of symbols available for transmitting the PSSCH included in the third slot of the time unit #2 is equal to the first threshold value, this slot (slot (n+6) in FIG. 30) may transmit the PSSCH, that is, PSSCH 2 illustrated in FIG. 30.

Referring to FIG. 31, the first time unit may be a time unit #1 or a time unit #2 illustrated in FIG. 31. In the example of FIG. 31, one time unit includes 4 slots. The resource assignment of PSSCH in a time unit starts from the ninth symbol, that is, A is equal to 8. The first 8 symbols in a time unit may be used as AGC, and the last 8 symbols in a time unit are used as GP, that is, B is equal to 8. Two PSSCHs are transmitted in one time unit, that is, every two slots are used to transmit one PSSCH. PSFCH transmission resources are included in the time unit #2. The third slot of the time unit #2 includes 3 symbols for transmitting the PSSCH. Since the number of symbols available for transmitting the PSSCH included in the third slot of the time unit #2 is equal to the first threshold value, this slot (i.e., slot (n+6) in FIG. 31) may transmit the PSSCH, that is, PSSCH 2 illustrated in FIG. 31. A symbol used as GP (i.e., the third guard symbol) is included between two adjacent PSSCHs in one time unit. The symbol may be used by the transmitting device to switch the transmission beam.

Embodiment 2.3 utilizes the first time unit to transmit a plurality of TBs, which may improve a peak rate of the communication system.

## Embodiment 3: a determination manner of TBS

The above content describes in detail the transmission manner of the PSSCH in conjunction with Embodiment 2. For the transmission of the PSSCH, it is necessary to determine the TBS corresponding to the PSSCH. The TBS corresponding to the PSSCH may be determined based on transmission resources corresponding to the PSSCH. It should be understood that, in the absence of conflict, Embodiment 3 may be applied to various embodiments in Embodiment 2.

In some implementations, the TBS corresponding to the PSSCH in the first time unit may be determined based on one or more of a first parameter to a fourth parameter (for detailed descriptions of the first parameter and the fourth parameter, following content may be referred to).

In some implementations, the first parameter may be determined based on the number of resource elements (REs). Alternatively, the first parameter may represent the number of REs. For example, the first parameter may represent the number of REs available for PSSCH transmission in one PRB or a frequency range (e.g., 12 subcarriers) corresponding to one PRB. The first parameter may be represented, for example, as $N'_{RE}$. The number of REs included in PSSCH transmission resources (or the number of REs available for PSSCH transmission in the assigned PSSCH transmission resources) may be determined based on the first parameter.

In some implementations, the second parameter may be determined based on the number of PRBs. Alternatively, the second parameter may represent the number of PRBs. The second parameter may be represented, for example, as $n_{PRB}$.

In some implementations, the third parameter may be determined based on the transmission resources occupied by the PSCCH (e.g., the number of REs occupied by the PSCCH). Alternatively, the third parameter may represent the transmission resources occupied by the PSCCH. The third parameter may be represented, for example, as $N_{RE}^{SCI,1}$. For a detailed description of the third parameter, please refer to Embodiment 3.2 below.

In some implementations, the fourth parameter may be determined based on transmission resources occupied by the second stage SCI (e.g., the number of REs occupied by the second stage SCI). Alternatively, the fourth parameter may represent the transmission resources occupied by the second stage SCI. The fourth parameter may be represented, for example, as $N_{RE}^{SCI,2}$. For a detailed description of the fourth parameter, please refer to Embodiment 3.3 below.

Embodiment 3.1: a first parameter (a parameter determined based on the number of REs)

In some implementations, the first parameter may be determined based on one or more of the fifth to eighth parameters (for detailed descriptions of the fifth and eighth parameters, following content may be referred to).

In some implementations, the fifth parameter may be determined based on the number of symbols available for transmission of the PSSCH. Alternatively, the fifth parameter may represent the number of symbols available for transmitting the PSSCH. The fifth parameter may be represented, for example, as $N_{symb}^{PSSCH}$.

In some implementations, the sixth parameter may be determined based on the number of subcarriers in a PRB (e.g., 12). Alternatively, the sixth parameter may represent the number of subcarriers in one PRB. The sixth parameter may be represented, for example, as $N_{sc}^{RB}$.

In some implementations, the seventh parameter may be determined based on an overhead in one PRB or a frequency domain range corresponding to one PRB. Alternatively, the seventh parameter may represent an overhead in one PRB or a frequency domain range (e.g., 12 subcarriers) corresponding to one PRB. The seventh parameter may be represented, for example, as $N_{oh}^{PRB}$. Alternatively, the seventh parameter may represent the number of REs that cannot be used for PSSCH transmission in one PRB or a frequency domain range corresponding to one PRB, or the number of REs occupied by other reference signals (e.g., CSI-RS and/or phase tracking reference signal (PT-RS)).

In some implementations, the seventh parameter may be determined based on preconfigured information or configuration information of the network device. For example, the seventh parameter may be determined based on the high-level parameter *sl-X-Overhead.*

In some implementations, the eighth parameter may be determined based on the number of REs occupied by a DMRS in one PRB or a frequency domain range (e.g., 12 subcarriers) corresponding to one PRB. Alternatively, the eighth parameter may represent the number of REs occupied by a DMRS in one PRB or a frequency domain range corresponding to one PRB. Alternatively, the eighth parameter is determined based on the number of REs corresponding to one or more DMRS patterns of the PSSCH DMRS. The eighth parameter may be represented, for example, as $N_{RE}^{DMRS}$.

In some implementations, the eighth parameter may be determined based on preconfigured information or configuration information of the network device. For example, the eighth parameter may be determined based on the DMRS pattern indication information in the resource pool configuration information.

As an example, the first parameter $N_{RE}'$ may be determined based on the following equation:

$$N_{RE}^{'} = N_{sc}^{RB} \cdot N_{symb}^{PSSCH} - N_{oh}^{PRB} - N_{RE}^{DMRS}$$

In the above equation, $N_{symb}^{PSSCH}$ represents the fifth parameter, and for the determination manner of the fifth parameter, the following content may be referred to; $N_{sc}^{RB}$ represents the sixth parameter, and $N_{sc}^{RB} = 12$; $N_{oh}^{PRB}$ represents the seventh parameter; $N_{RE}^{DMRS}$ represents the eighth parameter.

The following is a more detailed example of determination manner of the fifth parameter.

In some implementations, the fifth parameter may be determined based on one or more of: information predefined in a protocol; preconfigured information; configuration information from a network device; and indication information sent by a terminal device transmitting the PSSCH. For example, the resource pool configuration information includes indication information, where the indication information is used to indicate a value of the fifth parameter. For another example, the resource pool configuration information includes indication information, where the indication information is used to indicate the number of PSSCH symbols or the number of reference symbols used in a case where determining the TBS, and the value of the fifth parameter can be determined based on the indication information.

In some implementations, the fifth parameter may be determined based on one or more of the ninth parameter to the fifteenth parameter (for detailed description of the ninth parameter to the fifteenth parameter, following content may be referred to).

In some implementations, the ninth parameter may be determined based on the number of slots corresponding to the transmission resources occupied by one PSSCH. Alternatively, the ninth parameter may represent the number of slots corresponding to the transmission resources occupied by a PSSCH. The ninth parameter may be represented as $N_{slot}^{PSSCH}$. For example, if the first time unit is used to transmit a PSSCH, the value of the ninth parameter may be M. For another example, if the first time unit is used to transmit R PSSCHs, the value of the ninth parameter may be S, where S=M/R.

In some implementations, the tenth parameter may be determined based on the number of symbols included in a slot. Alternatively, the tenth parameter may represent the number of symbols included in one slot. The tenth parameter may be represented, for example, as $N_{symbol}^{slot}$.

In some implementations, the eleventh parameter may be determined based on the number of symbols used as AGC. Alternatively, the eleventh parameter may represent the number of symbols used as AGC. Alternatively, the eleventh parameter may be determined based on the overhead of the AGC. Alternatively, the eleventh parameter may represent the overhead of the AGC. Alternatively, the eleventh parameter is determined based on a time interval between the first symbol for PSSCH transmission and the first symbol in the first time unit. The eleventh parameter may be represented, for example, as $N_{symbol}^{AGC}$. As an example, the eleventh parameter may be determined based on configuration information. The configuration information may be used to indicate the number of symbols for AGC that need to be considered to determine the TBS, or the number of symbols corresponding to the AGC overhead. The configuration information may be, for example, sidelink BWP configuration information and/or resource pool configuration information.

In some implementations, the twelfth parameter may be determined based on the number of symbols to which the guard symbol corresponds. Alternatively, the twelfth parameter may indicate the number of symbols corresponding to the guard symbol. Alternatively, the twelfth parameter may be determined based on the overhead of the guard symbols. Alternatively, the twelfth parameter may represent an overhead of guarding symbols. The twelfth parameter may be represented, for example, as $N_{symbol}^{GP}$. As an example, the twelfth parameter may be determined based on configuration information. The configuration information is used to indicate the number of symbols corresponding to the guard symbols that need to be considered in a case where determining the TBS, or the configuration information is used to indicate the number of symbols corresponding to the overhead of the guard symbols that need to be considered in a case where determining the TBS. The configuration information may be, for example, sidelink BWP configuration information and/or resource pool configuration information.

In some implementations, the thirteenth parameter may be determined based on the time domain resources corresponding to the PSFCH. Alternatively, the thirteenth parameter may represent the time domain resources corresponding to the PSFCH. The thirteenth parameter may be represented, for example, as $N_{symb}^{PSFCH}$. The value of the thirteenth parameter may be determined based on one or more of the following: indication information from a transmitting device, resource pool configuration information, and sidelink BWP configuration information. For example, in a case where the number of symbols A used as AGC in one time unit is equal to 4, the number of symbols B used as GP is equal to 4, and one symbol in the time unit is used to transmit the PSFCH, a value of the thirteenth parameter may be 9 (A+B+1, that is, a sum of the number of symbols used as AGC, the number of symbols used as GP, and the number of symbols used for PSFCH transmission) or 0. For example, the value of the thirteenth parameter may be determined based on the indication information in the SCI.

In some implementations, the fourteenth parameter may be determined based on a time interval between the first symbol corresponding to a transmission resource of the PSSCH and the first symbol in one time unit. Alternatively, the fourteenth parameter may represent a time interval between the first symbol corresponding to the transmission resource of the PSSCH and the first symbol in one time unit. The fourteenth parameter may be used equivalently to or interchangeably with the eleventh parameter.

In some implementations, the fifteenth parameter may be determined based on the number of symbols of repeated data used to transmit PSSCH data in one time unit. Alternatively, the fifteenth parameter may represent the number of symbols of repeated data used to transmit PSSCH data in one time unit. For example, referring to FIG. 27, the second slot of the time unit #2 includes only one symbol for transmitting the PSSCH. Since the number of symbols available for PSSCH transmission included in the second slot of the time unit #2 is less than the first threshold value, the data transmitted over the PSSCH in the slot is repeated data of the first symbol or the last symbol of the PSSCH (i.e., PSSCH 1) in the previous slot. Therefore, in the example of FIG. 27, a value of the fifteenth parameter may be 1. For another example, referring to FIG. 28, the fourth slot of the time unit #2 includes only 1 symbol for transmitting the PSSCH. Since the number of symbols available for PSSCH transmission in the fourth slot of the time unit #2 is less than the first threshold value, the data transmitted over the PSSCH in the slot is repeated data of the first symbol or the last symbol of the PSSCH (i.e., PSSCH 3) in the previous slot. Therefore, in the example of FIG. 28, the value of the fifteenth parameter may be 1.

A specific example of the determination manner of the fifth parameter is provided below.

For example, the first time unit includes 2 slots, and the 2 slots are used to transmit one PSSCH. In the first time unit, the number A of symbols used as AGC is equal to 4, and the number B of symbols used as guard symbols is equal to 4. One of the two slots includes symbols. If the PSFCH period is configured as a time unit, that is, each time unit includes PSFCH resources, the fifth parameter (i.e., the number of symbols available for transmitting the PSSCH in the first time unit) may be determined according to the following equation:

$$N_{symb}^{PSSCH} = N_{slot}^{PSSCH} \cdot N_{symbol}^{slot} - N_{symbol}^{AGC} - N_{symbol}^{GP} - N_{symb}^{PSFCH}$$

In the above equation, $N_{slot}^{PSSCH}$ represents the ninth parameter, and $N_{slot}^{PSSCH} = 2$; $N_{symbol}^{AGC}$ represents the eleventh parameter, and $N_{symbol}^{AGC} = 4$; $N_{symbol}^{GP}$ represents the twelfth parameter, and $N_{symbol}^{GP} = 4$; $N_{symb}^{PSFCH}$ represents the thirteenth parameter, and $N_{symb}^{PSFCH} = 9$.

Embodiment 3.2: third parameter (parameter determined based on transmission resources occupied by a PSCCH)

In some implementations, the third parameter (denoted as $N_{RE}^{SCI,1}$) may be determined according to the transmission resources occupied by the PSCCH (denoted as $N'^{SCI,1}_{RE}$). The transmission resources occupied by the PSCCH may include the transmission resources occupied by the PSCCH and the transmission resources occupied by the PSCCH DMRS.

In some implementations, the third parameter may be represented by the number of REs.

In some implementations, if one PSSCH is transmitted in the first time unit, and only one PSCCH is transmitted in the first time unit, the third parameter is determined based on the transmission resources occupied by the one PSCCH. In this implementation, $N_{RE}^{SCI,1}$ may be equal to $N'^{SCI,1}_{RE}$. Alternatively, $N_{RE}^{SCI,1}$ and $N'^{SCI,1}_{RE}$ can be understood as the same parameter. In this case, $N'^{SCI,1}_{RE}$ is determined based on the transmission resources occupied by the one PSCCH.

In some implementations, if the first time unit is used to transmit a plurality of PSSCHs, and the plurality of PSSCHs correspond to the same TB, and the first time unit transmits only one PSCCH, the third parameter is determined based on the transmission resources occupied by the one PSCCH. In this implementation, $N_{RE}^{SCI,1}$ may be equal to $N'^{SCI,1}_{RE}$. Alternatively, $N_{RE}^{SCI,1}$ and $N'^{SCI,1}_{RE}$ may be understood as the same parameter. In this case, $N'^{SCI,1}_{RE}$ is determined based on the transmission resources occupied by the one PSCCH.

In some implementations, if the first time unit is used to transmit a plurality of PSSCHs, and the plurality of PSSCHs correspond to different pluralities of TBs, and the first time unit transmits only one PSCCH, the third parameter is determined based on the transmission resources occupied by the one PSCCH. In this implementation, $N_{RE}^{SCI,1}$ is equal to $N'^{SCI,1}_{RE}$. Alternatively, $N_{RE}^{SCI,1}$ and $N'^{SCI,1}_{RE}$ can be understood as the same parameter. In this case, $N'^{SCI,1}_{RE}$ is determined based on the transmission resources occupied by the one PSCCH.

In some implementations, if the first time unit is used to transmit a plurality of PSSCHs, and the plurality of PSSCHs corresponding to different pluralities of TBs, and the first time unit transmits a plurality of PSCCHs, the third parameter is determined based on the transmission resources occupied by the PSCCH corresponding to the PSSCH. For example, $N_{RE}^{SCI,1}$ is equal to $N'^{SCI,1}_{RE}$ (or, $N_{RE}^{SCI,1}$ and $N'^{SCI,1}_{RE}$ can be understood as the same parameter), at this time, $N'^{SCI,1}_{RE}$ is determined based on the transmission resources occupied by the PSCCH corresponding to the PSSCH. Alternatively, the third parameter is determined based on one or more of the following: the sum of the transmission resources occupied by the plurality of PSCCHs, and the number of the plurality of PSCCHs (or the number of TBs transmitted in the first time unit, that is, the value of R). For example, $N_{RE}^{SCI,1} = \sum_{i=1}^{R} N'^{SCI,1}_{RE,i} / R$, where $N'^{SCI,1}_{RE,i}$ is

determined based on the number of REs corresponding to the transmission resources of the i-th PSCCH, that is, in a case where determining the TBS of the PSSCH, it is determined based on the average value of the number of REs of the transmission resources of all PSCCHs transmitted in the first time unit.

Embodiment 3.3: a fourth parameter (a parameter determined based on transmission resources occupied by second stage SCI)

In some implementations, the fourth parameter (denoted as $N_{RE}^{SCI,2}$ ) may be determined according to the transmission resources occupied by the second stage SCI (denoted as $N'^{SCI,2}_{RE}$ ).

In some implementations, the fourth parameter may be represented by the number of REs.

In some implementations, if one PSSCH is transmitted in the first time unit, and only one second stage SCI is transmitted in the first time unit, the fourth parameter is determined based on the transmission resources occupied by the one second stage SCI. For example, $N_{RE}^{SCI,2}$ is equal to $N'^{SCI,2}_{RE}$ . Alternatively, $N_{RE}^{SCI,2}$ and $N'^{SCI,2}_{RE}$ can be understood as the same parameter. In this case, $N'^{SCI,2}_{RE}$ is determined based on the transmission resources occupied by the second stage SCI.

In some implementations, if the first time unit is used to transmit a plurality of PSSCHs, and the plurality of PSSCHs correspond to the same TB, and the first time unit only transmits one second stage SCI, the fourth parameter is determined based on the transmission resources occupied by the one second stage SCI. For example, $N_{RE}^{SCI,2}$ is equal to $N'^{SCI,2}_{RE}$ . Alternatively, $N_{RE}^{SCI,2}$ and $N'^{SCI,2}_{RE}$ can be understood as the same parameter. In this case, $N'^{SCI,2}_{RE}$ is determined based on the transmission resources occupied by the second stage SCI.

In some implementations, if the first time unit is used to transmit a plurality of PSSCHs, and the plurality of PSSCHs correspond to different pluralities of TBs, and the first time unit only transmits one second stage SCI, the fourth parameter is determined based on the transmission resources occupied by the one second stage SCI. For example, $N_{RE}^{SCI,2}$ is equal to $N'^{SCI,2}_{RE}$ . Alternatively, $N_{RE}^{SCI,2}$ and $N'^{SCI,2}_{RE}$ can be understood as the same parameter. In this case, $N'^{SCI,2}_{RE}$ is determined based on the transmission resources occupied by the second stage SCI.

In some implementations, if the first time unit is used to transmit a plurality of PSSCHs, and the plurality of PSSCHs correspond to different pluralities of TBs, and the first time unit transmits a plurality of second stage SCIs, the fourth parameter is determined based on the transmission resources occupied by the second stage SCI corresponding to the PSSCH. For example, $N_{RE}^{SCI,2}$ is equal to $N'^{SCI,2}_{RE}$ (alternatively, $N_{RE}^{SCI,2}$ and $N'^{SCI,2}_{RE}$ can be understood as the same parameter), at this time, $N'^{SCI,2}_{RE}$ is determined based on the transmission resources occupied by the second stage SCI corresponding to the PSSCH. Alternatively, the fourth parameter is determined based on one or more of the following: the sum of the transmission resources occupied by a plurality of second stage SCIs, and the number of the plurality of second stage SCIs (or the number of TBs transmitted in the first time unit, that is, the value of R). For example, $N_{RE}^{SCI,2} = \sum_{i=1}^{R} N'^{SCI,2}_{RE,i} / R$ , where $N'^{SCI,2}_{RE,i}$ is determined based on the number of REs corresponding to the transmission resources of the i-th second stage SCI, that is, in a case where determining the TBS of the PSSCH, it is determined based on the average number of REs of the transmission resources of all the second stage SCIs transmitted in the first time unit.

In conjunction with a specific example, a specific determination manner of the number $N_{RE}$ of REs included in the transmission resources of the PSSCH is provided below.

For example, the number $N_{RE}$ of REs included in the transmission resources of the PSSCH may be determined by the following equation:

$$N_{RE} = N'_{RE} \cdot n_{PRB} - N_{RE}^{SCI,1} - N_{RE}^{SCI,2}$$

In the above equation, $N_{RE}^{SCI,1}$ is determined based on $N'^{SCI,1}_{RE}$ (the determination manner of the third parameter may be referred to for details), $N_{RE}^{SCI,2}$ is determined based on $N'^{SCI,2}_{RE}$ (the determination manner of the fourth parameter may be referred to for details). $N'^{SCI,2}_{RE}$ may be determined by the following equation:

$$Q'_{SCI2} = \min \left\{ \left\lceil \frac{(O_{SCI2} + L_{SCI2}) \cdot \beta_{offset}^{SCI2}}{Q_m^{SCI2} \cdot R} \right\rceil , \left\lceil \alpha \sum_{l=0}^{N_{symbol}^{PSSCH}-1} M_{sc}^{SCI2}(l) \right\rceil \right\} + \gamma$$

Herein, $Q'_{SCI2}$ indicates the number of symbols after the second stage SCI is coded and modulated. $N'^{SCI,2}_{RE}$ is equal to $Q'_{SCI2}$ ; $O_{SCI2}$ indicates the number of information bits corresponding to the second stage SCI. $L_{SCI2}$ indicates the number of bits of the cyclic redundancy check (CRC) of the second stage SCI. $\beta_{offset}^{SCI2}$ may be determined based on the "Beta_offset indicator" indication information in the first stage SCI. $M_{sc}^{PSSCH}(l)$ indicates the number of subcarriers corresponding to the frequency domain resources of the PSSCH. $M_{sc}^{PSCCH}(l)$ indicates the number of subcarriers corresponding to the frequency domain resources of PSCCH. $M_{sc}^{SCI2}(l)$ indicates the number of REs that may be used to transmit the second stage SCI on a symbol 1, $l = 0, 1, 2 \cdots, N_{symbol}^{PSSCH} - 1, N_{symbol}^{PSSCH}$ may be determined based on the fifth parameter. $M_{sc}^{SCI2}(l) = M_{sc}^{PSSCH}(l) - M_{sc}^{PSCCH}(l)$ . $\gamma$ indicates the number of blank REs in the PRB in which the last symbol of the second stage SCI is located. R is the code rate determined based on the MCS indication information in the first stage SCI. $\alpha$ is determined based on high-level configuration parameters.

### Embodiment 4: a sidelink feedback mechanism based on a first time unit

It should be understood that the sidelink feedback mechanism described in Embodiment 4 may be implemented based on the time unit structure including PSFCH transmission resource provided in Embodiment 1, and in the absence of conflict, the content of Embodiment 4 may be combined with the content of Embodiment 1. For example, the first A symbols of the first time unit in Embodiment 4 may be used as AGC. For another example, the last B symbols of the first time unit in Embodiment 4 are guard symbols and may be used as GP. In addition, in the absence of conflict, the sidelink feedback mechanism described in Embodiment 4 may be arbitrarily combined with the PSSCH transmission method and the TBS determination method provided in Embodiment 2 and Embodiment 3. For example, the first time unit may simultaneously transmit the PSSCH and the PSFCH. The PSSCH may be transmitted based on the method described in Embodiment 2 and the TBS may be determined based on the method described in Embodiment 3. The PSFCH may perform sidelink feedback based on the sidelink feedback mechanism described in Embodiment 4. For another example, the first time unit may transmit the PSFCH which is available for performing sidelink feedback on the PSSCH transmitted in the second time unit. The second time unit may transmit the PSSCH based on the method described in Embodiment 2, and determine the TBS based on the method described in Embodiment 3. The first time unit may transmit the PSFCH based on the method described in Embodiment 4, thereby realizing sidelink feedback based on the time unit.

FIG. 32 is a schematic flowchart of a sidelink transmission method provided in embodiments of the present disclosure. The method illustrated in FIG. 32 may be performed by a first terminal device. The first terminal device may be any type of the terminal device, such as the terminal device 120 in FIG. 1.

The method of FIG. 32 includes a step S3210, that is, a first terminal device receives or transmits a first PSFCH in a first time unit.

It should be noted that the first PSFCH in the embodiments of the present disclosure is used to carry sidelink feedback information or conflict indication information, which is not limited in the embodiments of the present disclosure. The following description is made by taking the first PSFCH used to carry the sidelink feedback information as an example.

In some implementations, the first PSFCH is used to carry first sidelink feedback information corresponding to one or more PSSCHs in a second time unit. The first sidelink feedback information may be HARQ information.

Similar to the first time unit, the second time unit is also a time unit including M consecutive slots. The descriptions about the first time unit mentioned in various embodiments of the present disclosure may all be applied to the second time unit.

Generally speaking, the format of a PSFCH may be defined from one or more perspectives, such as the number of bits of sidelink feedback information included in the PSFCH, the frequency domain resource occupied by the PSFCH, and the time domain resource occupied by the PSFCH. This embodiment does not specifically limit the format of the first PSFCH transmitted in the first time unit, and may be designed according to actual needs. In conjunction with Embodiment 4.1 to Embodiment 4.3, the format of the first PSFCH is described in detail from a plurality of perspectives.

Embodiment 4.1: the number of bits of sidelink feedback information carried by a first PSFCH

As mentioned above, the first PSFCH is used to carry the first sidelink feedback information. The first sidelink feedback information is used to perform sidelink feedback on one or more PSSCHs in the second time unit.

In some implementations, the first sidelink feedback information may be sidelink feedback information of 1 bit.

In some implementations, the first sidelink feedback information may be sidelink feedback information of a plurality of bits.

In some implementations, the number of bits included in the first sidelink feedback information may be determined based on the number of TBs transmitted in the second time unit. For example, if the second time unit transmits one TB, the first sidelink feedback information is sidelink feedback information of 1 bit; if the second time unit transmits a plurality of TBs, the first sidelink feedback information is sidelink feedback information of a plurality of bits. That is, the number of bits included in the first sidelink feedback information may be equal to the number of TBs transmitted in the second time unit.

The number of bits of the first sidelink feedback information is different, and the feedback manner corresponding to the first PSFCH may be different, which is described below in conjunction with a plurality of embodiments.

Embodiment 4.1.1: first sidelink feedback information is sidelink feedback information of 1 bit

In some implementations, one or more PSSCHs in the second time unit are used to carry one TB (refer to the description of Embodiment 2.1 and Embodiment 2.2 above). In this case, the first sidelink feedback information may be the sidelink feedback information corresponding to the TB. For example, the value corresponding to ACK is 1, and the value corresponding to NACK is 0. If the TB is received correctly, the value of the first sidelink feedback information of 1 bit is 1, indicating the ACK; if the TB is not received correctly, the value of the first sidelink feedback information of 1 bit is 0, indicating the NACK.

In some implementations, one or more PSSCHs in the second time unit are used to carry a plurality of TBs (refer to the description of Embodiment 2.3 above). In this case, the first sidelink feedback information may be determined based on the sidelink feedback information corresponding to a plurality of TBs. For example, bundling process may be performed on the sidelink feedback information corresponding to a plurality of TBs. There are many manners to perform bundling process, for example, the bundling process may be performed on the sidelink feedback information corresponding to a plurality of TBs based on an "AND operation" or an "OR operation" to obtain a operation result of 1 bit. By bundling sidelink feedback information of a plurality of bits into sidelink feedback information of 1 bit and performing feedback via a PSFCH, the feedback mechanism of the PSFCH format (i.e., PSFCH format 0, in which PSFCH carries feedback information of 1 bit) provided by the related technology may be used to the greatest extent.

For example, as a possible implementation, the first sidelink feedback information is determined based on an AND operation result of the sidelink feedback information corresponding to a plurality of TBs. If the sidelink feedback information corresponding to a plurality of TBs are all ACK, the value of the first sidelink feedback information is a first value (e.g., may be 1). For another example, if the sidelink feedback information corresponding to at least one TB of a plurality of TBs is NACK, the value of the first sidelink feedback information is a second value (e.g., may be 0). As a more specific example, if one bit of the first sidelink feedback information takes the value of 1 to indicate ACK and takes the value of 0 to indicate NACK, and the second time unit transmits 4 TBs, corresponding to sidelink feedback information of 4 bits respectively, the result of the "AND operation" is 1 only when the sidelink feedback information of 4 bits are all ACK (i.e., the values of the sidelink feedback information of 4 bits are all 1), otherwise, the result of the "AND operation" is 0.

For another example, as another possible implementation, the first sidelink feedback information is determined based on an OR operation result of the sidelink feedback information corresponding to a plurality of TBs. For example, if at least one sidelink feedback information of the sidelink feedback information corresponding to the plurality of TBs is ACK, the value of the first sidelink feedback information is a first value (e.g., may be 1). For another example, if the sidelink feedback information corresponding to the plurality of TBs are all NACK, the value of the first sidelink feedback information is a second value (e.g., may be 0). As a more specific example, if one bit of the first sidelink feedback information takes a value of 1 to indicate ACK and takes a value of 0 to indicate NACK, and the second time unit transmits 4 TBs corresponding to sidelink feedback information of 4 bits respectively, if the sidelink feedback information of 4 bits include ACK (i.e., at least one of the sidelink feedback information of 4 bits takes a value of 1), the result of the "OR operation" is 1; otherwise, the result of the "OR operation" is 0.

In some implementations, one or more PSSCHs in the second time unit are used to carry a plurality of TBs (refer to the description of Embodiment 2.3 above). The plurality of PSSCHs correspond to a plurality of PSFCHs respectively (the first PSFCH may be one of the plurality of PSFCHs), and the plurality of PSFCHs are used to carry sidelink feedback information corresponding to the plurality of TBs respectively. The plurality of PSFCHs may be used to perform sidelink feedback simultaneously on a plurality of PSFCHs.

In some implementations, all of the plurality of PSFCHs may carry sidelink feedback information of 1 bit. In this way, the feedback mechanism of the PSFCH format (i.e., PSFCH format 0, in which the PSFCH carries feedback information of 1 bit) provided by the related technology may be used to the greatest extent.

The plurality of PSFCHs may be distinguished by one or more of time domain, frequency domain, and code domain.

In some implementations, time domain resources corresponding to the plurality of PSFCHs are the same, and frequency domain resources corresponding to the plurality of PSFCHs are different. An example corresponding to this implementation method is given below in conjunction with FIG. 33, and details are described below.

In some implementations, time domain resources corresponding to the plurality of PSFCHs are the same, and code domain resources corresponding to the plurality of PSFCHs are different.

In some implementations, time domain resources corresponding to the plurality of PSFCHs are different, and frequency domain resources corresponding to the plurality of PSFCHs are the same.

In some implementations, time domain resources corresponding to the plurality of PSFCHs are different, and frequency domain resources corresponding to the plurality of PSFCHs are different. An example corresponding to this implementation method is given below in conjunction with FIG. 34, and details are described below.

In some implementations, time domain resources corresponding to the plurality of PSFCHs are different, and code domain resources corresponding to the plurality of PSFCHs are different.

Embodiment 4.1.2: first sidelink feedback information is the sidelink feedback information of a plurality of bits

In some implementations, one or more PSSCHs in the second time unit are used to carry a plurality of TBs (refer to the description of Embodiment 2.3 above). Correspondingly, the sidelink feedback information of a plurality of bits in the first PSFCH corresponds to the plurality of TBs respectively. That is, the sidelink feedback information of the plurality of bits is respectively used to indicate sidelink feedback results corresponding to the plurality of TBs. An example corresponding to this implementation is given below in conjunction with FIG. 35, and details are described below.

Embodiment 4.2: frequency domain resources of a first PSFCH

In some implementations, the first PSFCH occupies one PRB in frequency domain.

In some implementations, if the first PSFCH occupies one PRB in frequency domain, the first PSFCH may carry the first sidelink feedback information based on a first sequence. A length of the first sequence is determined based on the number of subcarriers included in one PRB. For example, the length of the first sequence is equal to the number of subcarriers included in one PRB. The first sequence may be mapped to one PRB occupied by the first PSFCH.

In some implementations, the first PSFCH occupies a plurality of PRBs in frequency domain.

In some implementations, if the first PSFCH occupies a plurality of PRBs in frequency domain, the first PSFCH may carry the first sidelink feedback information based on the first sequence. A length of the first sequence may be determined based on the number of subcarriers included in one PRB (e.g., the length of the first sequence is equal to the number of subcarriers included in one PRB, such as the length of the first sequence is equal to 12). The first sequence may be mapped to one PRB (hereinafter referred to as PRB 1) of a plurality of PRBs occupied by the first PSFCH, and data in remaining PRBs of the plurality of PRBs other than PRB 1 may be determined based on the first sequence. For example, the data in each of the remaining PRBs may be repeated data of the data transmitted in the PRB 1. For another example, the data in each PRB in the remaining PRBs may be determined based on multiplying the first sequence by a rotation factor.

In some implementations, if the first PSFCH occupies a plurality of PRBs in frequency domain, the first PSFCH carries the first sidelink feedback information based on a second sequence. A length of the second sequence may be determined based on the product of the number of a plurality of PRBs and the number of subcarriers included in one PRB. For example, the length of the second sequence may be equal to the product of the number of the plurality of PRBs and the number of subcarriers included in one PRB. For another example, the length of the second sequence may be determined based on a maximum prime number that is less than or equal to the product of the number of the plurality of PRBs and the number of subcarriers included in one PRB. For example, assuming that the product of the number of the plurality of PRBs and the number of subcarriers included in one PRB is 132, the length of the second sequence may be 131. After determining the length of the second sequence, the second sequence may be mapped to the plurality of PRBs occupied by the first PSFCH.

It should be noted that Embodiment 4.2 may be combined arbitrarily with Embodiment 4.1. For example, in a case where the first PSFCH includes information of 1 bit, the first PSFCH may occupy one PRB in frequency domain or may occupy a plurality of PRBs in frequency domain. For another example, in a case where the first PSFCH includes information of a plurality of bits, the first PSFCH may occupy one PRB or a plurality of PRBs in frequency domain.

Embodiment 4.3: time domain resources of PSFCH in a first time unit (the time domain resources of PSFCH include the time domain resources corresponding to the first PSFCH)

In some implementations, the time domain resources of PSFCH in the first time unit may include K symbols. The K symbols may include K1 symbols and K2 symbols. The K1 symbols are used to transmit the PSFCH, and the data in the K2 symbols are repeated data of the data in the K1 symbols, where K1 and K2 are positive integers, and K is equal to the sum of K1 and K2. The value of K1 may be 1 or greater than 1 (e.g., it may be 2 or A). For the introduction of K, K1 and K2, please refer to Embodiment 1.4 above, which will not be described in detail here.

In some implementations, the value of K1 is determined based on the number of TBs transmitted in the second time unit. For example, in a case where the second time unit transmits one TB, the value of K1 is 1; in a case where the second time unit transmits a plurality of TBs, the value of K1 is greater than 1. That is, K1 may be equal to the number of TBs transmitted in the second time unit.

In some implementations, the value of K is determined based on the number of TBs transmitted in the second time unit. For example, in a case where the second time unit transmits one TB, the value of K is 5 (1 symbol is used to transmit the PSFCH, and 4 symbols are used as AGC); in a case where the second time unit transmits a plurality of TBs, the value of K1 is greater than 5 (a plurality of symbols are used to transmit the PSFCH, and 4 symbols are used as AGC).

In some implementations, in a case where K1 is greater than 1, the number of symbols corresponding to the first PSFCH may be less than K1, and the K1 symbols are used to repeatedly transmit a plurality of first PSFCHs. In other words, the K1 symbols may transmit a plurality of PSFCHs, and the sidelink feedback information carried in the plurality of PSFCHs is the same as the sidelink feedback information carried in the first PSFCH, that is, the plurality of PSFCHs are used to repeatedly transmit the sidelink feedback information carried in the first PSFCH. By repeatedly transmitting the PSFCH in time domain, the detection performance of the PSFCH may be improved.

In some implementations, different PSFCHs of the plurality of PSFCHs (including the first PSFCH) in the K1 symbols correspond to the same frequency domain resources.

In some implementations, different PSFCHs of the plurality of PSFCHs (including the first PSFCH) in the K1 symbols correspond to different frequency domain resources.

In some implementations, different PSFCHs of the plurality of PSFCHs (including the first PSFCH) in the K1 symbols correspond to the same code domain resources.

In some implementations, different PSFCHs of the plurality of PSFCHs (including the first PSFCH) in the K1 symbols correspond to different code domain resources.

In some implementations, in a case where K1 is greater than 1, the number of symbols corresponding to the first PSFCH is K1. In other words, the first PSFCH occupies K1 symbols (i.e., the number of symbols occupied by the first PSFCH in the time domain is greater than 1). For example, after channel coding and modulation, the sidelink feedback information corresponding to the first PSFCH may be mapped to transmission resources corresponding to the K1 symbols.

In some implementations, transmission resources corresponding to K1 symbols are also used to transmit DMRS. The DMRS is a PSFCH DMRS.

It should be noted that Embodiment 4.3 may be combined arbitrarily with Embodiment 4.1 and/or Embodiment 4.2. For example, in a case where the first PSFCH includes information of 1 bit, the first PSFCH may occupy one PRB or a plurality of PRBs in the frequency domain, and the first PSFCH may occupy one symbol or a plurality of symbols in the time domain. For another example, in a case where the first PSFCH includes information of a plurality of bits, the first PSFCH may occupy one PRB or a plurality of PRBs in the frequency domain, and the first PSFCH may occupy one symbol or a plurality of symbols in the frequency domain.

The above content describes the format of PSFCH in detail in conjunction with Embodiment 4.1 to Embodiment 4.3. Several more specific examples of PSFCH formats are given below. The PSFCH in the first time unit (e.g., the first PSFCH) may use any one of a plurality of PSFCH formats given below.

Embodiment 1: a PSFCH format 1

If the PSFCH uses a PSFCH format 1, the PSFCH carries sidelink feedback information of 1 bit. In addition, the PSFCH is mapped to one symbol in the time domain, and the PSFCH occupies one PRB in the frequency domain.

The time domain resources of PSFCH corresponding to the PSFCH may include K symbols, and K=K1+K2. K1 symbols of the K symbols (corresponding to the last K1 symbols of the K symbols) are used to transmit the PSFCH. The data transmitted in K2 symbols (corresponding to the first K2 symbols of the K symbols) of the K symbols are repeated data of the data transmitted in the K1 symbols. The K2 symbols may be used by the receiving device to perform AGC adjustment.

The sidelink feedback information of 1 bit in the PSFCH may be carried by a first sequence, and a length of the first sequence is 12.

If the time unit associated with the PSFCH transmits only one TB (e.g., the time unit transmits only one PSSCH, or the time unit transmits a plurality of PSSCHs, and the plurality of PSSCHs correspond to the same TB), the sidelink feedback information of 1 bit carried by the PSFCH is the sidelink feedback information for the one TB.

If the time unit associated with the PSFCH transmits a plurality of TBs (e.g., the time unit transmits a plurality of PSSCHs, and the plurality of PSSCHs correspond to different TBs), since the PSFCH can only carry sidelink feedback information of 1 bit, any one of the manners 1 to 3 described below may be used for performing sidelink feedback.

In the manner 1, the sidelink feedback information corresponding to the plurality of TBs is bundled together for performing feedback. For example, bundling processing may be performed on a plurality of sidelink feedback information corresponding to a plurality of TBs. The bundling processing may be, for example, an "AND operation" of a plurality of bits, the result of the "AND operation" is 1 bit, and the result of the operation may be fed back via the PSFCH. For example, if the value of a bit is 1, it indicates ACK, and the value of a bit is 0, it indicates NACK, and the time unit associated with the PSFCH transmits 4 TBs which respectively correspond to sidelink feedback information of 4 bits. In this case, only when all 4 bits of feedback information are ACK, that is, the values of the 4 bits are all 1, the result of the "AND operation" is 1; otherwise, the result of the "AND operation" is 0. By bundling sidelink feedback information of a plurality of bits into 1 bit and feeding back via the PSFCH, the feedback mechanism of the PSFCH format 0 may be used to the greatest extent.

In the manner 2, a plurality of sidelink feedback information corresponding to the plurality of TBs are respectively carried by a plurality of PSFCHs. All of the plurality of PSFCHs use the PSFCH format 1, the plurality of PSFCHs are located on the same time domain resources, and the plurality of PSFCHs correspond to different frequency domain resources or code domain resources. In the manner 2, the sidelink feedback information corresponding to different TBs is fed back via different PSFCHs respectively, so that the PSFCH feedback format and feedback mechanism based on the slot may be reused as much as possible, and the sidelink feedback of a plurality of PSSCHs may be performed simultaneously.

For example, FIG. 33 illustrates eight time units in a resource pool (i.e., a time unit #0 to a time unit #7 in FIG. 33). One time unit includes 2 slots, and the period of the PSFCH is 2 time units. The PSFCH is located in the time units #1, #3, #5, #7, etc. A time interval between the PSFCH and a PSSCH transmission resource associated with the PSFCH is 2, that is, 2 time units. The transmission resource of the PSFCH includes 5 symbols, where 1 symbol (i.e., K1 is equal to 1) is used to transmit the PSFCH, and the remaining 4 symbols (i.e., K2 is equal to 4) are used as AGC. For simplicity, the AGC symbol located at the starting position of the time unit is not illustrated in FIG. 33. Two PSSCHs are transmitted in the time unit #2, that is, PSSCH 1 and PSSCH 2. The PSFCH transmission resources corresponding to the PSSCH 1 and the PSSCH 2 are both located in the time unit #5. Furthermore, the PSSCH 1 and the PSSCH 2 correspond to PSFCH 1 and PSFCH 2 respectively, each PSFCH carries sidelink feedback information of 1 bit, and each PSFCH occupies one PRB in the frequency domain. As can be seen from FIG. 33, the PSFCH 1 and the PSFCH 2 correspond to the same time domain resources, but the PSFCH 1 and the PSFCH 2 corresponding to different frequency domain resources.

In the manner 3, a plurality of sidelink feedback information corresponding to the plurality of TBs are respectively carried by a plurality of PSFCHs, and all of a plurality of PSFCHs use the PSFCH format 1. The plurality of PSFCHs are located on different time domain resources, and the plurality of PSFCHs correspond to the same frequency domain resources or code domain resources, or the plurality of PSFCHs correspond to different frequency domain resources or code domain resources. The manner 3 feeds back the sidelink feedback information corresponding to different TBs via different PSFCHs respectively, which may reuse the PSFCH feedback format and feedback mechanism based on slots as much as possible, and realize the sidelink feedback of a plurality of PSSCHs at the same time.

For example, FIG. 34 illustrates eight time units in a resource pool (i.e., a time unit #0 to a time unit #7 in FIG. 34). One time unit includes 2 slots, and a period of the PSFCH is 2 time units. The PSFCH is located in the time units #1, #3, #5, #7, etc. A time interval (minimum time interval) between transmission resources of the PSFCH and the PSSCH corresponding to the PSFCH is 2, that is, 2 time units. The transmission resource of the PSFCH includes 6 (i.e., K is equal to 6) symbols, of which 2 symbols are used to transmit the PSFCH (i.e., K1 is equal to 2, corresponding to the last two symbols of the 6 symbols). The PSFCH transmitted on each of the two symbols corresponds to one PSSCH in one time unit, and the remaining four symbols are used as AGC (i.e., K2 is equal to 4, corresponding to the first 4 symbols of the six symbols). For simplicity, the AGC symbol located at the starting position of the time unit is not illustrated in FIG. 34. In FIG. 34, two PSSCHs (including PSSCH 1 and PSSCH 2) are transmitted in the time unit #2, and the transmission resources of the PSFCH corresponding to the two PSSCHs are located in the time unit #5. Furthermore, the PSSCH 1 in the time unit #1 corresponds to PSFCH 1, and the PSSCH 2 in the time unit #2 corresponds to PSFCH 2. The PSFCH 1 is located at the second last symbol corresponding to the PSFCH transmission resource in the time unit #5, that is, the first symbol used for PSFCH transmission (does not include the first 4 symbols used as AGC), and the PSFCH 2 is located at the last symbol of the PSFCH transmission resource in the time unit #5, that is, the second symbol used for PSFCH transmission (does not include the first 4 symbols used as AGC). As can be seen from FIG. 34, the frequency domain resources of the PSFCH 1 and the frequency domain resources of the PSFCH 2 are different.

It should be noted that the manner 2 and the manner 3 may be used in combination to transmit a plurality of PSFCHs, each PSFCH carries sidelink feedback information of 1 bit. For example, sidelink feedback information of J bits corresponding to the plurality of TBs are carried by J PSFCHs, and each PSFCH carries sidelink feedback information of 1 bit. $J = \sum_{i=1}^{K1} J_i$, where $J_i$ represents the number of PSFCHs transmitted on the i-th symbol, and $J_i$ is an integer greater than or equal to 0. That is, the J PSFCHs are transmitted via K1 symbols, and 0, 1 or more PSFCHs may be transmitted on each symbol; the number of PSFCHs transmitted on each symbol may be the same or different.

Example 2: a PSFCH format 2

If the PSFCH uses the PSFCH format 2, the PSFCH carries sidelink feedback information of 1 bit. One PSFCH is mapped to one symbol in the time domain, and one PSFCH occupies Q PRBs in the frequency domain, and Q is a positive integer greater than or equal to 1. In a case where Q is equal to 1, the PSFCH format 2 is equivalent to the PSFCH format 1. In a case where Q is greater than 1, it is equivalent to transmitting one PSFCH via a plurality of PRBs. In a case where there is a power spectrum density (PSD) limitation, the transmission power of the sidelink feedback information may be increased by transmitting a plurality of PRBs, thereby improving the detection performance.

The time domain resources of PSFCH corresponding to the PSFCH may include K symbols, and K=K1+K2. K1 symbols of the K symbols (corresponding to the last K1 symbols of the K symbols) are used to transmit the PSFCH. The data transmitted in K2 symbols of the K symbols (corresponding to the first K2 symbols of the K symbols) are repeated data of the data transmitted in the K1 symbols. The K2 symbols may be used by the receiving device to perform AGC adjustment.

Optionally, the sidelink feedback information of 1 bit may be carried by a first sequence, and a length of the first sequence is 12. The first sequence is mapped to one PRB. In a case where Q is greater than 1, data transmitted in the remaining PRBs of the Q PRBs may be determined based on the first sequence.

Optionally, the sidelink feedback information of 1 bit may be carried by a second sequence. A length of the second sequence is $Q \cdot N_{SC}^{RB}$, and the second sequence is mapped to all subcarriers corresponding to Q PRBs, where $N_{SC}^{RB}$ represents the number of subcarriers included in one PRB.

For the PSFCH format 2, the sidelink feedback information may be carried in a manner similar to the manner 1, the manner 2 or the manner 3 mentioned in the PSFCH format 1.

For example, for the manner 1, sidelink feedback information of a plurality of bits may be bundled together for performing sidelink feedback. For example, an "AND operation" may be performed on a plurality of bits bit by bit to generate sidelink feedback information of 1 bit, and the sidelink feedback information may be carried by the PSFCH format 2.

For another example, for the manner 2, the respective sidelink feedback information corresponding to each TB in a plurality of TBs may be carried by one PSFCH of format 2, and the sidelink feedback information corresponding to the plurality of TBs corresponds to a plurality of PSFCHs of format 2 respectively. The time domain resources of the plurality of PSFCHs of format 2 are the same, and the plurality of PSFCHs of format 2 correspond to different frequency domain resources and/or code domain resources.

For another example, for the manner 3, each bit of the sidelink feedback information of a plurality of bits corresponds to a respective PSFCH of format 2 on one of the K1 symbols, and different sidelink feedback information is carried by a PSFCH of format 2 on different symbols of the K1 symbols.

Example 3: a PSFCH format 3

If the PSFCH uses the PSFCH format 3, the PSFCH carries sidelink feedback information of Y bits. In addition, one PSFCH is mapped to one symbol in the time domain and occupies Z PRBs in the frequency domain. Y may be a positive integer greater than or equal to 1. Z may be a positive integer greater than or equal to 1. In a case where Y is equal to 1, Z is equal to 1, the PSFCH format 3 is equivalent to the PSFCH format 1; in a case where Y is equal to 1, Z is equal to Q, the PSFCH format 3 is equivalent to the PSFCH format 2. In a case where Y is greater than 1, one PSFCH may be used to carry sidelink feedback information corresponding to a plurality of TBs transmitted in one time unit, thereby reducing the number of feedback channels required for sidelink communication.

The time domain resources of PSFCH corresponding to the PSFCH may include K symbols, and K is equal to K1+K2. K1 symbols of the K symbols (corresponding to the last K1 symbols of the K symbols) are used to transmit the PSFCH. The data transmitted in K2 symbols of the K symbols (corresponding to the first K2 symbols of the K symbols) are repeated data of the data transmitted in the K1 symbols. The K2 symbols may be used by the receiving device to perform AGC adjustment.

Optionally, the sidelink feedback information of Y bits may be carried by a first sequence. A length of the first sequence is 12. The first sequence is mapped to one PRB of Z PRBs, and data transmitted in the remaining PRBs of the Z PRBs are determined based on the first sequence.

Optionally, the sidelink feedback information of Y bits may be carried by a second sequence. A length of the second sequence is $Z \cdot N_{SC}^{RB}$. The second sequence is mapped to all subcarriers corresponding to Z PRBs, where $N_{SC}^{RB}$ represents the number of subcarriers included in one PRB.

If the time unit associated with the PSFCH is used to transmit a plurality of TBs, the PSFCH format 3 is used, and sidelink feedback information of a plurality of bits corresponding to a plurality of TBs in one time unit may be carried by one PSFCH. This feedback manner is different from the manner 1, the manner 2 and the manner 3.

For example, FIG. 35 illustrates eight time units in a resource pool (i.e., a time unit #0 to a time unit #7 in FIG. 35). One time unit includes 2 slots, and a period of the PSFCH is 2 time units. The PSFCH is located in the time units #1, #3, #5, #7, etc. A time interval (minimum time interval) between transmission resources of the PSFCH and PSSCH corresponding to the PSFCH is 2, that is, 2 time units. The transmission resource of the PSFCH includes 5 symbols, where one symbol is used to transmit the PSFCH (i.e., K1 is equal to 1, corresponding to the last symbol of the 5 symbols included in the PSFCH transmission resource), and the remaining 4 symbols are used as AGC (i.e., K2 is equal to 4, corresponding to the first 4 symbols of the 5 symbols included in the PSFCH transmission resource). For simplicity, the AGC symbol located at the starting position of the time unit is not illustrated in FIG. 35. The PSFCH in FIG. 35 occupies 2 PRBs in the frequency domain, and the PSFCH carries sidelink feedback information of 2 bits. Two PSSCHs are transmitted in the time unit #2, that is, PSSCH 1 and PSSCH 2. The PSFCH transmission resources corresponding to the PSSCH 1 and the PSSCH 2 are located in the time unit #5, and the sidelink feedback information (2 bits in total) of the PSSCH 1 and the PSSCH 2 are both carried by one PSFCH in the time unit #5.

Example 4: a PSFCH format 4

The PSFCH format 4 is an extension of the PSFCH format 3. For PSFCH using a format 4, time domain resources corresponding to the PSFCH include K symbols, where K1 symbols (corresponding to the last K1 symbols of the K symbols) are used to transmit sidelink feedback information, and K2 symbols (corresponding to the first K2 symbols of the K symbols) are used as AGC. The time domain resource of the PSFCH carrying the sidelink feedback information is one symbol. The PSFCH is mapped to one symbol of the K1 symbols (e.g., the first symbol of the K1 symbols), and the PSFCH is repeatedly transmitted on the remaining (K1-1) symbols. Repeatedly transmitting the PSFCH in the time domain may improve the PSFCH detection performance.

Optionally, PSFCHs on K1 symbols correspond to the same or different frequency domain resources.

The PSFCH on each of the K1 symbols may be a PSFCH based on the PSFCH format 3. That is, in each symbol, one PSFCH occupies Z PRBs in the frequency domain, and one PSFCH carries information of Y bits. In a case where K1 is equal to 1, the PSFCH format 4 is equivalent to the PSFCH format 3.

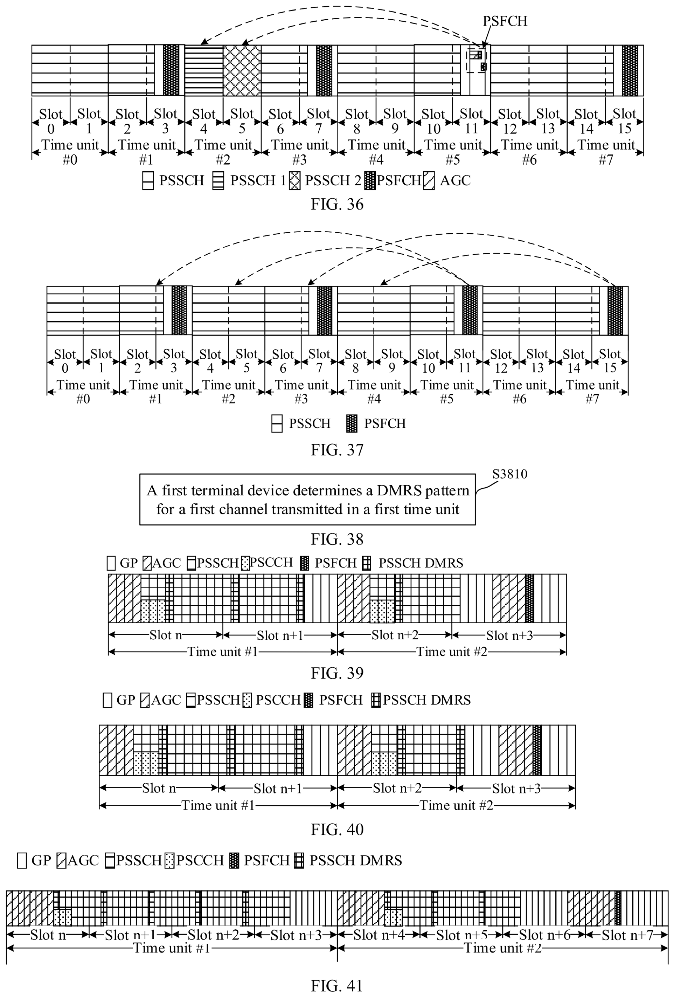

For example, FIG. 36 illustrates eight time units in a resource pool (i.e., a time unit #0 to a time unit #7 in FIG. 36). One time unit includes 2 slots, and a period of the PSFCH is 2 time units. The PSFCH is located in the time units #1, #3, #5, #7, etc. A time interval between transmission resources of the PSFCH and PSSCH corresponding to the PSFCH is 2, that is, 2 time units. The transmission resource of the PSFCH includes 6 symbols, of which 2 symbols (i.e., K1 is equal to 2, corresponding to the last K1 symbols of K symbols) are used to transmit the PSFCH, and the remaining 4 symbols (i.e., K2 is equal to 4, corresponding to the first K2 symbols of K symbols) are used as AGC. For simplicity, the AGC symbol located at the starting position of a time unit is not illustrated in FIG. 36. In the example of FIG. 36, each PSFCH occupies 2 PRBs in the frequency domain, that is, Z is equal to 2; and each PSFCH carries sidelink feedback information of 2 bits, that is, Y is equal to 2. Two PSSCHs are transmitted in the time unit #2, that is, PSSCH 1 and PSSCH 2. The PSFCH transmission resources corresponding to the PSSCH 1 and the PSSCH 2 are located in the time unit #5, and the sidelink feedback information (2 bits in total) of the PSSCH 1 and the PSSCH 2 are both carried by one PSFCH. The PSFCH occupies 2 PRBs in the frequency domain. The PSFCH is mapped to the first symbol of K1 PSFCH symbols, that is, the fifth symbol of the six symbols corresponding to the PSFCH transmission resource. The PSFCH is repeatedly mapped to the second symbol of K1 PSFCH symbols (i.e., the sixth symbol of the six symbols corresponding to the PSFCH transmission resource). The PSFCH on the sixth symbol and the PSFCH on the fifth symbol may correspond to different frequency domain resources.

Example 5: a PSFCH format 5

If the PSFCH uses the PSFCH format 5, time domain resources of one PSFCH include K symbols, and K=K1+K2. K1 symbols (corresponding to the last K1 symbols of the K symbols) are used to transmit sidelink feedback information, and K2 symbols (corresponding to the first K2 symbols of the K symbols) are used as AGC.

The time domain resource of the PSFCH carrying the sidelink feedback information is K1 symbols. Optionally, the PSFCH corresponds to the same or different frequency domain resources and/or code domain resources on K1 symbols. The PSFCH frequency domain occupies Z PRBs, and one PSFCH carries information of Y bits.

Optionally, the sidelink feedback information of Y bits may be carried by a sequence.

For example, a sequence length is $Z \cdot N_{SC}^{RB} \cdot K1$. $N_{SC}^{RB}$ indicates the number of subcarriers included in one PRB; a sequence of each $Z \cdot N_{SC}^{RB}$ length is mapped to Z PRBs of one symbol of K1 symbols.

For another example, a sequence length is $Z \cdot N_{SC}^{RB}$. $N_{SC}^{RB}$ indicates the number of subcarriers included in one PRB; the sequence may be repeatedly mapped to each of the K1 symbols (in this case, the PSFCH format 5 is equivalent to the PSFCH format 4).

Optionally, the feedback information of Y bits is channel coded and modulated, and mapped to transmission resources corresponding to K1 symbols, and the transmission resources corresponding to the K1 symbols may also include transmission resources of PSFCH DMRS.

Embodiment 5: a determination manner of the first PSFCH transmission resource and configuration information of a first PSFCH

The first PSFCH transmission resource may be determined based on one or more of first information to seventh information described below.

In some implementations, first information is used to indicate an index of a time unit to which a first PSSCH (associated with a first PSFCH) corresponds. For example, the first information indicates that a range of the index of the time unit of the first PSSCH is [0, F1-1], and F1 is determined based on the period of the PSFCH.

In some implementations, second information may be used to indicate slot information of the first PSSCH. The slot information of the first PSSCH may be, for example, an index of a slot in which the first PSSCH is located. Optionally, a range of the index of the slot indicated by the second information is determined based on the number of slots included in one time unit. For example, the range of the index of the slot of the first PSSCH is [0, F2-1], and F2 may be determined based on the number of slots included in one time unit.

In some implementations, third information may be used to indicate time domain resource information in which the first PSFCH is located. Optionally, the time domain resource information may include, for example, a symbol in which the first PSFCH is located. For example, the time domain resource information may be represented as an index of the symbol in which the first PSFCH is located. The index may correspond to the index of the symbol of the first PSFCH within a slot (a range of the index is $[0, N_{symbol}^{slot} - 1]$), or the index may correspond to the index of the K symbols included in the transmission resources of the first PSFCH (a range of the index is [0, K-1]), or the index may correspond to the index of the K1 symbols used for PSFCH transmission included in the transmission resources of the PSFCH (a range of the index is [0, K1 - 1]). The aforementioned $N_{symbol}^{slot}$ represents the number of symbols included in a slot, K represents the number of symbols included in the PSFCH transmission resource, K1 represents the number of symbols used to transmit the PSFCH of the K symbols included in the PSFCH transmission resource, K=K1+K2, where K2 symbols may be used as AGC.

For example, in FIG. 34, the PSFCH is transmitted on the fifth symbol and the sixth symbol corresponding to the PSFCH transmission resource in the time unit #5, that is, PSFCH 1 and PSFCH 2 in FIG. 34. The first PSFCH may be any one of the PSFCH 1 and the PSFCH 2. The transmission resources corresponding to the first PSFCH may be determined based on the index of the symbol in the K1 symbols (i.e., corresponding to an index 0 and an index 1 in the K1 symbols, where K1=2).

In some implementations, fourth information may be used to indicate a frequency domain starting position of the PSSCH in the first time unit.

In some implementations, fifth information may be used to indicate a length of the frequency domain resources of the PSSCH in the first time unit.

In some implementations, sixth information may be used to indicate the number of reusable cyclic shift pairs in one PRB; where the cyclic shift pairs are used for transmission of the first PSFCH. The number of cyclic shift pairs indicated by the sixth information, for example, may be determined based on a higher layer parameter sl-NumMuxCS-Pair.

In some implementations, seventh information may be used to indicate an identity of a terminal device. The identity of the terminal device may include a source identity (e.g., recorded as $P_{ID}$). The source identity may be determined based on the "source ID" information field in the SCI associated with the PSSCH. The identity of the terminal device may include a first identity (recorded as $M_{ID}$). In a case where a value of cast type indication information (cast type indicator) indicated in the SCI associated with the PSSCH is "01", the first identity may be determined based on a member ID of the receiving device, otherwise, the first identity is 0.

One or some parameters in configuration information of the first PSFCH are in units of slots. In a structure based on time units, these parameters may be updated to be in units of time units. Such parameters associated with the first PSFCH are described in detail below.

In some implementations, the first PSFCH is associated with a first parameter. The first parameter is used to indicate the period of the first PSFCH, and thus the first parameter may also be referred to as a period parameter of the first PSFCH. The first parameter may be, for example, sl-PSFCH-Period. In the embodiments of the present disclosure, the first parameter may be represented based on the number of time units.

In some implementations, the first PSFCH is associated with a second parameter. The second parameter is used to indicate a minimum time interval between the first PSFCH and the first PSSCH (a PSSCH associated with the first PSFCH). The second parameter may be, for example, sl-MinTimeGapPSFCH. In the embodiments of the present disclosure, the second parameter is represented based on the number of time units. For example, the first PSSCH is located in a time unit n, the first PSFCH is the first available PSFCH latter than a time unit n+k, or a time domain position corresponding to the first PSFCH is not earlier than a time domain position of the first available PSFCH in the time unit n+k, where n is an integer and k is determined based on the second parameter.

In some implementations, the time unit of the PSFCH is determined based on a minimum time interval and a first moment. The first moment may be determined based on one of the following manners: starting time of a time unit n; ending time of the time unit n; starting time of the first symbol used to transmit the first PSSCH; ending time of the last symbol used to transmit the first PSSCH; starting time of a slot in which the first PSSCH is located; and ending time of a slot in which the first PSSCH is located.

For example, FIG. 37 illustrates 8 time units in a resource pool (i.e., a time unit #0 to a time unit #7). The 8 time units may be any 8 time units in the resource pool. As can be seen from FIG. 37, one time unit may include 2 slots, and a period of PSFCH is 2 time units, that is, one time unit in every 2 time units includes a PSFCH transmission resource, and PSFCH is located in the time unit #1, the time unit #3, the time unit #5, the time unit #7, etc. Furthermore, in the example of FIG. 37, a time interval (minimum time interval) between transmission resources of the PSFCH and PSSCH corresponding to the PSFCH (i.e., the sidelink feedback information transmitted by the PSFCH is feedback information for the PSSCH) is 2, that is, 2 time units. As illustrated in FIG. 37, for PSSCH transmitted in the time unit #1, a transmission resource of PSFCH corresponding to the PSSCH is located at the first available PSFCH transmission resource latter than the time unit #3, that is, the PSFCH located in the time unit #5.

Embodiment 6: a DMRS pattern based on a time unit

It can be seen from Embodiment 2 that a plurality of slots included in one time unit available for transmitting one or more PSSCHs. The number of symbols corresponding to the transmission resource of one PSSCH may be determined based on one or more of the following factors: the number of slots included in one time unit (i.e., the M value); the number of symbols used as GP in one time unit (i.e., the B value); the number of symbols used as AGC in one time unit (i.e., the A value, which may be determined, for example, based on the symbol interval between the position of the first symbol available for sidelink transmission in one time unit or one slot and the position of the first symbol used for PSSCH transmission in one time unit); whether one time unit includes PSFCH transmission resources; and the number of slots corresponding to the transmission resource of one PSSCH.

It can be seen from the illustration of the slot structure of one time unit that the number of symbols corresponding to the PSSCH in one time unit varies greatly, such as ranging from a few symbols to dozens of symbols. For example, the number of symbols corresponding to the PSSCH in a slot n+6 in FIG. 30 is 3. The number of symbols corresponding to one PSSCH in FIG. 19A is 48. In addition, the transmission resource of one PSSCH in one time unit may occupy a plurality of slots. Therefore, the DMRS pattern based on a single-slot structure in the related art is not suitable for sidelink transmission based on the time unit. This incompatibility may be reflected in the following aspects:

First, the PSSCH DMRS pattern based on the single-slot structure is not suitable for multi-slot PSSCH transmission;
Second, in a case where a PSSCH transmission resource may span a plurality of slots, it is unclear how to determine the PSSCH DMRS pattern;
Third, the PSSCH DMRS pattern based on the single-slot structure only defines the case where the number of symbols corresponding to the PSSCH is at most 13 symbols (refer to the Table 1), and does not support the case where the number of PSSCH symbols exceeds 13;
Fourth, the PSSCH DMRS pattern based on the single-slot structure only defines the case where the number of symbols corresponding to the PSSCH is greater than or equal to 6 symbols, and does not support the case where the number of PSSCH symbols is less than 6; and
Fifth, for PSSCH transmission based on the time unit, how to indicate the DMRS pattern of the PSSCH via SCI is also a problem that needs to be solved.

In addition to the above problems, how to transmit the PSCCH DMRS in the first time unit is also a problem that needs to be considered.

In response to one or more of the above problems, the embodiments of the present disclosure propose a DMRS pattern based on a time unit. The present embodiment is described in detail below.

Referring to FIG. 38, the embodiments of the present disclosure provide a method for sidelink transmission. The method includes step S3810, that is, a first terminal device determines a DMRS pattern for a first channel transmitted in a first time unit.

A detailed description of the first time unit may refer to the Embodiment 1, which will not be described in detail here.

The first channel may include a first PSSCH or a first PSCCH. A detailed description of the first PSSCH may refer to the PSSCH-related content above, such as the design method of the PSSCH transmission resource in the first time unit (refer to Embodiment 1), the transmission method of the PSSCH (refer to Embodiment 2), and the determination manner of the TBS corresponding to the PSSCH (refer to Embodiment 3). A detailed introduction to the first PSCCH may refer to the PSCCH-related content above, such as the PSCCH transmission resource in the first time unit (refer to Embodiment 1) and the content of the first stage SCI (refer to Embodiment 1 and Embodiment 2).

The following uses the first channel being the first PSSCH and the first PSCCH as examples to illustrate in detail the determination manner of the DMRS pattern of the first channel.

Embodiment 6.1: a DMRS pattern for a first PSSCH

There may be a plurality of manners to determine the DMRS pattern (or time domain DMRS pattern) for the first PSSCH. For example, the DMRS pattern for the first PSSCH may be determined by configuring a starting position of the PSSCH DMRS symbol in the first time unit and an interval between adjacent PSSCH DMRS symbols. For another example, the DMRS pattern for the first PSSCH may be determined by extending a DMRS pattern based on a single slot. For another example, the DMRS pattern for the first PSSCH may be determined by the manner of specifically defining or configuring the DMRS pattern based on the time unit. The determination manner of the DMRS pattern for the first PSSCH will be described in detail below in conjunction with Embodiments 6.1.1 to 6.1.2.

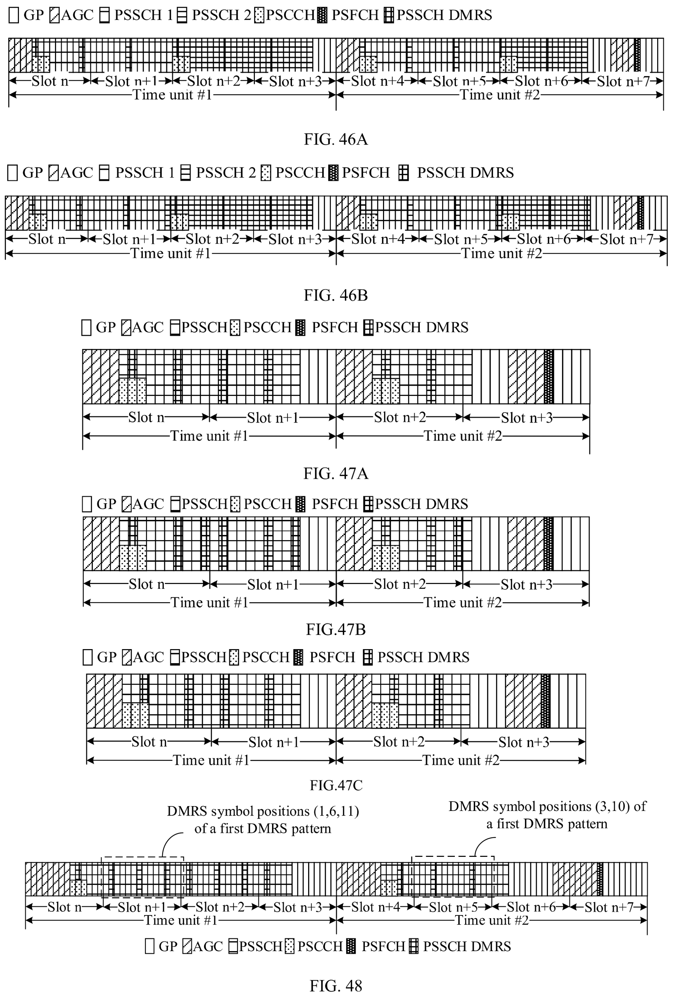

In some implementations, the last PSSCH DMRS symbol of the first PSSCH determined based on the DMRS pattern for the first PSSCH is a first target symbol. The time domain resources for transmitting the first PSSCH latter than the first target symbol occupy P symbols. If the P symbols meet a first condition, at least one of the P symbols (e.g., the last symbol of the P symbols) is used to map a DMRS. The first condition may include one or more of the following: the number of symbols of the P symbols being greater than or equal to a first threshold value (it should be understood that the first threshold value mentioned in this embodiment is a different threshold value from the first threshold value mentioned in Embodiment 2); and a ratio of the number of symbols of the P symbols to a symbol interval (or time interval) between two adjacent PSSCH DMRS symbols of the first PSSCH being greater than or equal to a second threshold value. In a case where there are a large number of PSSCH symbols latter than the last DMRS symbol, the channel estimation performance will be affected. Therefore, by using the last PSSCH symbol as a DMRS symbol, the channel estimation performance may be improved, and the PSSCH detection performance may be improved. The first threshold value may be 3. The second threshold value may be 0.5. A detailed description may refer to the relevant contents of FIG. 40 and FIG. 47B below.

In some implementations, the DMRS of the first PSSCH occupies a first PRB in the frequency domain, and every H1 subcarriers in the first PRB are used to map the DMRS, where H1 is a positive integer greater than or equal to 1. H1 may be, for example, equal to 1 or 2. If H1 is equal to 1, it means that all subcarriers corresponding to the first PSSCH carry the DMRS. If H1 is equal to 2, it means that the adjacent DMRS subcarrier spacing in the subcarrier corresponding to the first PSSCH is 2. For example, the DMRS may be mapped to an even numbered subcarrier, or the DMRS may be mapped to an odd numbered subcarrier.

Embodiment 6.1.1: a DMRS pattern for a first PSSCH is determined based on first information

In some implementations, the first information may be configuration information.

In some implementations, the first information includes one or more of the following: information used to determine a time domain position of the first PSSCH DMRS symbol (hereinafter referred to as second information); and information used to determine a symbol interval between two adjacent PSSCH DMRS symbols (hereinafter referred to as third information). The time domain position of the first PSSCH DMRS symbol may be determined based on the second information, and the symbol interval between two adjacent PSSCH DMRS symbols may be determined based on the third information. Therefore, all symbol positions corresponding to the DMRS symbol of the first PSSCH may be determined based on the second information and the third information.

In this embodiment, a position of the first DMRS symbol of the PSSCH and an interval between adjacent DMRS symbols are configured via the first information. This configuration manner may be applicable to the case where the number of PSSCH symbols is arbitrarily large, and thus may be well applied to the scenario where the transmission resources of the PSSCH span a plurality of slots.

In some implementations, the second information is used to indicate a time domain position or symbol index of the first PSSCH DMRS symbol in a slot.

In some implementations, the second information is used to indicate a time domain position or symbol index of the first PSSCH DMRS symbol in a time unit.

In some implementations, the second information is used to indicate a time domain offset of the first PSSCH DMRS symbol relative to the first symbol corresponding to a PSSCH transmission resource. The first symbol corresponding to the PSSCH transmission resource is the first symbol used to transmit the PSSCH. Alternatively, the first symbol corresponding to the PSSCH transmission resource may be the first symbol latter than the symbol used as AGC. Alternatively, the first symbol corresponding to the PSSCH transmission resource may be the first symbol mapped by the PSSCH. Alternatively, the first symbol corresponding to the PSSCH transmission resource may be the first symbol of the PSSCH resource assignment in a time unit. The time domain offset mentioned in this implementation, for example, may be represented by the number of symbols.

In some implementations, the second information is used to indicate a time domain offset of the first PSSCH DMRS symbol relative to the first symbol in a slot. The time domain offset mentioned in this implementation, for example, may be represented by the number of symbols.

In some implementations, the second information is used to indicate a time domain offset of the first PSSCH DMRS symbol relative to the first symbol in a time unit. The time domain offset mentioned in this implementation, for example, may be represented by the number of symbols.

In some implementations, the second information is used to indicate a time domain offset of the first PSSCH DMRS symbol relative to the first symbol corresponding to a PSCCH transmission resource. The time domain offset mentioned in this implementation, for example, may be represented by the number of symbols.

In some implementations, the second information is used to indicate a time domain offset of the first PSSCH DMRS symbol relative to the last symbol corresponding to a PSCCH transmission resource. The time domain offset mentioned in this implementation, for example, may be represented by the number of symbols.

In some implementations, the second information may simultaneously indicate a plurality of types of the above information.

As an example, the first PSSCH DMRS symbol determined based on the second information is located at the first symbol used to transmit the PSSCH.

As another example, the first PSSCH DMRS symbol determined based on the second information is located at the next symbol of the PSCCH time domain resource, that is, located at the next symbol of the last time domain symbol corresponding to the transmission resource of the PSCCH.

In some implementations, the symbol interval between two adjacent PSSCH DMRS symbols indicated by third information has one or more values, and the one or more values includes a first value, and the first value indicates that the symbol interval between two adjacent PSSCH DMRS symbols is greater than 14 (i.e., the number of symbols included in a slot in normal CP).

For example, the value of the third information includes but is not limited to 12, 20, 24, 28, 40, 56, etc. Alternatively, the value of the third information may also include 4, 8, 16, etc. The first value may be, for example, one of 20, 24, 28, 40 and 56.

In some implementations, the first information is determined based on one or more of the following: sidelink BWP configuration information, resource pool configuration information, PC5-RRC configuration information, information predefined in a protocol, preconfigured information, and configuration information from a network device.

For example, the resource pool configuration information includes second information and third information. The transmitting device or the receiving device may determine the DMRS pattern for the first PSSCH based on the second information and the third information.

For another example, the second information and the third information may be from the same configuration information or different configuration information. For example, the resource pool configuration information includes the third information, and the PC5-RRC or SCI includes the second information.

In some implementations, the first information may be determined based on indication information of the terminal device. The terminal device may be a transmitting device of sidelink data, or may be a receiving device of sidelink data. The indication information may be carried via SCI, MAC CE or PC5-RRC signaling.

In some implementations, the first information is used to configure one or more candidate DMRS patterns of a PSSCH, and the DMRS pattern for the first PSSCH is a target DMRS pattern in the one or more candidate DMRS patterns.

Furthermore, in some implementations, the SCI transmitted in the first time unit (i.e., the SCI associated with the first PSSCH) indicates a target PSSCH DMRS pattern. For example, the resource pool configuration information includes the second information and the third information, which are used to configure one or more candidate DMRS patterns of the PSSCH. The transmitting device may determine the corresponding target DMRS pattern in a case where transmitting the first PSSCH, and indicate the target DMRS pattern via the SCI. The receiving device may determine the target DMRS pattern according to the SCI.

In some implementations, the DMRS pattern for the first PSSCH is determined based on fourth information, and the fourth information is used to indicate a correspondence between the first information (which may also be the second information and/or the third information) and a first index. The correspondence may be configured based on configuration information. The configuration information may include one or more of the following: sidelink BWP configuration information, resource pool configuration information, PC5-RRC configuration information, information predefined in a protocol, preconfigured information, and configuration information from a network device.

The correspondence may be, for example, the correspondence illustrated in Table 7.

Table 7

| Index corresponding to the DMRS pattern | Second information (e.g., a time domain offset of the first PSSCH DMRS symbol relative to the first symbol used to transmit the PSSCH) | Third information (e.g., a symbol interval between two adjacent PSSCH DMRS symbols) |
|---|---|---|
| 0 | 0 | 4 |
| 1 | 0 | 8 |
| 2 | 0 | 12 |
| 3 | 0 | 16 |
| 4 | 2 | 4 |
| 5 | 2 | 8 |
| 6 | 2 | 12 |
| 7 | 2 | 16 |
| 8 | 4 | 4 |
| 9 | 4 | 8 |
| 10 | 4 | 12 |
| 11 | 4 | 16 |
| 12 | 6 | 4 |
| 13 | 6 | 8 |
| 14 | 6 | 12 |
| 15 | 6 | 16 |

Furthermore, in some implementations, the SCI transmitted in the first time unit indicates the first index. That is, in a case where a transmitting device transmits the first PSSCH, it may first determine the DMRS pattern based on the correspondence, and indicate the DMRS pattern (e.g., the index corresponding to the DMRS pattern) to the receiving device via the SCI.

In some implementations, if the first time unit is used to transmit one PSSCH (refer to Embodiment 2.1 above), the transmission resources of one PSSCH may correspond to all symbols available for PSSCH transmission in the first time unit. In this case, DMRSs may be sequentially mapped to all symbols used for transmitting the PSSCH in the first time unit based on the first information. For example, a time domain position of the first PSSCH DMRS symbol may be determined based on the second information, and a symbol interval between two adjacent DMRS symbols may be determined based on the third information. Then, the PSSCH DMRS may be sequentially mapped in the symbols corresponding to the PSSCH transmission resources of the first time unit.

For example, FIG. 39 illustrates two time units, that is, a time unit #1 and a time unit #2. The first time unit may be either the time unit #1 or the time unit #2. In the example of FIG. 39, one time unit includes 2 slots, the time unit #1 does not include PSFCH transmission resources, and the time unit #2 includes PSFCH transmission resources. The resource assignment of PSSCH in one time unit starts from the fifth symbol, that is, A is equal to 4. The first 4 symbols of one time unit may be used as AGC, and the last 4 symbols of one time unit are used as GP, that is, B is equal to 4. The time domain resource of PSFCH includes 5 symbols, where the data transmitted by the first 4 symbols are the same as the data transmitted in the fifth symbol, and thus the first 4 symbols may be used as AGC, and the fifth symbol is used to transmit the PSFCH. One time unit includes one PSCCH and one PSSCH. The PSSCH transmits one TB. The PSSCH is mapped to two slots included in one time unit, and PSCCH corresponding to the PSSCH occupies 3 symbols. It is determined according to the first information that the first PSSCH DMRS symbol is located at the first symbol latter than the last symbol of the PSCCH, and there are 8 symbols between two adjacent DMRS symbols. Therefore, the PSSCH DMRS may be sequentially mapped in the symbols corresponding to the PSSCH transmission resources in one time unit, thereby obtaining the DMRS pattern illustrated in FIG. 39.

Optionally, in some embodiments, the DMRS pattern may be determined based on the second information and the third information. If the number of symbols used to transmit the PSSCH latter than the last PSSCH DMRS symbol determined based on the DMRS pattern is P, and the number of P symbols is greater than or equal to a first threshold value; or, a ratio of the number of P symbols to a symbol interval between two adjacent DMRS symbols is greater than or equal to a second threshold value, the last symbol corresponding to the PSSCH transmission resource is also used to map the DMRS. For example, in FIG. 39, there are 7 symbols for transmitting the PSSCH latter than the last DMRS symbol in the time unit #2 (i.e., P is equal to 7). A ratio of the 7 symbols to the symbol interval between adjacent DMRS symbols (i.e., 8 symbols indicated by the third information) is 0.875. If the second threshold value is 0.5, the last symbol of the PSSCH transmission resource is also used to map the DMRS, as illustrated in FIG. 40.

For example, FIG. 41 illustrates two time units, that is, a time unit #1 and a time unit #2. The first time unit may be either the time unit #1 or the time unit #2. In the example of FIG. 41, one time unit includes 4 slots, the time unit #1 does not include PSFCH transmission resources, and the time unit #2 includes PSFCH transmission resources. The resource assignment of PSSCH in one time unit starts from the ninth symbol, that is, A is equal to 8. The first 8 symbols in one time unit may be used as AGC, and the last 8 symbols in one time unit are used as GP, that is, B is equal to 8. The PSFCH in the time unit #2 occupies 9 symbols, of which 8 symbols are used as AGC and 1 symbol is used to carry the PSFCH. In each time unit, other than for the symbols used as AGC, GP and PSFCH, the remaining symbols are all symbols used to transmit the PSSCH, and each time unit is only used to transmit one PSSCH, and the respective PSCCH corresponding to each time unit occupies 3 symbols. In the example of FIG. 41, it is determined that the first PSSCH DMRS symbol is located at the first symbol used to transmit the PSSCH based on the second information, and an interval between adjacent PSSCH DMRS symbols are 8 symbols. Therefore, the PSSCH DMRS may be sequentially mapped in the symbols corresponding to the PSSCH transmission resources in one time unit, thereby obtaining the DMRS pattern illustrated in FIG. 41.

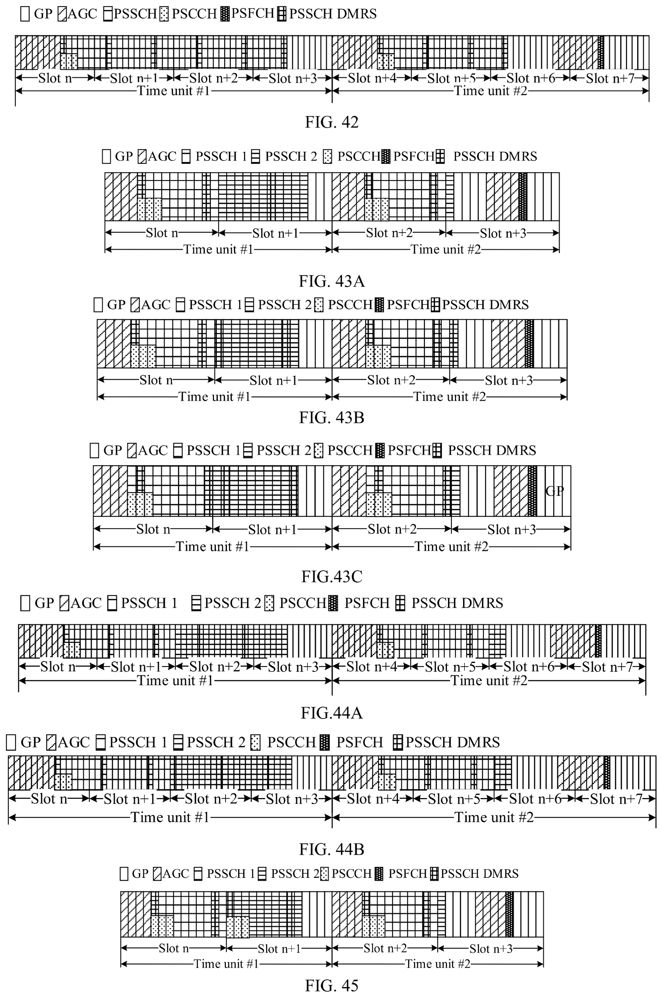

Furthermore, in the time unit #1 of FIG. 41, there are 7 DMRS symbols for transmitting PSSCH latter than the last DMRS symbol, and a ratio of the symbol interval (the value of 8) between adjacent DMRS symbols is 0.875. If the second threshold value is 0.5, the last symbol of the PSSCH transmission resources may also be used to map the DMRS. In the time unit #2 of FIG. 41, there are 6 symbols for transmitting PSSCH latter than the last DMRS symbol, and the ratio of the symbol interval between adjacent DMRS symbols (the value is 8) is 0.75. If the second threshold value is 0.5, the last symbol of the PSSCH transmission resources may also be used to map the DMRS, as illustrated in FIG. 42.

In some implementations, if the first time unit is used to transmit a plurality of PSSCHs, and the plurality of PSSCHs are used to transmit a same TB (refer to Embodiment 2.2 above), since the plurality of PSSCHs transmit the same TB, the plurality of PSSCHs are PSSCHs transmitted to the same receiving device. Therefore, the DMRS mapping method used by the plurality of PSSCHs may be similar to the DMRS mapping method in a case where one PSSCH is transmitted in one time unit, that is, DMRSs are sequentially mapped to all symbols used for transmitting PSSCHs in the first time unit based on the first information. For the convenience of description, the DMRS mapping method is referred to as a method 1 below.

In some implementations, if the first time unit is used to transmit a plurality of PSSCHs, and the plurality of PSSCHs are used to transmit a same TB (refer to Embodiment 2.2 above), DMRSs are sequentially mapped to symbols respectively corresponding to the plurality of PSSCHs based on the first information. For example, for each PSSCH in the plurality of PSSCHs, a time domain position of the first PSSCH DMRS symbol may be determined based on second information, and a symbol interval between two adjacent PSSCH DMRS symbols may be determined based on third information. Then, the PSSCH DMRS may be sequentially mapped in the symbols corresponding to the transmission resources of each PSSCH. The DMRS mapping processes between different PSSCHs are independent of each other. For the convenience of description, the DMRS mapping method is referred to as a method 2 below.

For example, FIG. 43 (including FIGS. 43A to 43C) illustrates two time units, that is, a time unit # 1 and a time unit # 2. The first time unit may be the time unit # 1 or the time unit # 2. In the example of FIG. 43, one time unit includes 2 slots, the time unit #1 does not include PSFCH transmission resources, and the time unit #2 includes PSFCH transmission resources. The resource assignment of the PSSCH in one time unit starts from the fifth symbol, that is, A is equal to 4. The first 4 symbols of one time unit may be used as AGC, and the last 4 symbols of one time unit are used as GP, that is, B is equal to 4. Two PSSCHs are transmitted in one time unit, that is, each slot is used to transmit one PSSCH. The time domain resources of the PSCCH include 3 symbols starting from the fifth symbol in one time unit. The number of symbols that may be used to transmit the PSSCH in the second slot of the time unit #2 (i.e., slot (n+3) in FIG. 43) is 1, but since PSSCH 2 transmitted in the slot and PSSCH 1 transmitted in the first slot of the time unit #2 (i.e., slot (n+2) in FIG. 43) are both used to transmit different redundant versions of the same TB, the PSSCH 2 may still be transmitted in the second slot of the time unit #2. If it is determined based on the second information that the first DMRS symbol of the PSSCH corresponds to the first symbol of the PSSCH, there are 8 symbols between two adjacent PSSCH DMRS symbols. If the DMRS pattern is determined using the method 1, that is, DMRS is sequentially mapped in all PSSCH symbols in one time unit based on the time domain position of the first DMRS symbol and the symbol interval between two adjacent PSSCH DMRS symbols, a mapping result of the DMRS illustrated in FIG. 43A may be obtained. If the method 2 is used to determine the DMRS pattern, for each PSSCH in one time unit, the DMRS pattern is determined according to the second information and the third information respectively, and the mapping result of the DMRS is illustrated in FIG. 43B. If it is determined that the first DMRS symbol of the PSSCH corresponds to the second symbol of the PSSCH based on the second information, there are 8 symbols between two adjacent PSSCH DMRS symbols. If the method 2 is used to determine the DMRS pattern, for each PSSCH in one time unit, the DMRS pattern is determined according to the second information and the third information respectively, and the mapping result of the DMRS is illustrated in FIG. 43C.

For another example, FIG. 44 illustrates two time units, that is, a time unit #1 and a time unit #2. The first time unit may be either the time unit #1 or the time unit #2. In the example of FIG. 44, one time unit includes 4 slots, and the resource assignment of the PSSCH in one time unit starts from the ninth symbol, that is, A is equal to 8, the first 8 symbols of one time unit may be used as AGC, and the last 8 symbols of one time unit are used as GP, that is, B is equal to 8. Two PSSCHs are transmitted in one time unit, that is, every two slots are used to transmit one PSSCH. The time domain resources of the PSCCH include 3 symbols starting from the ninth symbol in one time unit. The PSFCH transmission resource is included in the time unit #2, and thus the number of symbols available for transmitting the PSSCH in the third slot and the fourth slot is 3. However, since PSSCH 2 transmitted in the slot and PSSCH 1 transmitted in the first two slots in the time unit #2 are both used to transmit different redundant versions of the same TB, the PSSCH 2 may still be transmitted in the slot. It is determined based on the second information that the first DMRS symbol of the PSSCH corresponds to the first symbol of the PSSCH, and it is determined based on the third information that there are 8 symbols between two adjacent DMRSs. If the method 1 is used, the DMRS pattern in one time unit is as illustrated in FIG. 44A. If the method 2 is used, the DMRS pattern in one time unit is as illustrated in FIG. 44B.

In some implementations, if the first time unit is used to transmit a plurality of PSSCHs, and the plurality of PSSCHs are used to transmit different TBs (refer to Embodiment 2.3 above), DMRSs are sequentially mapped to all symbols used for transmitting PSSCHs in the first time unit based on the first information. For example, if a plurality of TBs are transmitted to the same receiving device, this implementation may be used to map the DMRS pattern.

In some implementations, if the first time unit is used to transmit a plurality of PSSCHs, and the plurality of PSSCHs are used to transmit different TBs (refer to Embodiment 2.3 above), DMRSs are sequentially mapped to symbols respectively corresponding to the plurality of PSSCHs based on the first information.

For example, FIG. 45 illustrates two time units, that is, a time unit #1 and a time unit #2. The first time unit may be either the time unit #1 or the time unit #2. In the example of FIG. 45, one time unit includes 2 slots, and the resource assignment of the PSSCH in one time unit starts from the fifth symbol, that is, A is equal to 4, the first 4 symbols of one time unit may be used as AGC, and the last 4 symbols of one time unit are used as GP, that is, B is equal to 4. Two PSSCHs are transmitted in one time unit, that is, each slot is used to transmit one PSSCH. The second slot of the time unit #2 (i.e., slot n+3 in FIG. 45) includes only one symbol for transmitting the PSSCH, and thus the slot cannot be used to transmit different transport blocks. Therefore, the PSSCH in the slot may be used to repeatedly transmit the data of the first symbol or the last symbol of the PSSCH (i.e., PSSCH 1) in the previous slot to improve transmission reliability. It may be determined based on the second information that the first DMRS symbol of PSSCH corresponds to the first symbol of PSSCH, and it may be determined based on the third information that the symbol interval between two adjacent DMRS symbols is 8, and thus the mapping result of DMRS is illustrated in FIG. 45. Since the data transmitted over PSSCH 2 in the second slot of the time unit #2 is a repetition of the data of the PSSCH 1, the first PSSCH symbol in the slot may not be mapped to DMRS. In some implementations, the first PSSCH symbol in the slot may also be mapped to DMRS.

For another example, FIG. 46 illustrates two time units, that is, a time unit #1 and a time unit #2. The first time unit may be either the time unit #1 or the time unit #2. In the example of FIG. 46, one time unit includes 4 slots, and the resource assignment of the PSSCH in one time unit starts from the fifth symbol, that is, A is equal to 4, the first 4 symbols of one time unit may be used as AGC, and the last 4 symbols of one time unit are used as GP, that is, B is equal to 4. Two PSSCHs are transmitted in one time unit, that is, every two slots are used to transmit one PSSCH, each PSSCH transmits a different TB, and each PSSCH has its corresponding PSCCH. In one time unit, the first two slots transmit the PSSCH 1, and the last two slots transmit the PSSCH 2. The time unit #2 includes PSFCH transmission resources. It may be determined based on the second information that the first DMRS symbol of the PSSCH corresponds to the first symbol of the PSSCH, and it may be determined based on the third information that there are 8 symbols between two adjacent DMRSs. For each PSSCH, a DMRS corresponding to the PSSCH is determined according to the above information, and the mapping result of the DMRS is illustrated in FIG. 46A.

Furthermore, in the time unit #1 in FIG. 46A, there are 7 symbols for transmitting PSSCH latter than the last DMRS symbol corresponding to the PSSCH 1, and the ratio of the interval between adjacent DMRS symbols (the value is 8) is 0.875. If a second threshold value is 0.5, the last symbol of the transmission resource of the PSSCH 1 may also be used to map the DMRS; latter than the last DMRS symbol corresponding to the PSSCH 2, there are 7 symbols used to transmit the PSSCH, and the ratio of the interval between adjacent DMRS symbols (the value is 8) is 0.875, which is greater than the second threshold value, and thus the last symbol of the transmission resource of the PSSCH 2 may also be used to map the DMRS. In the time unit #2 in FIG. 46A, there are 7 symbols for transmitting PSSCH latter than the last DMRS symbol corresponding to the PSSCH 1, and the ratio of the interval between adjacent DMRS symbols (the value is 8) is 0.875, which is greater than the second threshold value. In this case, the last symbol of the transmission resource of the PSSCH 1 may also be used to map the DMRS; there are 6 symbols for transmitting PSSCH latter than the last DMRS symbol corresponding to the PSSCH 2, and the ratio of the interval between adjacent DMRS symbols (the value is 8) is 0.75, which is greater than the second threshold value. In this case, the last symbol of the transmission resource of the PSSCH 2 may also be used to map the DMRS. The mapping result of the DMRS pattern is illustrated in FIG. 46B.

Embodiment 6.1.2: a DMRS pattern for a first PSSCH is determined based on a first DMRS pattern

In some implementations, a first DMRS pattern is determined based on information predefined in a protocol, preconfigured information, configuration information from a network device, or indication information sent by a terminal device. The terminal device may be a transmitting device of sidelink data, or may be a receiving device of sidelink data.

In some implementations, the first DMRS pattern is determined based on a DMRS pattern corresponding to a PSSCH transmitted in a single slot.

In some implementations, each slot in a first time unit corresponds to the same first DMRS pattern. If each slot of one time unit has the same first DMRS pattern, the SCI of the time unit only needs to indicate the one DMRS pattern, thereby saving the control signaling overhead.

In some implementations, a first PSSCH is one of a plurality of PSSCHs transmitted in the first time unit, and the plurality of PSSCHs correspond to a same first DMRS pattern. If a plurality of PSSCHs transmitted in one time unit have the same first DMRS pattern, the SCI transmitted in the time unit only needs to indicate the one DMRS pattern, thereby saving control signaling overhead.

In some implementations, a first PSSCH includes a plurality of slots. A plurality of slots correspond to the same first DMRS pattern.

In some implementations, a first PSSCH includes a plurality of slots, and each of the plurality of slots corresponds to a respective first DMRS patterns. That is, each slot in the plurality of slots corresponds to one first DMRS pattern, and the first DMRS patterns corresponding to different slots in a plurality of slots may be the same or different.

In some implementations, a first PSSCH is one of a plurality of PSSCHs transmitted in a first time unit, and each of the plurality of PSSCHs corresponds to a respective first DMRS patterns. That is, each PSSCH in the plurality of PSSCHs corresponds to one first DMRS pattern, and the first DMRS patterns corresponding to different PSSCHs in the plurality of PSSCHs may be the same or different.

Different PSSCHs or different slots in one time unit may correspond to different first DMRS patterns. The transmitting device may flexibly select the respective DMRS pattern corresponding to each PSSCH according to the MCS or performance requirements of the transmission block (TB), thereby ensuring the transmission performance of different TBs.

In some implementations, a first DMRS pattern is used to determine a relative position between each PSSCH DMRS symbol and a target symbol in a slot. The target symbol may be a symbol in the slot.

For example, the target symbol may be the first symbol in the slot.

For another example, the target symbol may be the first symbol available for sidelink transmission in the slot.

For another example, the target symbol may be the first symbol available for PSSCH transmission in the slot.

In some implementations, SCI transmitted in a first time unit indicates a first DMRS pattern.

In some implementations, a time interval (or a symbol interval) of a DMRS symbol relative to a first symbol of a first PSSCH is determined based on a first DMRS pattern, and positions of one or more DMRS symbols are determined based on the time interval and a position of the first symbol of a PSSCH in a first slot, where the first slot is used to transmit the first PSSCH.

In some implementations, if a symbol position corresponding to a first DMRS symbol exceeds a position of the last symbol available for PSSCH transmission in a first slot, the first DMRS symbol is not mapped in the first slot, where the first DMRS symbol is one DMRS symbol of one or more DMRS symbols. That is, in this implementation, only a portion of the DMRS symbols in a first DMRS pattern may be mapped.

In some implementations, a first DMRS pattern corresponds to a DMRS pattern in a case where all symbols in one slot are used for PSSCH transmission.

In some implementations, a first DMRS pattern may correspond to a first number of symbols in one slot. There may be a plurality of manners to define the first number of symbols, and two possible definition manners are given below.

Definition manner 1: the first number of symbols is the number of symbols (or the maximum number of symbols) available for PSSCH transmission in a slot in a case where a PSSCH is transmitted based on a single slot

In some implementations, the first DMRS pattern is a DMRS pattern suitable for transmitting a PSSCH based on a single slot. The DMRS pattern in a case where the PSSCH is transmitted based on a single slot may be predefined by a protocol. For example, in an NR SL system, the protocol predefines the DMRS pattern in a case where the PSSCH is transmitted based on the single slot, as illustrated in Table 1 above. In a case where the transmitting device transmits the PSSCH, it may autonomously determine the first DMRS pattern based on Table 1, and indicate the first DMRS pattern in the SCI transmitted together with the PSSCH. For a PSSCH transmitted via multiple slots, the transmission resource of one PSSCH may span a plurality of slots. In this case, the transmitting device may determine the first DMRS pattern based on a DMRS pattern (e.g., a DMRS pattern in Table 1) in a case where the PSSCH is transmitted based on a single slot. Then, in a case where one PSSCH is transmitted using a plurality of slots, the symbol position of the DMRS of each slot in a plurality of slots corresponding to one PSSCH may be determined based on the first DMRS pattern, and the first DMRS pattern is indicated in the SCI. By directly using the DMRS pattern in a case where PSSCH is transmitted based on a single slot as the first DMRS pattern, and determining the DMRS symbol position corresponding to the PSSCH in each slot based on the first DMRS pattern, forward compatibility may be achieved. It should be understood that the DMRS pattern in the case where PSSCH is transmitted based on a single slot mentioned in the embodiments of the present disclosure may be the PSSCH DMRS pattern provided by the related art (as illustrated in Table 1), or it may be a redefined DMRS pattern in the case where PSSCH is transmitted based on a single slot, or a DMRS pattern determined based on configuration information in the case where PSSCH is transmitted based on a single slot.

In some implementations, the first number of symbols corresponding to a first DMRS pattern is 13 or 14. For example, the first DMRS pattern corresponds to the DMRS pattern in a case where the PSSCH in Table 1 includes 13 symbols.

In some implementations, a first DMRS pattern is determined based on Table 1. If the number of PSCCH symbols is 3, a DMRS pattern with the number of DMRS symbols being 3 may be selected as the first DMRS pattern, and thus intervals of the DMRS symbols relative to a first PSSCH symbol may be determined to be 1, 6 and 11, respectively. In a case where the first DMRS pattern is applied to multi-slot PSSCH transmission, for each slot corresponding to the PSSCH, the time domain position of the DMRS symbol in the slot may be determined according to the symbol intervals 1, 6 and 11, respectively. If the number of symbols available for transmitting the PSSCH in the slot is less than 12, the slot may include only a portion of DMRS symbols in the first DMRS pattern.

Taking the transmission of one PSSCH in a first time unit as an example, several specific examples are given below in conjunction with FIG. 47 and FIG. 48.

For example, FIG. 47A includes a time unit #1 and a time unit #2, and the first time unit may be any one of the time unit #1 and the time unit #2. In FIG. 47A, one time unit is used to transmit one PSSCH. Although the transmission resources of the PSSCH span across a plurality of slots, the DMRS symbol position in each slot may be determined based on the first DMRS pattern. In FIG. 47A, the first DMRS pattern uses the DMRS pattern corresponding to "the number of PSSCH symbols is 13, the number of PSCCH symbols is 3, and the number of DMRS symbols is 3" in Table 1. The intervals of the DMRS symbols corresponding to the first DMRS pattern relative to the first PSSCH symbol are 1, 6 and 11. Then, for each slot, the time domain position of the DMRS symbol in the slot may be determined based on the relative position. As illustrated in FIG. 47A, a first slot (i.e., slot n) of the time unit #1 includes 4 AGC symbols. The time domain position of the first PSSCH symbol is the fifth symbol (symbol index 4) in the slot, the first DMRS symbol position is the sixth symbol (a symbol index is 5), and the second DMRS symbol position is the 11th symbol (symbol index 10). Since the number of symbols available for PSSCH transmission in the slot is less than 14, the slot can only map a portion of the DMRS symbols corresponding to the first DMRS pattern, that is, the slot does not include the third DMRS symbol corresponding to the first DMRS pattern, because the third DMRS symbol position determined according to interval 11 has exceeded the slot. Similarly, a second slot (i.e., slot (n+1)) of the time unit #1 includes 4 symbols used as GP. The first PSSCH symbol position is the first symbol in the slot (symbol index 0), the first DMRS symbol position is the second symbol (symbol index 1), and the second DMRS symbol position is the seventh symbol (symbol index 6). Since the number of symbols available for PSSCH transmission in the slot is less than 14, the slot only maps a portion of the DMRS symbols corresponding to the first DMRS pattern, that is, the slot does not include the third DMRS symbol corresponding to the first DMRS pattern, because the third DMRS symbol position determined according to the interval 11 is used as GP symbol and cannot be mapped to DMRS. The DMRS determination manner in the first slot (i.e., slot (n+2)) of the time unit #2 is the same as the DMRS determination manner in the first slot (slot n) of the time unit #1. The second slot (slot (n+3)) of the time unit #2 includes only one PSSCH symbol. The first DMRS symbol position determined according to the interval is the second symbol of the slot, but the second symbol is used as GP and cannot be mapped to the DMRS; the second DMRS symbol position determined according to the interval is the seventh symbol, and the seventh symbol position is the symbol position corresponding to the PSFCH transmission resource and cannot be mapped to the DMRS; the third DMRS symbol position determined according to the interval is the twelfth symbol, and the twelfth symbol is used as GP symbol and cannot be mapped to the DMRS. Therefore, the second slot (slot (n+3)) in the time unit #2 does not include a DMRS symbol. The SCI transmitted in the time unit #1 or the time unit #2 may carry indication information to indicate the first DMRS pattern.

Optionally, in a case where the DMRS symbol position in the slot is determined based on an interval corresponding to the first DMRS pattern, the number of symbols available for PSSCH transmission latter than the last DMRS symbol in the slot is greater than or equal to a first threshold value; or, a ratio of the number of symbols used to transmit PSSCH latter than the last DMRS symbol to a symbol interval between two adjacent DMRS symbols corresponding to the first DMRS pattern is greater than or equal to a second threshold value, the last symbol corresponding to the PSSCH transmission resource in the slot may also be used to map DMRS. For example, in FIG. 47A, there are 3 symbols for transmitting PSSCH latter than the last DMRS symbol in the first slot of the time unit #1, and there are 3 symbols for transmitting PSSCH latter than the last DMRS symbol in the second slot. The interval between adjacent DMRS symbols is 5. If the second threshold value is 0.5, the last symbol of the PSSCH transmission resource in the first slot and the second slot of the time unit #1 may also be used to map the DMRS, as illustrated in FIG. 47B. Similarly, the last symbol of the PSSCH transmission resource in the first slot of the time unit #2 may also be used to map the DMRS.

In addition, the relative position of each DMRS symbol with respect to the first symbol in one slot may also be determined based on the first DMRS pattern, and the DMRS pattern in each slot may be determined based on the relative position. For example, as illustrated in FIG. 47C, the intervals of DMRS symbols corresponding to the first DMRS pattern relative to the first symbol in the slot are 1, 6 and 11. For the first slot of the time unit #1, the DMRS symbol positions determined according to the first DMRS pattern should be symbols 1, 6 and 11; however, because the symbol 1 is used as AGC, DMRS may not be mapped on the symbol, and thus only the symbol 6 and the symbol 11 are mapped with DMRS in the slot. For the second slot of the time unit #1, the DMRS symbol positions determined according to the first DMRS pattern should be symbols 1, 6 and 11; however, because the symbol 11 is used as GP, DMRS is not mapped on the symbol, and thus only the symbol 1 and the symbol 6 are mapped on the DMRS in the slot. For the first slot of the time unit #2, the mapped DMRS is the same as that of the first slot of the time unit #1. For the second slot of the time unit #2, the DMRS symbol position determined according to the first DMRS pattern should be symbols 1, 6 and 11; however, because the symbols 1 and 11 are used as GP and the symbol 6 is used as AGC, DMRS is not mapped on these symbols, that is, the second slot does not include DMRS symbols.

For example, for the transmission manner illustrated in FIG. 48 (i.e., one PSSCH is transmitted in one time unit), although the transmission resources of the PSSCH span a plurality of slots, the DMRS symbol position in each slot may be determined separately based on the first DMRS pattern. Different time units may correspond to different first DMRS patterns. For example, intervals of DMRS symbols corresponding to the first DMRS pattern relative to the first PSSCH symbol in the time unit #1 are 1, 6 and 11; the number of symbols corresponding to the PSSCH in the second slot and the third slot of the time unit #1 is 14, and each slot may include 3 DMRS symbols. The number of symbols corresponding to the PSSCH in the first slot is 6, and thus the slot only includes one DMRS symbol. Similarly, the number of symbols corresponding to PSSCH in the fourth slot is also 6, and thus the slot also only includes one DMRS symbol. The intervals between the DMRS symbols corresponding to the first DMRS pattern and the first PSSCH symbol in the time unit #2 are 3 and 10; the number of symbols corresponding to PSSCH in the second slot is 14, which may include 2 DMRS symbols, located at the symbol 3 and the symbol 10 respectively. The number of symbols corresponding to PSSCH in the first slot is 6, and thus the slot includes only one DMRS symbol, and the DMRS symbol is located at the 12th symbol (i.e., symbol 11). The number of symbols corresponding to PSSCH in the third slot is 3. Based on the first DMRS pattern, the first DMRS symbol of the slot is located at the fourth symbol, that is, the symbol 3, and a position corresponding to the the fourth symbol is used as GP, and thus DMRS is not mapped. The SCI transmitted in the first time unit carries indication information indicating the first DMRS pattern.

Similar to FIG. 47B, in this example, the number of PSSCH symbols latter than the last DMRS in one slot may be compared with the first threshold value or the second threshold value to determine whether the last PSSCH symbol may be mapped to the DMRS, which will not be repeated here.

It should be noted that, in FIGS. 48 to 54, the DMRS symbol position (x, y) or (x, y, z) of the first DMRS pattern in the figure may represent a time offset of the DMRS symbol relative to the first PSSCH symbol.

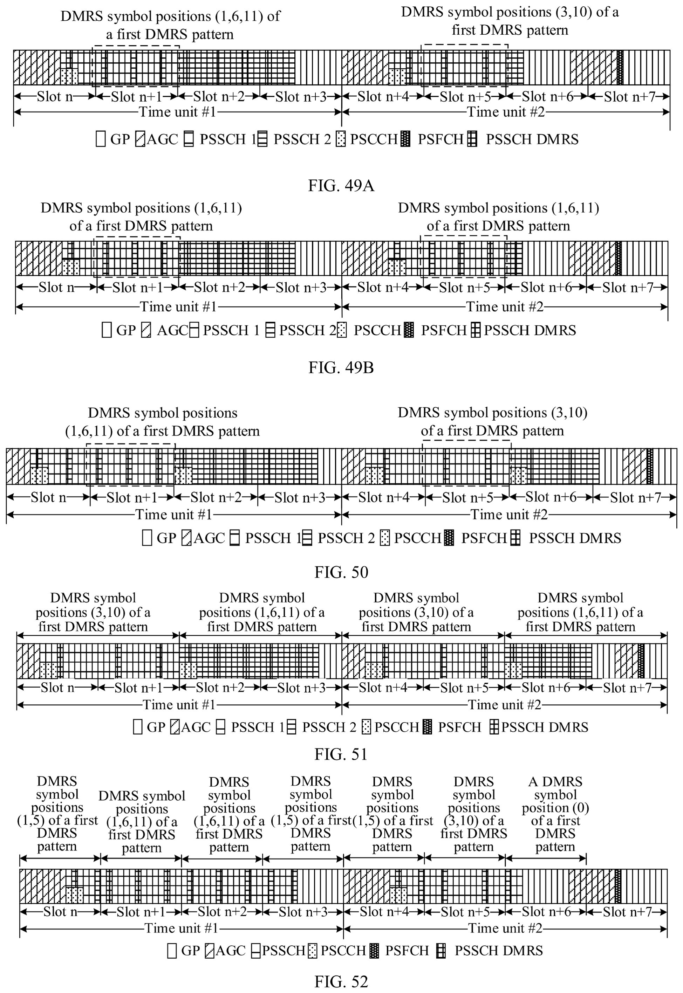

Taking the transmission of a plurality of PSSCHs in the first time unit and a plurality of PSSCHs correspond to the same TB as an example, several specific examples are given below in conjunction with FIG. 49.

For example, for the transmission manner illustrated in FIG. 49 (a plurality of PSSCHs are transmitted in one time unit, and the plurality of PSSCHs correspond to the same TB), a plurality of PSSCHs may be transmitted in one time unit, and the transmission resources of each PSSCH may span a plurality of slots. In the example of FIG. 49, the DMRS symbol position in each slot may be determined separately based on the first DMRS pattern. Different time units may correspond to different first DMRS patterns. For example, in FIG. 49A, intervals between the DMRS symbols corresponding to the first DMRS pattern and the first PSSCH symbol in the time unit #1 are 1, 6 and 11; the number of symbols corresponding to the PSSCH in the second slot and the third slot of the time unit #1 is 14, and each slot may include 3 DMRS symbols. In the time unit #1, the number of symbols corresponding to the PSSCH in the first slot is 6, including only one DMRS symbol. Similarly, the number of symbols corresponding to the PSSCH in the fourth slot is also 6, also including only one DMRS symbol. The intervals between the DMRS symbols corresponding to the first DMRS pattern and the first PSSCH symbol in the time unit #2 are 3 are 10; the number of symbols corresponding to PSSCH in the second slot is 14, and thus the slot may include 2 DMRS symbols, located at symbol 3 and symbol 10 respectively; the number of symbols corresponding to PSSCH in the first slot is 6, including only one DMRS symbol, located at symbol 12; the number of symbols corresponding to PSSCH in the third slot is 3, according to the first DMRS pattern, its first DMRS symbol is located at the fourth symbol, that is, the symbol 3, and its corresponding position is used as GP, and thus DMRS is not mapped. If the time unit #2 uses the same first DMRS pattern as that in the time unit #1, that is, intervals between the DMRS symbols and the first PSSCH symbol are 1, 6, or 11, there may be a DMRS symbol in the third slot of the time unit #2, as illustrated in FIG. 49B.

Since the PSSCH in one time unit transmits the same TB, the first time unit may include only one PSCCH, and the first DMRS pattern is indicated by the SCI carried by the PSCCH.

Taking the transmission of a plurality of PSSCHs in the first time unit, and a plurality of PSSCHs corresponding to different TBs as an example, a specific example is given below in conjunction with FIG. 50.

For example, for the transmission manner illustrated in FIG. 50 (a plurality of PSSCHs are transmitted in one time unit, and the plurality of PSSCHs correspond to different TBs), the transmission resources of each PSSCH may span a plurality of slots, and the DMRS symbol position in each slot may be determined based on the first DMRS pattern. Different time units may correspond to different first DMRS patterns. For example, in FIG. 50, intervals of the DMRS symbols corresponding to the first DMRS pattern relative to the first PSSCH symbol in the time unit #1 are 1, 6 and 11; the number of symbols corresponding to the PSSCH in the second slot and the third slot of the time unit #1 is 14, and each slot may include 3 DMRS symbols; the number of symbols corresponding to the PSSCH in the first slot is 10, and thus the slot only includes 2 DMRS symbols; similarly, the number of symbols corresponding to the PSSCH in the fourth slot is also 10, and thus the slot also only includes 2 DMRS symbols. The PSCCH associated with the PSSCH in the time unit #1 carries indication information for indicating the first DMRS pattern corresponding to the time unit #1. The intervals of the DMRS symbol corresponding to the first DMRS pattern relative to the first PSSCH symbol in the time unit #2 are 3 and 10; the number of symbols corresponding to PSSCH in the second slot and the third slot is 14, and thus the slot can only include 2 DMRS symbols, located at symbol 3 and symbol 10 respectively; the number of symbols corresponding to PSSCH in the first slot is 10, and thus the slot only includes one DMRS symbol, located at symbol 7; the number of symbols corresponding to PSSCH in the fourth slot is 1, and thus according to the first DMRS pattern, its first DMRS symbol is located at the fourth symbol of the slot, that is, the symbol 3. Since the symbol position of the fourth symbol is used as GP, DMRS is not mapped. The PSCCH associated with the PSSCH in the time unit #2 carries indication information for indicating the first DMRS pattern corresponding to the time unit #2.

The above description is mainly based on an example that each slot of one time unit corresponds to the same DMRS pattern. In other embodiments, different PSSCHs may correspond to different first DMRS patterns, or different slots may correspond to different first DMRS patterns. If the transmission resource of one PSSCH includes a plurality of slots, the plurality of slots may correspond to the same or different DMRS patterns. In this case, the SCI carried by the PSCCH transmitted simultaneously with the PSSCH carries indication information for indicating the first DMRS pattern. In a case where different slots of the PSSCH correspond to different first DMRS patterns, the indication information in the SCI includes a plurality of information fields, each of which corresponds to a respective different first DMRS pattern.

For example, for the transmission manner illustrated in FIG. 51 (a plurality of PSSCHs are transmitted in one time unit, and the plurality of PSSCHs correspond to different TBs), a plurality of PSSCHs may be transmitted in one time unit, the transmission resources of each PSSCH may span a plurality of slots, and different PSSCHs may correspond to different first DMRS patterns. In FIG. 51, the intervals between the DMRS symbols of the first DMRS pattern corresponding to PSSCH 1 and the first PSSCH symbol in the time unit #1 are 3 and 10; the number of symbols corresponding to PSSCH 1 in the first slot is 10, and thus the slot includes only 1 DMRS symbol; the number of symbols corresponding to PSSCH 1 in the second slot is 14, and thus the slot includes 2 DMRS symbols; the indication information in the PSCCH associated with the PSSCH 1 is used to indicate the first DMRS pattern. The intervals of the DMRS symbols of the first DMRS pattern corresponding to PSSCH 2 relative to the first PSSCH symbol in the time unit #1 are 1, 6 and 11; the transmission resources of the PSSCH 2 include 2 slots, where the number of symbols corresponding to the PSSCH 2 in the first slot is 14, and thus the slot includes 3 DMRS symbols; the number of symbols corresponding to the PSSCH 2 in the second slot is 10, and thus the slot includes 2 DMRS symbols; the indication information in the PSCCH associated with PSSCH 2 is used to indicate the first DMRS pattern. Similarly, the two PSSCHs in the time unit #2 also correspond to different first DMRS patterns. The DMRS symbol position of each PSSCH in each slot determined according to the first DMRS pattern is illustrated in FIG. 51, which will not be repeated here.

On the one hand, this example utilizes the DMRS pattern corresponding to the transmission of PSSCH based on a single slot as the first DMRS pattern to determine the DMRS symbol position corresponding to the PSSCH in each slot. In addition, different PSSCHs or different slots in one time unit may correspond to different first DMRS patterns. Therefore, a transmitting device may flexibly select respective DMRS pattern corresponding to each PSSCH according to the MCS or performance requirements of the TB to ensure the transmission performance of different transmission blocks.

Definition manner 2: the first number of symbols is the number of symbols available for PSSCH transmission occupied by the first PSSCH in one slot

The difference between Definition manner 2 and Definition manner 1 is that in Definition manner 1, in a case where the PSSCH is transmitted in a single slot, a PSSCH DMRS pattern corresponding to the number of symbols (or the maximum number of symbols, denoted by J1 below) available for PSSCH transmission in one slot is used as a candidate first DMRS pattern, and based on the time interval of the DMRS symbol determined by the first DMRS pattern relative to the first PSSCH symbol, the DMRS pattern corresponding to the PSSCH in a slot is determined. In a case where the number of PSSCH in a slot is less than J1, only a portion of the DMRS symbols corresponding to the first DMRS pattern may be mapped in the slot. In Definition manner 2, the number of symbols available for PSSCH transmission in one slot is J2 (the value range may be, for example, 1 to 14), and the PSSCH DMRS pattern corresponding to the number of symbols J2 is used as the candidate first DMRS pattern. Therefore, the PSSCH of each slot has its corresponding DMRS pattern (of course, some slots may not correspond to the DMRS pattern, such as slots with a smaller number of symbols may not correspond to the DMRS pattern). Furthermore, one or more DMRS patterns corresponding to the PSSCH may be indicated by indication information in the SCI associated with the PSSCH.

In some implementations, a value of the first number of symbols is one of one or plurality of candidate values, and each candidate value of at least a portion of the one or plurality of candidate values corresponds to one or more DMRS patterns.

For example, each candidate value of the one or plurality of candidate values corresponds to one or more DMRS patterns. As an example, the number of PSSCH symbols in one slot is J2, and the value range of J2 is 1 to 14. The respective DMRS pattern corresponding to each J2 value may be configured, so that for a specific J2 value, one or more DMRS patterns may be configured.

For another example, each candidate value of a portion of the plurality of candidate values corresponds to one or more DMRS patterns, and remaining candidate values of the plurality of candidate values other than the portion of the plurality of candidate values do not correspond to a DMRS pattern. As an example, the number of symbols available for transmitting the PSSCH in a slot is J2 (the value range of J2 may be 1 to 14, for example, it may be 13). In a case where a value of J2 is greater than or equal to G (a value of G may be 6), respective DMRS pattern corresponding to each J2 value is configured. For a specific J2 value, one or more DMRS patterns may be configured; in a case where the value of J2 is less than G, the DMRS pattern may not be configured. If the number of symbols available for transmitting the PSSCH in a slot is less than G, DMRS may not be mapped to the slot. In a case where the first DMRS pattern is indicated by SCI, the slot to which DMRS is not mapped may be represented by a specific value or index value; or, for the slot to which DMRS is not mapped, the corresponding information field in SCI may be empty, or the first DMRS pattern corresponding to the slot is not indicated.

Several examples are given below in conjunction with FIGS. 52 to 54.

For the transmission manner illustrated in FIG. 52 (one time unit is used to transmit one PSSCH), transmission resources of PSSCH span a plurality of slots, and the number of symbols available for transmitting the PSSCH in different slots is different. Therefore, the DMRS pattern corresponding to the slot (i.e., the first DMRS pattern) may be determined based on the number of symbols available for transmitting the PSSCH in the slot. For example, in the time unit #1, the number of symbols available for transmitting PSSCH in the first slot is 6. Assuming that the intervals of DMRS symbols in the DMRS pattern corresponding to the 6 symbols relative to the first PSSCH symbol are 1 and 5, it may be determined that positions of the two DMRS symbols in the slot are a symbol 9 and a symbol 13 respectively; the number of symbols available for PSSCH transmission in the second slot is 14. Assuming that the intervals of DMRS symbols in the DMRS pattern corresponding to the 14 symbols relative to the first PSSCH symbol are 1, 6 and 11, it may be determined that positions of the three DMRS symbols in the slot are symbols 1, 6 and 11 respectively; the number of symbols available for transmitting the PSSCH in the third slot is 14, and thus the same DMRS pattern as the second slot is used; the number of symbols available for transmitting the PSSCH in the fourth slot is 6. Assuming that the intervals of DMRS symbols in the DMRS pattern corresponding to the 6 symbols relative to the first PSSCH symbol are 1 and 5, it may be determined that positions of the two DMRS symbols in the slot are the symbol 1 and the symbol 5 respectively. In the time unit #2, the number of symbols available for transmitting the PSSCH in the first slot is 6. Assuming that the intervals of the DMRS symbols in the DMRS pattern corresponding to the 6 symbols relative to the first PSSCH symbol are 1 and 5, it may be determined that positions of the two DMRS symbols in the slot are symbols 9 and 13 respectively; the number of symbols available for transmitting the PSSCH in the second slot is 14. Assuming that the intervals of the DMRS symbols in the DMRS pattern corresponding to the 14 symbols relative to the first PSSCH symbol are 3 and 10, it may be determined that positions of the two DMRS symbols in the slot are symbols 3 and 10 respectively; the number of symbols available for transmitting the PSSCH in the third slot is 3. Assuming that the interval of the DMRS symbols in the DMRS pattern corresponding to the 3 symbols relative to the first PSSCH symbol is 0, the first symbol in the slot (i.e., symbol 0) is the DMRS symbol. Since only one PSCCH is transmitted in one time unit, the indication information carried in the SCI carried by the time unit may respectively indicate respective DMRS pattern corresponding to each slot of the PSSCH.

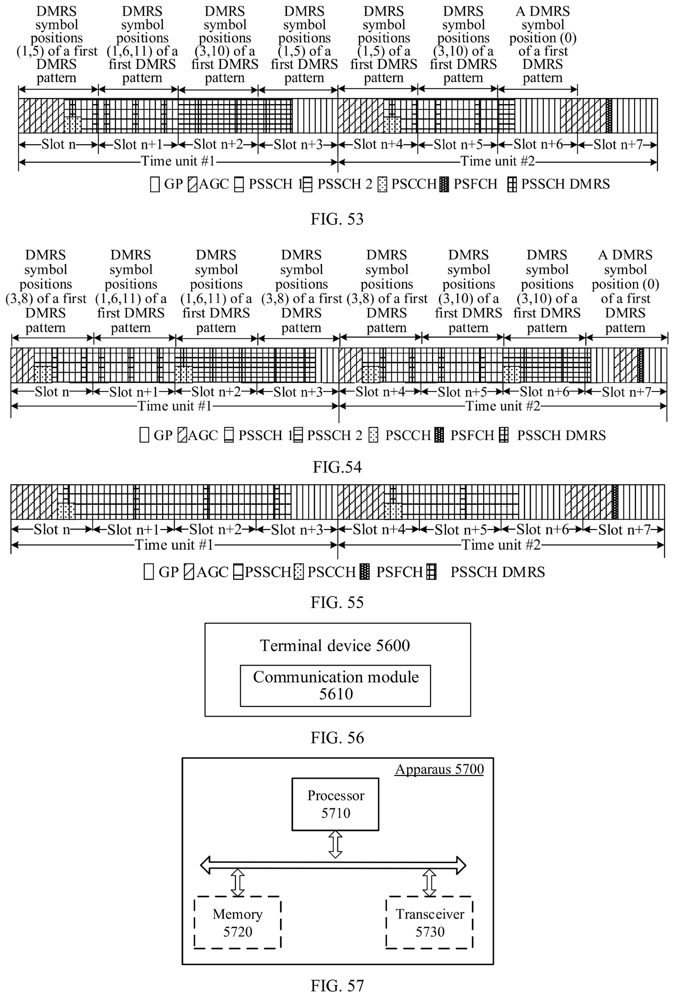

For the transmission manner illustrated in FIG. 53 (one time unit is used to transmit a plurality of PSSCHs, and the plurality of PSSCHs correspond to the same TB), the transmission resources of one PSSCH span a plurality of slots, and the number of symbols available for transmitting the PSSCH in different slots is different. Therefore, the DMRS pattern of each slot (i.e., the first DMRS pattern) may be determined based on the number of symbols available for transmitting the PSSCH in each slot. For example, in the time unit #1: the number of symbols available for transmitting the PSSCH in the first slot is 6. Assuming that the intervals of the DMRS symbols in the DMRS pattern corresponding to the 6 symbols relative to the first PSSCH symbol are 1 and 5, it may be determined that positions of the two DMRS symbols in the slot are a symbol 9 and a symbol 13 respectively; the number of symbols available for transmitting the PSSCH in the second slot is 14. Assuming that the intervals of the DMRS symbols in the DMRS pattern corresponding to the 14 symbols relative to the first PSSCH symbol are 1, 6 and 11, it may be determined that positions of the three DMRS symbols in the slot are respectively symbols 1, 6 and 11; the number of symbols available for transmitting the PSSCH in the third slot is 14. Assuming that the intervals of the DMRS symbols in the DMRS pattern corresponding to the 14 symbols relative to the first PSSCH symbol are 3 and 10, it may be determined that positions of the two DMRS symbols in the slot are the symbol 3 and the symbol 10 respectively; the number of symbols available for transmitting the PSSCH in the fourth slot is 6. Assuming that the intervals of the DMRS symbols in the DMRS pattern corresponding to the 6 symbols relative to the first PSSCH symbol are 1 and 5, it may be determined that positions of the two DMRS symbols in the slot are the symbol 1 and the symbol 5 respectively. In the time unit #2, the number of symbols available for transmitting PSSCH in the first slot is 6. Assuming that the intervals of the DMRS symbols in the DMRS pattern corresponding to the 6 symbols relative to the first PSSCH symbol are 1 and 5, it may be determined that positions of the two DMRS symbols in the slot are symbols 9 and 13 respectively; the number of symbols available for transmitting PSSCH in the second slot is 14. Assuming that the intervals of the DMRS symbols in the DMRS pattern corresponding to the 14 symbols relative to the first PSSCH symbol are 3 and 10, it may be determined that positions of the two DMRS symbols in the slot are symbols 3 and 10 respectively; the number of symbols available for transmitting PSSCH in the third slot is 3. Assuming that the interval of the DMRS symbol in the DMRS pattern corresponding to the 3 symbols relative to the first PSSCH symbol is 0, the first symbol in the slot (i.e., symbol 0) is the DMRS symbol. Since only one TB is transmitted in one time unit, only one PSCCH may be used in the time unit, and the indication information carried in the SCI carried by the PSCCH respectively indicates respective DMRS pattern corresponding to each slot of the time unit.

For the transmission manner illustrated in FIG. 54 (one time unit is used to transmit a plurality of PSSCHs, and the plurality of PSSCHs correspond to different TBs), one time unit transmits 2 PSSCHs, each PSSCH transmits different TBs, and each PSSCH has its corresponding PSCCH. The transmission resources of a PSSCH span a plurality of slots. The number of symbols available for transmitting the PSSCH in different slots is different. Therefore, respective DMRS pattern corresponding to each slot may be determined based on the number of symbols available for transmitting the PSSCH in each slot. For example, in the time unit #1, the number of symbols available for transmitting the PSSCH included in the first slot is 10. Assuming that the intervals of the DMRS symbols in the DMRS pattern corresponding to the 10 symbols relative to the first PSSCH symbol are 3 and 8, it may be determined that the positions of the two DMRS symbols in the slot are a symbol 7 and a symbol 12 respectively; the number of symbols available for transmitting the PSSCH included in the second slot is 14. Assuming that the intervals of the DMRS symbols in the DMRS pattern corresponding to the 14 symbols relative to the first PSSCH symbol are 1, 6 and 11, it may be determined that positions of the three DMRS symbols in the slot are symbols 1, 6 and 11 respectively; the first two slots transmit PSSCH 1, and the PSSCH 1 indicates the DMRS patterns of the two slots respectively; the number of symbols available for transmitting the PSSCH included in the third slot is 14. Assuming that the intervals of DMRS symbols in the DMRS pattern corresponding to the 14 symbols relative to the first PSSCH symbol are 1, 6 and 11, it may be determined that the positions of the three DMRS symbols in the slot are symbols 1, 6 and 11 respectively; the number of symbols available for transmitting the PSSCH included in the fourth slot is 10. Assuming that the intervals of DMRS symbols in the DMRS pattern corresponding to the 10 symbols relative to the first PSSCH symbol are 3 and 8, it may be determined that positions of the two DMRS symbols in the slot are the symbols 3 and symbol 8 respectively; the last two slots transmit PSSCH 2, and the SCI in the PSCCH corresponding to the PSSCH 2 indicates the DMRS patterns of the two slots respectively. In the time unit #2, the number of symbols available for transmitting the PSSCH in the first slot is 10. Assuming that intervals of the DMRS symbols in the DMRS pattern corresponding to the 10 symbols relative to the first PSSCH symbol are 3 and 8, it may be determined that positions of the two DMRS symbols in the slot are a symbol 7 and a symbol 12 respectively; the number of symbols available for transmitting the PSSCH in the second slot is 14. Assuming that the intervals of the DMRS symbols in the DMRS pattern corresponding to the 14 symbols relative to the first PSSCH symbol are 3 and 10, it may be determined that positions of the two DMRS symbols in the slot are the symbols 3 and 10 respectively; the first two slots transmit the PSSCH 1, and the PSSCH 1 indicates the DMRS patterns of the two slots respectively; the number of symbols available for transmitting the PSSCH included in the third slot is 14. Assuming that the intervals of the DMRS symbols in the DMRS pattern corresponding to the 14 symbols relative to the first PSSCH symbol are 3 and 10, it may be determined that positions of the 2 DMRS symbols in the slot are symbols 3 and 10 respectively; the number of symbols available for transmitting the PSSCH included in the fourth slot is 1. Assuming that the interval of the DMRS symbol in the DMRS pattern corresponding to the 1 symbol relative to the first PSSCH symbol is 0, the first symbol in the slot (i.e., symbol 0) is the DMRS symbol; the last two slots transmit the PSSCH 2, and the SCI in the PSCCH corresponding to the PSSCH 2 indicates the DMRS patterns of the two slots respectively.

The DMRS pattern of one slot is used as the first DMRS pattern, and the DMRS pattern corresponding to the number of symbols available for transmitting the PSSCH in one slot in multi-slot transmission is determined based on the number of symbols available for transmitting the PSSCH in one slot in multi-slot transmission, so that the corresponding first DMRS pattern may be selected according to the number of symbols available for transmitting PSSCH in different slots. Different PSSCHs or different slots in one time unit may correspond to different first DMRS patterns. A transmitting device may flexibly select respective DMRS pattern corresponding to each PSSCH according to the MCS or performance requirements of the TB to ensure the transmission performance of different TBs.

The previous content describes in detail the meaning and implementation of the correspondence between the first DMRS pattern and the first number of symbols. In addition, a first DMRS may correspond to a first sidelink subcarrier spacing, which is described in detail below.

In some implementations, a first DMRS pattern corresponds to a first sidelink subcarrier spacing. The first sidelink subcarrier spacing is different from a second sidelink subcarrier spacing (the second sidelink subcarrier spacing corresponds to a first time unit). The first sidelink subcarrier spacing may be referred to as a reference subcarrier spacing. The first sidelink subcarrier spacing may be, for example, 15 kHz, 30 kHz, 60 kHz or 120 kHz. The first DMRS pattern corresponding to the first sidelink subcarrier spacing may be, for example, a DMRS pattern provided by the related art illustrated in Table 1.

In some implementations, the DMRS pattern for the first PSSCH is determined based on the following information: the first DMRS pattern; the first sidelink subcarrier spacing; and the second sidelink subcarrier spacing (it should be understood that the first sidelink subcarrier and the second sidelink subcarrier may be the same as or different from the first sidelink subcarrier and the second sidelink subcarrier mentioned in Embodiment 1). The second sidelink subcarrier spacing may refer to a sidelink subcarrier spacing corresponding to a first time unit. The second sidelink subcarrier spacing may be, for example, 480 kHz or 960 kHz.

Furthermore, in some implementations, the DMRS pattern for the first PSSCH is determined based on the following information: the first DMRS pattern; and a proportional relationship between the second sidelink subcarrier spacing and the first sidelink subcarrier spacing. For example, based on a PSSCH DMRS pattern provided by the related art (e.g., the DMRS pattern illustrated in Table 1), an interval between adjacent DMRS symbols may be proportionally expanded according to the proportional relationship between the second sidelink subcarrier spacing and the first sidelink subcarrier, thereby determining the DMRS pattern corresponding to the second sidelink subcarrier spacing.

For example, the first sidelink subcarrier spacing is 120 kHz subcarrier spacing, and the second sidelink subcarrier spacing is 480 kHz or 960 kHz subcarrier spacing. If an interval between two adjacent DMRS symbols in the DMRS pattern is D under the 120 kHz subcarrier spacing, the symbol interval E between two adjacent DMRS symbols under the 480 kHz or 960 kHz subcarrier spacing may be determined according to the following equation:

$$\mathrm{E} = 2^{\mu_{SL} - \mu_{ref}} \cdot D \cdot k$$

Herein, a value of a parameter k may include one or more of the following candidate values: 0.125, 0.25, 0.5, 1, 2, 4, 8, or the value of the parameter k is related to the second sidelink subcarrier spacing; $\mu_{SL}$ may be determined based on 480 kHz or 960 kHz subcarrier spacing, $\mu_{ref}$ may be determined based on 120 kHz subcarrier spacing, the relationship between the values of $\mu_{SL}$ and $\mu_{ref}$ and the sidelink subcarrier spacing is illustrated in Table 6 above.

For example, the first DMRS pattern belongs to the DMRS pattern illustrated in Table 1. According to Table 1, a number of PSSCH symbols is 13, a number of PSCCH symbols is 3, and in a case where one slot includes 4 DMRS symbols, a symbol interval between adjacent DMRS symbols is 3. If the second sidelink subcarrier spacing is 480 kHz, the first subcarrier spacing is 120 kHz, and k is 1, according to the above equation, it may be determined that in a case where the subcarrier spacing is 480 kHz, an interval between two adjacent DMRS symbols is 12. A time domain position corresponding to the DMRS symbol of the PSSCH may be determined based on the DMRS pattern.

As illustrated in FIG. 55, one time unit is used to transmit a PSSCH, the interval between the first DMRS and the first symbol of the PSSCH is 1, and the interval between adjacent DMRS symbols is 12. FIG. 55 illustrates the DMRS pattern corresponding to the PSSCH.

Example 6.2: a DMRS pattern of a first PSCCH

In some implementations, all symbols corresponding to the first PSCCH are used to map a DMRS.

In some implementations, a portion of symbols corresponding to the first PSCCH are used to map the DMRS. Remaining symbols corresponding to the first PSCCH may not be used to map the DMRS.

In some implementations, a symbol corresponding to the first PSCCH and used to map the DMRS may be the first symbol of the first PSCCH.

In some implementations, a DMRS for the first PSCCH occupies one or more PRBs in frequency domain. Taking a PRB (hereinafter referred to as a second PRB) of the one or more PRBs as an example, every H2 subcarriers in the second PRB are used to map the DMRS, and H2 is a positive integer greater than or equal to 1. H2 may be, for example, equal to 1 or 2. If H2 is equal to 1, it means that all subcarriers corresponding to the first PSCCH carry the DMRS. If H2 is equal to 2, it means that the adjacent DMRS subcarrier spacing in the subcarrier corresponding to the first PSCCH is 2. For example, the DMRS may be mapped to an even-numbered subcarrier, or the DMRS may be mapped to an odd-numbered subcarrier.

It should be noted that the above embodiments are mainly described using the example of one slot including 14 symbols (corresponding to a normal cyclic prefix), but the embodiments of the present disclosure are also applicable to the case where one slot includes 12 OFDM symbols (corresponding to an extended cyclic prefix).

It should also be noted that the "symbol" mentioned in the above embodiments may also be referred to as a "time domain symbol" or a "sidelink symbol". The "symbol" mentioned in various embodiments of the present disclosure may refer to, for example, an OFDM symbol.

It should also be noted that, in the various embodiments regarding PSFCH, the description is made by taking PSFCH carrying "sidelink feedback information" as an example. It should be understood that the PSFCH mentioned in the embodiments of the present disclosure may also be used to carry conflict indication information. That is, the sidelink feedback information may be replaced by the conflict indication information.

It should also be noted that the earlier than and latter than relationship between symbols or time domain resources provided in the embodiments of the present disclosure refers to the earlier than and latter than relationship in time domain or the early and late relationship in time. For example, a symbol 1 is earlier than a symbol 2, which can be understood as the time corresponding to the symbol 1 is earlier than the time corresponding to the symbol 2.

It should also be noted that PSSCH 1 and PSSCH 2 in FIG. 23 are only used to distinguish two different PSSCHs transmitted in one time unit, and PSSCHs transmitted in different time units are generally different. For example, PSSCH 1 in the time unit #1 and PSSCH 1 transmitted in the time unit #2 are different PSSCHs; similarly, PSSCH 2 in the time unit #1 and PSSCH 2 transmitted in the time unit #2 are different PSSCHs. In addition to FIG. 23, the meaning of PSSCH in other figures including a plurality of time units is similar. Even if a plurality of PSSCHs in different time units use the same number, they generally represent different PSSCHs, such as the PSSCHs in FIGS. 24 to 31.

Method embodiments of the present disclosure are described in detail above in conjunction with FIGS. 1 to 55, and apparatus embodiments of the present disclosure are described in detail below in conjunction with FIGS. 56 to 57. It should be understood that the description of the method embodiments and the description of the apparatus embodiments correspond to each other, so that the parts not described in detail can be found in the above method embodiments.

FIG. 56 is a schematic diagram of a structure of a terminal device provided in embodiments of the present disclosure. The terminal device 5600 may be, for example, a transmitting device or a receiving device. The terminal device 5600 may be, for example, the first terminal device. The terminal device 5600 may include a communication module 5610. The communication module 5610 may be used to perform sidelink transmission or sidelink reception in a first time unit. The first time unit includes M consecutive slots, and M is a positive integer greater than 1.

In some implementations, a value of M is determined based on one or more of the following: information predefined in a protocol; resource pool configuration information; and BWP configuration information.

In some implementations, the M slots are M consecutive physical slots; or the M slots are consecutive slots available for sidelink transmission.

In some implementations, the first time unit includes a first guard symbol, the first guard symbol includes B consecutive symbols, and the B symbols are the last B symbols in the first time unit, and B is a positive integer greater than 1.

In some implementations, if the first time unit includes a first time domain resource for transmitting a physical sidelink feedback channel (PSFCH), the first time unit includes second guard symbols, the second guard symbols include B consecutive symbols, the B symbols in the second guard symbols are earlier than the first time domain resource, and B is a positive integer greater than 1.

In some implementations, a value of B is equal to 4; or the value of B is equal to 8.

In some implementations, the value of B is equal to 4, and a sidelink subcarrier spacing corresponding to the first time unit is 480 kHz; or the value of B is equal to 8, and the sidelink subcarrier spacing corresponding to the first time unit is 960 kHz.

In some implementations, a value of B is determined based on one or more of the following information: information predefined in a protocol; resource pool configuration information; and sidelink BWP configuration information.

In some implementations, the resource pool configuration information or the sidelink BWP configuration information includes first indication information, and the value of B is determined based on the first indication information; where the first indication information is used to indicate one or more of the following: the value of B; a time domain position of the first symbol available for sidelink transmission in one slot or time unit; a length or number of symbols available for sidelink transmission in one time unit; and a number of slots included in one time unit; where one time unit includes M consecutive slots.

In some implementations, the value of B is determined based on a first sidelink subcarrier spacing and a second sidelink subcarrier spacing; where the first sidelink subcarrier spacing is determined based on sidelink BWP configuration information, the sidelink BWP configuration information is used to configure a BWP corresponding to the first time unit, and the second subcarrier spacing is determined based on information predefined in a protocol, resource pool configuration information or sidelink BWP configuration information.

In some implementations, the second subcarrier spacing is 120 kHz.

In some implementations, the first time unit includes two adjacent slots, a third guard symbol is set between symbols used for sidelink transmission in the two slots, and the third guard symbol includes C symbols, and C is a positive integer greater than or equal to 1.

In some implementations, a value of C is 1 or 2.

In some implementations, the third guard symbol corresponds to the last C symbols in the previous slot of the two slots.

In some implementations, a value of C is determined based on one or more of the following: information predefined in a protocol; resource pool configuration information; and sidelink BWP configuration information.

In some implementations, if the first time unit is used to transmit a plurality of physical sidelink shared channels (PSSCHs), a fourth guard symbol is set between transmission resources of two adjacent PSSCHs of the plurality of PSSCHs, and the fourth guard symbol includes D symbols, where D is a positive integer greater than or equal to 1.

In some implementations, a value of D is 1 or 2.

In some implementations, the fourth guard symbol corresponds to the last D symbols in the last slot of slots occupied by the previous PSSCH of the two PSSCHs.

In some implementations, a value of D is determined based on one or more of the following: information predefined in a protocol; resource pool configuration information; and sidelink BWP configuration information.

In some implementations, at least one of the M slots does not include a guard symbol; and/or the last slot of the M slots includes a guard symbol, and remaining slots of the M slots other than the last slot do not include a guard symbol; and/or, if the first time unit includes a time domain resource for transmitting a PSFCH, the last slot and/or a second last slot of the M slots includes a guard symbol; and/or, a guard symbol is set between symbols used for sidelink transmission in adjacent slots of the M slots.

In some implementations, the first time unit includes second time domain resources for transmitting a physical sidelink control channel (PSCCH), and a starting symbol of the second time domain resource is an (A+1)-th symbol of the first time unit, where A is a positive integer greater than 1.

In some implementations, a PSCCH occupies Q physical resource blocks (PRBs) in frequency domain, the PSCCH is used to schedule a PSSCH, and a frequency domain starting positions of the Q PRBs is the same as a frequency domain starting position of the PSSCH, and Q is a positive integer greater than or equal to 1.

In some implementations, a value of Q is determined based on one or more of the following: information predefined in a protocol; resource pool configuration information; and sidelink BWP configuration information.

In some implementations, the first time unit includes third time domain resources for transmitting a PSSCH, and a starting symbol of the third time domain resources is an (A+1)-th symbol of the first time unit, where A is a positive integer greater than 1.

In some implementations, if the first time unit does not include a PSFCH transmission resource, an ending symbol of the third time domain resources is a symbol preceding a symbol corresponding to a first guard symbol; or if the first time unit includes a PSFCH transmission resource, an ending symbol of the third time domain resources is a symbol preceding a symbol corresponding to a second guard symbol; where the first guard symbol includes the last B symbols in the first time unit, and the second guard symbol includes B symbols earlier than PSFCH transmission resources, and B is a positive integer greater than 1.

In some implementations, a value of A is determined based on one or more of the following information: information predefined in a protocol; resource pool configuration information; and sidelink BWP configuration information.

In some implementations, the resource pool configuration information or the sidelink BWP configuration information includes second indication information, and a value of A is determined based on the second indication information; where the second indication information is used to indicate one or more of the following: the value of A; a time domain position of the first symbol available for transmitting a PSSCH in one time unit; a time domain position of the first symbol available for transmitting a PSCCH in one time unit; and a time domain position of the first symbol available for sidelink transmission in one slot or time unit; where one time unit includes M consecutive slots.

In some implementations, a value of A is determined based on a third sidelink subcarrier spacing and a fourth sidelink subcarrier spacing; where the third sidelink subcarrier spacing is determined based on sidelink BWP configuration information, the sidelink BWP configuration information is used to configure a BWP corresponding to the first time unit, and the fourth subcarrier spacing is determined based on information predefined in a protocol, resource pool configuration information or sidelink BWP configuration information.

In some implementations, the fourth subcarrier spacing is 120 kHz.

In some implementations, a value of A is equal to 4; or, the value of A is equal to 8.

In some implementations, a value of A is equal to 4, and a sidelink subcarrier spacing corresponding to the first time unit is 480 kHz; or a value of A is equal to 8, and a sidelink subcarrier spacing corresponding to the first time unit is 960 kHz.

In some implementations, data transmitted in the first A symbols in the first time unit are repeated data of data transmitted in a target symbol of the first time unit; where the target symbol includes one or more symbols of remaining symbols in the first time unit other than the first A symbols, and A is a positive integer greater than 1.

In some implementations, the target symbol is one of the following: an (A+1)-th symbol to a 2A-th symbol in the first time unit; and an (A+1)-th symbol in the first time unit.

In some implementations, the first time unit includes fourth time domain resources for transmitting a PSFCH, the fourth time domain resources include K symbols, and K is a positive integer greater than 1.

In some implementations, a value of K is determined based on one or more of the following: information predefined in a protocol; resource pool configuration information; and sidelink BWP configuration information.

In some implementations, the fourth time domain resources are located in the first slot of the first time unit or the last slot of the first time unit.

In some implementations, the K symbols include K1 symbols and K2 symbols, the K1 symbols are used to transmit the PSFCH, and data transmitted in the K2 symbols are repeated data of data transmitted in the K1 symbols, where K1 and K2 are positive integers, and K is equal to a sum of K1 and K2.

In some implementations, a value of K1 or K2 is determined based on one or more of the following: information predefined in a protocol; resource pool configuration information; and sidelink BWP configuration information.

In some implementations, K1 is equal to 1, K2 is equal to A; or K1 is equal to A, K2 is equal to A; where A is a positive integer greater than 1, and a value of A is determined based on a time domain position of the first symbol corresponding to transmission resources of the PSSCH in the first time unit.

In some implementations, if K1 is greater than 1, each of the K1 symbols is used to transmit a PSFCH.

In some implementations, if K1 is equal to 1, data transmitted in each symbol of the K2 symbols is repeated data of the data transmitted in the K1 symbols; or, if K1 is greater than 1, data transmitted in every L symbols from an end to a start of the K2 symbols are repeated data of the data transmitted in the K1 symbols; or if K1 is greater than 1, data transmitted in every L symbols from the start to the end of the K2 symbols are repeated data of the data transmitted in the K1 symbols; where L is equal to K1.

In some implementations, the PSFCH occupies X PRBs in the frequency domain, and X is a positive integer greater than or equal to 1.

In some implementations, in a case where X is greater than 1, sidelink feedback information transmitted over the PSFCH is carried in a first sequence, a length of the first sequence is equal to T, and the first sequence is mapped to one PRB of the X PRBs, and data transmitted over remaining PRBs of the X PRBs other than the one PRB is determined based on the first sequence; or in a case where X is greater than 1, sidelink feedback information transmitted over the PSFCH is carried in a second sequence, a length of the second sequence is determined based on a value of X multiplied by T, and the second sequence is mapped to all or a portion of the subcarriers corresponding to the X PRBs; where T is equal to the number of subcarriers included in one PRB.

In some implementations, the first time unit includes a transmission resource for first stage sidelink control information (SCI), the first stage SCI includes an information field for indicating time domain resource assignment, a value of the information field for indicating time domain resource assignment is determined based on time offsets of remaining (W-1) transmission resources of W transmission resources other than the first transmission resource relative to the first transmission resource, and the time offsets are represented based on a number of time units; where a value of W is determined based on a number of transmission resources indicated by the first stage SCI, and one time unit includes M consecutive slots.

In some implementations, sidelink transmission resources corresponding to sidelink transmission or sidelink reception are determined based on first DCI, and the first DCI includes third indication information; where the third indication information is used to indicate one of the following: a time interval between reception of the first DCI and a sidelink transmission resource; a time interval between a slot in which the first DCI is located and a first time unit in which a sidelink transmission resource is located; and a time interval between start time of a downlink slot carrying the first DCI and start time of a sidelink transmission resource; where a time interval is represented based on a number of time units, and one time unit includes M consecutive slots.

In some implementations, the terminal device also includes: a determination module, configured to determine a first reservation period based on one or more of the following: a second reservation period indicated by indication information in SCI; and a number of time units in a resource pool; where the first reservation period is represented based on the number of time units, the second reservation period is represented based on milliseconds, and one time unit includes M consecutive slots.

In some implementations, the first reservation period $P'_{\text{rsvp}}$ satisfies the following equation:

$$P'_{\text{rsvp}} = \left\lceil \frac{T'_{max}}{10240\ ms} \times P_{\text{rsvp}} \right\rceil$$ , where $P_{\text{rsvp}}$ represents the second reservation period, and $T'_{max}$ represents the number of time units included in a resource pool during 10240ms.

In some implementations, a period of PSFCHs is represented based on a number of time units; where one time unit includes M consecutive slots.

In some implementations, the period of PSFCHs is indicated based on fourth indication information, and the fourth indication information belongs to resource pool configuration information.

In some implementations, the first time unit is used to transmit a PSSCH.

In some implementations, the first time unit is also used to transmit a PSCCH and/or a second stage SCI.

In some implementations, the second stage SCI is mapped starting from the first physical sidelink shared channel demodulation reference signal (PSSCH DMRS) symbol of the first time unit; or if the first PSSCH DMRS symbol of the first time unit does not include a subcarrier available for mapping the second stage SCI, the second stage SCI is mapped starting from the next symbol of the first PSSCH DMRS symbol; or the second stage SCI is mapped starting from the first symbol corresponding to the PSSCH transmission resource in the first time unit; or the second stage SCI is mapped starting from the first symbol corresponding to the PSCCH transmission resource in the first time unit.

In some implementations, the first time unit is used to transmit R PSSCHs, and R is a positive integer greater than 1.

In some implementations, the R PSSCHs are used to transmit the same TB.

In some implementations, the R PSSCHs correspond to R redundancy versions respectively.

In some implementations, the R redundancy versions are determined based on fifth indication information carried in the SCI, and the fifth indication information is used to indicate one of the following: the first redundant version of the R redundant versions; and each redundant version of the R redundant versions.

In some implementations, the first time unit is also used to transmit a PSCCH and a second stage SCI.

In some implementations, the second stage SCI is mapped starting from the first PSSCH DMRS symbol of the first time unit; or if the first PSSCH DMRS symbol of the first time unit does not include a subcarrier available for mapping the second stage SCI, the second stage SCI is mapped starting from the next symbol of the first PSSCH DMRS symbol; or the second stage SCI is mapped starting from the first symbol corresponding to the PSSCH transmission resource in the first time unit; or the second stage SCI is mapped starting from the first symbol corresponding to the PSCCH transmission resource in the first time unit.

In some implementations, the R PSSCHs correspond to the same hybrid automatic repeat request (HARQ) process.

In some implementations, the R PSSCHs are used to transmit different TBs.

In some implementations, the R PSSCHs correspond to the same receiving device; or, the R PSSCHs do not correspond to the same receiving device; or, the R PSSCHs correspond to the same spatial domain transmission filter; or, the R PSSCHs do not correspond to the same spatial domain transmission filter.

In some implementations, the first time unit is further used to transmit R PSCCHs and R second stage SCIs, the R PSCCHs correspond one-to-one with the R PSSCHs, and the R second stage SCIs correspond one-to-one with the R PSSCHs.

In some implementations, respective second stage SCI corresponding to each of the R PSSCHs is mapped starting from respective first PSSCH DMRS symbol corresponding to each PSSCH; or, respective second stage SCI corresponding to each of the R PSSCHs is mapped starting from respective first symbol corresponding to each PSSCH; or, respective second stage SCI corresponding to each of the R PSSCHs is mapped starting from the first symbol of the target PSCCH, where the target PSCCH corresponds to each PSSCH.

In some implementations, the first time unit is also used to transmit a PSCCH and a second stage SCI.

In some implementations, the second stage SCI includes a first information field, the first information field includes R sub-information fields, and the R sub-information fields are respectively used to indicate HARQ process numbers of the R PSSCHs.

In some implementations, the second stage SCI includes a second information field, the second information field includes R sub-information fields, and the R sub-information fields are respectively used to indicate whether the data transmitted by the R PSSCHs are new data.

In some implementations, the second stage SCI includes a third information field, the third information field includes R sub-information fields, and the R sub-information fields are respectively used to indicate redundant versions of data transmitted by the R PSSCHs.

In some implementations, the second stage SCI includes a fourth information field and a fifth information field, the fourth information field is used to indicate a source ID, the fifth information field is used to indicate a destination ID, and both the source ID and the destination ID are determined based on a layer-2 ID.

In some implementations, if the R PSSCHs do not correspond to the same receiving device, the fifth information field includes R sub-information fields, and the R sub-information fields are respectively used to indicate destination IDs corresponding to the R PSSCHs.

In some implementations, the second stage SCI includes a sixth information field, the sixth information field is used to indicate activation or deactivation of sidelink feedback, and the indication of the sixth information field is applicable to the R PSSCHs; or, the second stage SCI includes a sixth information field, the sixth information field includes R sub-information fields, and the R sub-information fields are respectively used to indicate whether the R PSSCHs activate or deactivate sidelink feedback.

In some implementations, the second stage SCI includes a seventh information field, and the seventh information field is used to indicate a cast type, and the indication of the seventh information field is applicable to the R PSSCHs; or, the second stage SCI includes a seventh information field, and the seventh information field includes R sub-information fields, and the R sub-information fields are respectively used to indicate cast types corresponding to the R PSSCHs.

In some implementations, the second stage SCI includes an eighth information field, and the eighth information field is used to indicate whether the receiving device needs to report channel state information (CSI); in a case where the value of the eighth information field is the first value, one of the following is satisfied: the transmission resources of the R PSSCHs all carry CSI-RS; the target PSSCH of the R PSSCHs carries CSI-RS; where the target PSSCH is the first PSSCH of the R PSSCHs, the last PSSCH, or a PSSCH determined based on configuration information.

In some implementations, the second stage SCI includes a ninth information field, and the ninth information field is used to carry a transmission configuration indication (TCI) state indication; where the ninth information field satisfies one of the following: the indication of the ninth information field is applicable to the R PSSCHs; if the R PSSCHs do not correspond to the same receiving device or the R PSSCHs do not correspond to the same spatial domain transmission filter, then the ninth information field includes R sub-information fields, and the R sub-information fields are respectively used to indicate the TCI state corresponding to the R PSSCHs; and if the R PSSCHs do not correspond to the same receiving device or the R PSSCHs do not correspond to the same spatial domain transmission filter, the ninth information field includes R sub-information fields, and the R sub-information fields are respectively used to determine the spatial domain transmission filter or spatial domain reception filter corresponding to the R PSSCHs.

In some implementations, the first time unit is also used to transmit a PSCCH and R second stage SCIs, and the R second stage SCIs correspond one-to-one with the R PSSCHs.

In some implementations, respective second stage SCI corresponding to each PSSCH in the R second stage SCIs is mapped starting from respective first PSSCH DMRS symbol corresponding to each PSSCH; or, respective second stage SCI corresponding to each PSSCH in the R PSSCHs is mapped starting from respective first symbol corresponding to each PSSCH.

In some implementations, the first stage SCI transmitted over the PSCCH includes a tenth information field, the tenth information field is used to indicate the SCI format of the second stage SCI, and the R second stage SCIs use the same or different SCI formats.

In some implementations, the first stage SCI transmitted over the PSCCH includes an eleventh information field, and the eleventh information field is used to carry priority indication information, and a value of the eleventh information field is determined based on the highest priority or the lowest priority of priorities corresponding to the R PSSCHs; or, the first stage SCI in the PSCCH includes an eleventh information field, and the eleventh information field includes R sub-information fields, and the R sub-information fields are respectively used to indicate the priorities corresponding to the R PSSCHs.

In some implementations, the first stage SCI transmitted over the PSCCH includes a twelfth information field, and the twelfth information field is used to carry a beta offset indicator, and the beta offset indicator is applicable to the R second stage SCIs.

In some implementations, the first stage SCI transmitted over the PSCCH includes a thirteenth information field, where the thirteenth information field is used to indicate the number of DMRS ports, where the number of DMRS ports is applicable to the R PSSCHs.

In some implementations, the first stage SCI transmitted over the PSCCH includes a fourteenth information field, and the fourteenth information field is used to indicate a modulation and coding scheme (MCS), and the R PSSCHs all use the MCS.

In some implementations, the first stage SCI transmitted over the PSCCH includes a fifteenth information field, and the fifteenth information field is used to indicate an MCS table, and the R PSSCHs all use the MCS table.

In some implementations, the R PSSCHs include a first PSSCH, and the time domain resources of the first PSSCH include S slots, where S is determined based on the quotient of M and R.

In some implementations, S is equal to M/R-T, where T is equal to 0, 1 or 2.

In some implementations, if the first PSSCH corresponds to the first R-1 PSSCHs of the R PSSCHs, T is equal to 0; and/or if the first PSSCH corresponds to the last PSSCH of the R PSSCHs, T is equal to 1 or 2.

In some implementations, the value of R is determined based on information predefined in a protocol, preconfigured information, or configuration information from a network device.

In some implementations, if the number of symbols available for transmitting PSSCH in a first slot is less than a first threshold value, one of the following is satisfied: the first slot is not used to transmit PSSCH and/or second stage SCI; the data of PSSCH in the first slot is determined based on redundant bits, filling bits or random bits; and the data of PSSCH in the first slot is repeated data of the data in the previous slot of the first slot; where the first slot is any one of the S slots or the last slot, and the S slots are used to transmit the first PSSCH of the R PSSCHs.

In some implementations, the first threshold is determined based on information predefined in a protocol, preconfigured information, or configuration information from a network device.

In some implementations, the TBS corresponding to the PSSCH in the first time unit is determined based on one or more of the following: a first parameter, determined based on the number of REs; a second parameter, determined based on the number of PRBs; a third parameter, determined based on the transmission resources occupied by the PSCCH; and a fourth parameter, determined based on the transmission resources occupied by the second stage SCI.

In some implementations, the first parameter is determined based on one or more of the following: a fifth parameter, determined based on the number of symbols available for transmitting PSSCH; a sixth parameter, determined based on the number of subcarriers in a PRB; a seventh parameter, determined based on the overhead in one PRB or a frequency domain range corresponding to one PRB; and an eighth parameter, determined based on the number of REs occupied by DMRS in one PRB or a frequency domain range corresponding to one PRB.

In some implementations, the fifth parameter is determined based on one or more of the following: a ninth parameter, which is determined based on the number of slots corresponding to the transmission resources occupied by a PSSCH; a tenth parameter, which is determined based on the number of symbols included in a slot; an eleventh parameter, which is determined based on the number of symbols used as AGC; a twelfth parameter, which is determined based on the number of symbols corresponding to guard symbols; a thirteenth parameter, which is determined based on time domain resources corresponding to PSFCH; a fourteenth parameter, which is determined based on a time interval between the first symbol corresponding to the transmission resource of PSSCH and the first symbol of a time unit; and a fifteenth parameter, which is determined based on the number of symbols of repeated data used to transmit PSSCH data in a time unit; where one of the time units includes M consecutive slots.

In some implementations, the fifth parameter is determined based on one or more of: information predefined in a protocol; preconfigured information; configuration information from a network device; and indication information transmitted by the terminal device transmitting the PSSCH.

In some implementations, if the first time unit transmits one PSSCH and the first time unit only transmits one PSCCH, the third parameter is determined based on the transmission resources occupied by the PSCCH; or, if the first time unit is used to transmit a plurality of PSSCHs and the plurality of PSSCHs correspond to the same TB, the first time unit only transmits one PSCCH, the third parameter is determined based on the transmission resources occupied by the PSCCH; or, if the first time unit is used to transmit a plurality of PSSCHs and the plurality of PSSCHs correspond to different pluralities of TBs, the first time unit only transmits one PSCCH, the third parameter is determined based on the transmission resources occupied by the PSCCH; or, if the first time unit is used to transmit a plurality of PSSCHs and the plurality of PSSCHs correspond to different pluralities of TBs, the first time unit transmits one or more PSCCHs, the third parameter is determined based on the sum of the transmission resources occupied by the one or more PSCCHs, and/or, the number of PSCCHs.

In some implementations, if the first time unit transmits one PSSCH and the first time unit only transmits one second stage SCI, the fourth parameter is determined based on the transmission resources occupied by the second stage SCI; or, if the first time unit is used to transmit a plurality of PSSCHs and the plurality of PSSCHs correspond to the same TB, the first time unit only transmits one second stage SCI, the fourth parameter is determined based on the transmission resources occupied by the second stage SCI; or, if the first time unit is used to transmit a plurality of PSSCHs and the plurality of PSSCHs correspond to different pluralities of TBs, the first time unit only transmits one second stage SCI, the fourth parameter is determined based on the transmission resources occupied by the second stage SCI; or, if the first time unit is used to transmit a plurality of PSSCHs and the plurality of PSSCHs correspond to different pluralities of TBs, the first time unit transmits one or more second stage SCIs, the fourth parameter is determined based on the sum of the transmission resources occupied by the one or more second stage SCIs, and/or, the number of second stage SCIs.

FIG. 57 is a schematic diagram of an apparatus of the embodiments of the present disclosure. The dashed lines in FIG. 57 indicate that a unit or module is optional. An apparatus 5700 may be used to implement the method described in the above method embodiment. The apparatus 5700 may be a chip or a terminal device.

The apparatus 5700 may include one or more processors 5710. The processor 5710 may support the apparatus 5700 to implement the method described in the above method embodiment. The processor 5710 may be a general-purpose processor or a dedicated-purpose processor. For example, the processor may be a central processing unit (CPU). Alternatively, the processor may be other general-purpose processors, a digital signal processor (DSP), an application specific integrated circuit (ASIC), a field programmable gate array (FPGA) or other programmable logic devices, discrete gates or transistor logic devices, discrete hardware components, etc. A general purpose processor may be a microprocessor, or the processor may be any conventional processor or the like.

The apparatus 5700 may further include one or more memories 5720. The memory 5720 stores a computer program, and the computer program may be executed by the processor 5710, to enable the processor 5710 to perform the method in the above method embodiments of the present disclosure. The memory 5720 may be independent of processor 5710, or may be integrated into the processor 5710.

The apparatus 5700 may further include a transceiver 5730. The processor 5710 may communicate with other devices or chips via the transceiver 5730. For example, the processor 5710 may transmit and receive data with other devices or chips via the transceiver 5730.

The embodiments of the present disclosure further provide a computer-readable storage medium for storing a computer program. The computer-readable storage medium may be applied to the terminal device provided in the embodiments of the present disclosure, and the computer program enables a computer to perform the methods performed by the terminal device in various embodiments of the present disclosure.

The embodiments of the present disclosure further provide a computer program product. The computer program product includes a computer program. The computer program product may be applied to the terminal device provided in the embodiments of the present disclosure, and the computer program enables a computer to perform the methods performed by the terminal device in various embodiments of the present disclosure.

The embodiments of the present disclosure further provide a computer program. The computer program may be applied to the terminal device provided in the embodiments of the present disclosure, and the computer program enables a computer to perform the methods performed by the terminal device in various embodiments of the present disclosure.

It should be understood that the terms "system" and "network" may be used interchangeably in the present disclosure. In addition, the terms used in the present disclosure are only used to explain the specific embodiments of the present disclosure and are not intended to limit the present disclosure. The terms "first," "second," "third," "fourth" and the like in the specification, claims and drawings of the present disclosure are used to distinguish different objects rather than to describe a specific order. In addition, the terms "includes/comprises," "has," and any variations thereof, are intended to cover a non-exclusive inclusion.

In the embodiments of the present disclosure, the "indicate/indicated/indicating/indication" mentioned may be a direct indication, may also be an indirect indication, or may mean that there is an indication of an association relationship. For example, A indicating B may mean that A directly indicates B, for example, B may be obtained by A; alternatively, A indicating B may mean that A indirectly indicates B, for example, A indicates C, and B may be obtained by C; alternatively, A indicating B may mean that there is an association relationship between A and B.

In the embodiments of the present disclosure, "B corresponding to A" means that B is associated with A, and B can be determined based on A. However, it should also be understood that determining B based on A does not mean determining B based solely on A. B may also be determined based on A and/or other information.

In the embodiments of the present disclosure, the term "correspond/corresponding/correspondence" may indicate that there is a direct or indirect correspondence between two, may also mean that there is an associated relationship between the two, or may also mean a relationship of indicating and being indicated or a relationship of configuring and being configured, etc.

In the embodiments of the present disclosure, "predefined" or "preconfigured" may be implemented by pre-saving corresponding codes, tables or other manners that may be used to indicate related information in devices (e.g., including a terminal device and a network device), and a specific implementation manner thereof is not limited in the present disclosure. For example, the predefined may refer to what is defined in a protocol.

In the embodiments of the present disclosure, the "protocol" may refer to a standard protocol in the communication field. For example, the "protocol" may include an LTE protocol, an NR protocol, and a related protocol used in a future communication system, which is not limited in present disclosure.

In the embodiments of the present disclosure, the term "and/or" herein is only an association relationship to describe associated objects, which indicates that there may be three kinds of relationships. For example, "A and/or B" may mean three cases where: A exists alone, both A and B exist, and B exists alone. In addition, a character "/" herein generally means that associated objects before and after "/" are in an "or" relationship.

In various embodiments of the present disclosure, values of serial numbers of the processes do not mean the order of execution. The execution order of each process should be determined by its function and internal logic, and should not constitute any limitation on the implementation process of the embodiments of the present disclosure.

In several embodiments provided in the present disclosure, it should be understood that the disclosed systems, apparatuses, and methods may be implemented in other manners. For example, the apparatus embodiments described above are merely exemplary. For example, a division of units is merely a division based on a logical function and there may be other division manners in actual implementations. For example, multiple units or components may be combined or integrated into another system, or some characteristics may be omitted or skipped. In addition, coupling, direct coupling or communication connection between each other displayed or discussed may be indirect coupling or communication

**EP 4 679 910 A1**

connection via some interfaces, apparatuses or units, which may be electrical, mechanical or in other forms.

The units described as separate components may be or may not be physically separated, and the components displayed as units may be or may not be physical units. That is, they may be located in a place or distributed over multiple network units. Some or all of the units may be selected according to actual needs to achieve the purpose of the solutions of the embodiments.

In addition, various function units in various embodiments of the present disclosure may be integrated into one processing unit, or various units may exist physically separately, or two or more units may be integrated into one unit.

All or some of the above embodiments may be implemented by software, hardware, firmware or any combination thereof. When implemented using software, all or some of the embodiments may be implemented in the form of a computer program product. The computer program product includes one or more computer instructions. When the computer program instructions are loaded and executed on a computer, all or some processes or functions described in the embodiments of the present disclosure are generated. The computer may be a general purpose computer, a dedicated-purpose computer, a computer network, or other programmable device. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center via a wired manner (e.g., a coaxial cable, an optical fiber, a digital subscriber line (DSL)) or a wireless manner (e.g., an infrared or radio manner, microwave, etc.). The computer-readable storage medium may be any available medium that may be read by a computer or a data storage device such as a server or a data center that includes one or more available medium. The available medium may be a magnetic medium (e.g., a floppy disk, a hard disk, a magnetic tape), an optical medium (e.g., a digital video disc (DVD)), or a semiconductor medium (e.g., a solid state disk (SSD)).

The above description is only specific implementations of the present disclosure, but the protection scope of the present disclosure is not limited thereto. Any person skilled in the art familiar with the technical field may easily think of changes or substitutions within the technical scope disclosed in the present disclosure, all of which should be included in the protection scope of the present disclosure. Therefore, the protection scope of the present disclosure shall be subject to the protection scope of the claims.

**Claims**

1. A method for sidelink transmission, comprising:

   determining, by a first terminal device, a demodulation reference signal (DMRS) pattern for a first channel transmitted in a first time unit;
   wherein the first time unit includes M consecutive slots, and M is a positive integer greater than 1.

2. The method according to claim 1, wherein the first channel includes a first physical sidelink shared channel (PSSCH).

3. The method according to claim 2, wherein the DMRS pattern for the first PSSCH is determined based on first information, and the first information includes one or more of the following:

   second information, used to determine a time domain position of the first PSSCH DMRS symbol; and
   third information, used to determine a symbol interval between two adjacent PSSCH DMRS symbols.

4. The method according to claim 3, wherein the second information is used to indicate one or more of the following information:

   a time domain position of the first PSSCH DMRS symbol in a slot;
   a time domain position of the first PSSCH DMRS symbol in a time unit;
   a time domain offset of the first PSSCH DMRS symbol relative to the first symbol corresponding to a PSSCH transmission resource;
   a time domain offset of the first PSSCH DMRS symbol relative to the first symbol in a slot;
   a time domain offset of the first PSSCH DMRS symbol relative to the first symbol in a time unit;
   a time domain offset of the first PSSCH DMRS symbol relative to the first symbol corresponding to a physical sidelink control channel (PSCCH) transmission resource; and
   a time domain offset of the first PSSCH DMRS symbol relative to the last symbol corresponding to a PSCCH transmission resource.

64

5. The method according to claim 3 or 4, wherein the symbol interval between two adjacent PSSCH DMRS symbols has one or more values, and the one or more values includes a first value, and the first value indicates that the symbol interval between two adjacent PSSCH DMRS symbols is greater than 14.

6. The method according to any one of claims 3 to 5, wherein the first information is determined based on one or more of the following: sidelink bandwidth part (BWP) configuration information, resource pool configuration information, PC5-radio resource control (RRC) configuration information, information predefined in a protocol, preconfigured information, configuration information from a network device, and indication information from a terminal device.

7. The method according to any one of claims 3 to 6, wherein the first information is used to configure one or more candidate DMRS patterns of a PSSCH, and the DMRS pattern for the first PSSCH is a target DMRS pattern in the one or more candidate DMRS patterns.

8. The method according to claim 7, wherein sidelink control information (SCI) transmitted in the first time unit indicates the target PSSCH DMRS pattern.

9. The method according to any one of claims 3 to 8, wherein the DMRS pattern for the first PSSCH is determined based on fourth information, and the fourth information is used to indicate a correspondence between the first information and a first index.

10. The method according to claim 9, wherein sidelink control information (SCI) transmitted in the first time unit indicates the first index.

11. The method according to any one of claims 3 to 10, wherein

if the first time unit is used to transmit one PSSCH, DMRSs are sequentially mapped to all symbols used for transmitting the PSSCH in the first time unit based on the first information; or
if the first time unit is used to transmit a plurality of PSSCHs and the plurality of PSSCHs are used to transmit a same transport block (TB), DMRSs are sequentially mapped to all symbols used for transmitting PSSCHs in the first time unit based on the first information; or
if the first time unit is used to transmit a plurality of PSSCHs and the plurality of PSSCHs are used to transmit a same TB, DMRSs are sequentially mapped to symbols respectively corresponding to the plurality of PSSCHs based on the first information; or
if the first time unit is used to transmit a plurality of PSSCHs and the plurality of PSSCHs are used to transmit different TBs, DMRSs are sequentially mapped to all symbols used for transmitting PSSCHs in the first time unit based on the first information; or
if the first time unit is used to transmit a plurality of PSSCHs and the plurality of PSSCHs are used to transmit different TBs, DMRSs are sequentially mapped to symbols respectively corresponding to the plurality of PSSCHs based on the first information.

12. The method according to claim 2, wherein the DMRS pattern for the first PSSCH is determined based on a first DMRS pattern.

13. The method according to claim 12, wherein the first DMRS pattern corresponds to a first number of symbols in a slot.

14. The method according to claim 13, wherein the first number of symbols is one of the following: a maximum number of symbols available for PSSCH transmission in a slot in a case where a PSSCH is transmitted based on a single slot; and a number of symbols available for PSSCH transmission occupied by the first PSSCH in a slot.

15. The method according to claim 13 or 14, wherein the first PSSCH includes a plurality of slots, and the plurality of slots correspond to a same first DMRS pattern; or each of the plurality of slots corresponds to a respective first DMRS pattern.

16. The method according to any one of claims 13 to 15, wherein the first PSSCH is one of a plurality of PSSCHs transmitted in the first time unit, and the plurality of PSSCHs correspond to a same first DMRS pattern; or each of the plurality of PSSCHs corresponds to a respective first DMRS pattern.

17. The method according to any one of claims 13 to 16, wherein a value of the first number of symbols is one of one or plurality of candidate values, and each candidate value of at least a portion of the one or plurality of candidate values corresponds to one or more DMRS patterns.

18. The method according to claim 17, wherein

    each candidate value of the one or plurality of candidate values corresponds to one or more DMRS patterns; or each candidate value of a portion of the plurality of candidate values corresponds to one or more DMRS patterns, and remaining candidate values of the plurality of candidate values other than the portion of the plurality of candidate values do not correspond to a DMRS pattern.

19. The method according to any one of claims 12 to 18, wherein a time interval of a DMRS symbol relative to the first symbol of the first PSSCH is determined based on the first DMRS pattern, and positions of one or more DMRS symbols are determined based on the time interval and a position of the first symbol of a PSSCH in a first slot; wherein the first slot is used to transmit the first PSSCH.

20. The method according to claim 19, wherein if a symbol position corresponding to a first DMRS symbol exceeds a position of the last symbol available for PSSCH transmission in the first slot, the first DMRS symbol is not mapped in the first slot; wherein the first DMRS symbol is one DMRS symbol of the one or more DMRS symbols.

21. The method according to claim 12, wherein the first DMRS pattern corresponds to a first sidelink subcarrier spacing, the first time unit corresponds to a second sidelink subcarrier spacing, and the DMRS pattern for the first PSSCH is determined based on the following information:

    the first DMRS pattern;
    the first sidelink subcarrier spacing; and
    the second sidelink subcarrier spacing.

22. The method according to claim 21, wherein the DMRS pattern for the first PSSCH is determined based on the following information:

    the first DMRS pattern; and
    a proportional relationship between the second sidelink subcarrier spacing and the first sidelink subcarrier spacing.

23. The method according to any one of claims 12 to 22, wherein the first DMRS pattern is used to determine a relative position between each PSSCH DMRS symbol and a target symbol in a slot; wherein
    the target symbol is one of the following:

    the first symbol in the slot;
    the first symbol available for sidelink transmission in the slot; and
    the first symbol available for PSSCH transmission in the slot.

24. The method according to any one of claims 12 to 23, wherein sidelink control information (SCI) transmitted in the first time unit indicates the first DMRS pattern.

25. The method according to any one of claims 12 to 24, wherein the first DMRS pattern is determined based on information predefined in a protocol, preconfigured information, configuration information from a network device, or indication information sent by a terminal device.

26. The method according to any one of claims 2 to 25, wherein the last PSSCH DMRS symbol of the first PSSCH determined based on the DMRS pattern for the first PSSCH is a first target symbol, and time domain resources for transmitting the first PSSCH latter than the first target symbol occupy P symbols; and if the P symbols meet a first condition, at least one symbol of the P symbols is used to map a DMRS.

27. The method according to claim 26, wherein the first condition includes one or more of the following:

    a number of the P symbols being greater than or equal to a first threshold; and
    a ratio of the number of the P symbols to a symbol interval between two adjacent PSSCH DMRS symbols of the first PSSCH being greater than or equal to a second threshold.

28. The method according to claim 26 or 27, wherein the at least one symbol is the last symbol of the P symbols.

29. The method according to any one of claims 2 to 28, wherein the DMRS for the first PSSCH occupies a first physical resource block (PRB) in frequency domain, every H1 subcarriers in the first PRB are used to map the DMRS, and H1 is a positive integer greater than or equal to 1.

30. The method according to claim 29, wherein H1 is equal to 1 or 2.

31. The method according to any one of claims 1 to 30, wherein the first channel includes a first PSCCH.

32. The method according to claim 31, wherein a portion of symbols corresponding to the first PSCCH are used to map a DMRS.

33. The method according to claim 32, wherein the portion of symbols are the first symbol of the first PSCCH.

34. The method according to claim 32 or 33, wherein a DMRS for the first PSCCH occupies a second PRB in frequency domain, every H2 subcarriers in the second PRB are used to map the DMRS, and H2 is a positive integer greater than or equal to 1.

35. The method according to claim 34, wherein H2 is equal to 1 or 2.

36. The method according to any one of claims 1 to 35, wherein a value of M is determined based on one or more of the following:

information predefined in a protocol;
resource pool configuration information; and
sidelink BWP configuration information.

37. The method according to claim 36, wherein the M slots are M consecutive physical slots; or the M slots are consecutive slots available for sidelink transmission.

38. The method according to any one of claims 1 to 37, wherein the first time unit includes a first guard symbol, the first guard symbol includes B consecutive symbols, the B symbols are the last B symbols in the first time unit; and B is a positive integer greater than 1.

39. The method according to any one of claims 1 to 38, wherein if the first time unit includes a first time domain resource for transmitting a physical sidelink feedback channel (PSFCH), the first time unit includes second guard symbols, the second guard symbols include B consecutive symbols, the B symbols in the second guard symbols are earlier than the first time domain resource; and B is a positive integer greater than 1.

40. The method according to claim 38 or 39, wherein a value of B is equal to 4, or the value of B is equal to 8.

41. The method according to claim 40, wherein

the value of B is equal to 4, and a sidelink subcarrier spacing corresponding to the first time unit is 480 kHz; or
the value of B is equal to 8, and a sidelink subcarrier spacing corresponding to the first time unit is 960 kHz.

42. The method according to any one of claims 38 to 41, wherein a value of B is determined based on one or more of the following information:

information predefined in a protocol;
resource pool configuration information; and
sidelink BWP configuration information.

43. The method according to claim 42, wherein the resource pool configuration information or the sidelink BWP configuration information includes first indication information, and the value of B is determined based on the first indication information;
wherein the first indication information is used to indicate one or more of the following:

the value of B;
a time domain position of the first symbol available for sidelink transmission in one slot or time unit;
a length or a number of symbols available for sidelink transmission in one time unit; and
a number of slots included in one time unit;
wherein one time unit includes M consecutive slots.

44. The method according to any one of claims 38 to 41, wherein the value of B is determined based on a first sidelink subcarrier spacing and a second sidelink subcarrier spacing;
the first sidelink subcarrier spacing is determined based on sidelink BWP configuration information, the sidelink BWP configuration information is used to configure a BWP corresponding to the first time unit, and the second subcarrier spacing is determined based on information predefined in a protocol, resource pool configuration information or sidelink BWP configuration information.

45. The method according to claim 44, wherein the second subcarrier spacing is 120 kHz.

46. The method according to any one of claims 1 to 45, wherein the first time unit includes two adjacent slots, a third guard symbol is set between symbols used for sidelink transmission in the two slots, the third guard symbol includes C symbols, and C is a positive integer greater than or equal to 1.

47. The method according to claim 46, wherein a value of C is 1 or 2.

48. The method according to claim 46 or 47, wherein the third guard symbol corresponds to the last C symbols in the previous slot of the two slots.

49. The method according to any one of claims 46 to 48, wherein a value of C is determined based on one or more of the following:

information predefined in a protocol;
resource pool configuration information; and
sidelink BWP configuration information.

50. The method according to any one of claims 1 to 49, wherein if the first time unit is used to transmit a plurality of PSSCHs, a fourth guard symbol is set between transmission resources of two adjacent PSSCHs of the plurality of PSSCHs, the fourth guard symbol includes D symbols, and D is a positive integer greater than or equal to 1.

51. The method according to claim 50, wherein a value of D is 1 or 2.

52. The method according to claim 50 or 51, wherein the fourth guard symbol corresponds to the last D symbols in the last slot of slots occupied by the previous PSSCH of the two PSSCHs.

53. The method according to any one of claims 50 to 52, wherein a value of D is determined based on one or more of the following:

information predefined in a protocol;
resource pool configuration information; and
sidelink BWP configuration information.

54. The method according to any one of claims 1 to 53, wherein

at least one slot of the M slots does not include a guard symbol; and/or
the last slot of the M slots includes a guard symbol, and remaining slots of the M slots other than the last slot do not include a guard symbol; and/or
if the first time unit includes a time domain resource for transmitting a PSFCH, the last slot and/or a second last slot of the M slots includes a guard symbol; and/or
a guard symbol is set between symbols used for sidelink transmission in adjacent slots of the M slots.

55. The method according to any one of claims 1 to 54, wherein the first time unit includes second time domain resources for transmitting a PSCCH, a starting symbol of the second time domain resources is an (A+1)-th symbol in the first time unit, and A is a positive integer greater than 1.

56. The method according to claim 55, wherein a PSCCH occupies Q PRBs in frequency domain, the PSCCH is used to schedule a PSSCH, a frequency domain starting position of the Q PRBs is the same as a frequency domain starting position of the PSSCH, and Q is a positive integer greater than or equal to 1.

57. The method according to claim 56, wherein a value of Q is determined based on one or more of the following:

    information predefined in a protocol;
    resource pool configuration information; and
    sidelink BWP configuration information.

58. The method according to any one of claims 1 to 57, wherein the first time unit includes third time domain resources for transmitting a PSSCH, a starting symbol of the third time domain resources is an (A+1)-th symbol in the first time unit, and A is a positive integer greater than 1.

59. The method according to claim 58, wherein

    if the first time unit does not include a PSFCH transmission resource, an ending symbol of the third time domain resources is a symbol preceding a symbol corresponding to a first guard symbol; or
    if the first time unit includes a PSFCH transmission resource, an ending symbol of the third time domain resources is a symbol preceding a symbol corresponding to a second guard symbol;
    wherein the first guard symbol includes the last B symbols in the first time unit, the second guard symbol includes B symbols earlier than PSFCH transmission resources, and B is a positive integer greater than 1.

60. The method according to any one of claims 55 to 59, wherein a value of A is determined based on one or more of the following information:

    information predefined in a protocol;
    resource pool configuration information; and
    sidelink BWP configuration information.

61. The method according to claim 60, wherein the resource pool configuration information or the sidelink BWP configuration information includes second indication information, and a value of A is determined based on the second indication information;
    wherein the second indication information is used to indicate one or more of the following:

    the value of A;
    a time domain position of the first symbol available for transmitting a PSSCH in one time unit;
    a time domain position of the first symbol available for transmitting a PSCCH in one time unit; and
    a time domain position of the first symbol available for sidelink transmission in one slot or time unit;
    wherein one time unit includes M consecutive slots.

62. The method according to any one of claims 55 to 61, wherein a value of A is determined based on a first sidelink subcarrier spacing and a second sidelink subcarrier spacing;
    wherein the first sidelink subcarrier spacing is determined based on sidelink BWP configuration information, the sidelink BWP configuration information is used to configure a BWP corresponding to the first time unit, and the second subcarrier spacing is determined based on information predefined in a protocol, resource pool configuration information or sidelink BWP configuration information.

63. The method according to claim 62, wherein the second subcarrier spacing is 120 kHz.

64. The method according to any one of claims 55 to 63, wherein

    a value of A is equal to 4; or
    the value of A is equal to 8.

**65.** The method according to claim 64, wherein

the value of A is equal to 4, and a sidelink subcarrier spacing corresponding to the first time unit is 480 kHz; or
the value of A is equal to 8, and a sidelink subcarrier spacing corresponding to the first time unit is 960 kHz.

**66.** The method according to any one of claims 1 to 65, wherein data transmitted in the first A symbols in the first time unit are repeated data of data transmitted in a target symbol in the first time unit;
wherein the target symbol includes one or more symbols of remaining symbols in the first time unit other than the first A symbols, and A is a positive integer greater than 1.

**67.** The method according to claim 66, wherein the target symbol is one of the following:

an (A+1)-th symbol to a 2A-th symbol in the first time unit; and
an (A+1)-th symbol in the first time unit.

**68.** The method according to any one of claims 1 to 67, wherein the first time unit includes fourth time domain resources for transmitting a PSFCH, the fourth time domain resources include K symbols, and K is a positive integer greater than 1.

**69.** The method according to claim 68, wherein a value of K is determined based on one or more of the following:

information predefined in a protocol;
resource pool configuration information; and
sidelink BWP configuration information.

**70.** The method according to claim 68 or 69, wherein the fourth time domain resources are located in the first slot of the first time unit or the last slot of the first time unit.

**71.** The method according to any one of claims 68 to 70, wherein the K symbols include K1 symbols and K2 symbols, the K1 symbols are used to transmit the PSFCH, and data transmitted in the K2 symbols are repeated data of data transmitted in the K1 symbols, wherein K1 and K2 are positive integers, and K is equal to a sum of K1 and K2.

**72.** The method according to claim 71, wherein a value of K1 or K2 is determined based on one or more of the following:

information predefined in a protocol;
resource pool configuration information; and
sidelink BWP configuration information.

**73.** The method according to claim 71 or 72, wherein

K1 is equal to 1, and K2 is equal to A; or
K1 is equal to A, and K2 is equal to A;
wherein A is a positive integer greater than 1, and a value of A is determined based on a time domain position of the first symbol corresponding to transmission resources of the PSSCH in the first time unit.

**74.** The method according to any one of claims 71 to 73, wherein
if K1 is greater than 1, each of the K1 symbols is used to transmit a PSFCH.

**75.** The method according to any one of claims 71 to 74, wherein

if K1 is equal to 1, data transmitted in each symbol of the K2 symbols is repeated data of the data transmitted in the K1 symbols; or
if K1 is greater than 1, data transmitted in every L symbols from an end to a start of the K2 symbols are repeated data of the data transmitted in the K1 symbols; or
if K1 is greater than 1, data transmitted in every L symbols from the start to the end of the K2 symbols are repeated data of the data transmitted in the K1 symbols;
wherein L is equal to K1.

**76.** The method according to any one of claims 68 to 75, wherein the PSFCH occupies X PRBs in frequency domain, and X is a positive integer greater than or equal to 1.

77. The method according to claim 76, wherein

in a case where X is greater than 1, sidelink feedback information transmitted over the PSFCH is carried in a first sequence, a length of the first sequence is equal to N, and the first sequence is mapped to one PRB of the X PRBs, and data transmitted over remaining PRBs of the X PRBs other than the one PRB is determined based on the first sequence; or

in a case where X is greater than 1, sidelink feedback information transmitted over the PSFCH is carried in a second sequence, a length of the second sequence is determined based on a value of X multiplied by N, and the second sequence is mapped to the X PRBs;

wherein N is equal to a number of subcarriers included in a PRB.

78. The method according to any one of claims 1 to 77, wherein the first time unit includes a transmission resource for first stage sidelink control information (SCI), the first stage SCI includes an information field for indicating time domain resource assignment, a value of the information field for indicating time domain resource assignment is determined based on time offsets of remaining (W-1) transmission resources of W transmission resources other than the first transmission resource relative to the first transmission resource, and the time offsets are represented based on a number of time units; wherein a value of W is determined based on a number of transmission resources indicated by the first stage SCI, and one time unit includes M consecutive slots.

79. The method according to any one of claims 1 to 78, wherein sidelink transmission resources corresponding to sidelink transmission or sidelink reception are determined based on first DCI, and the first DCI includes third indication information;

wherein the third indication information is used to indicate one of the following:

a time interval between reception of the first DCI and a sidelink transmission resource;
a time interval between a slot in which the first DCI is located and a first time unit in which a sidelink transmission resource is located; and
a time interval between start time of a downlink slot carrying the first DCI and start time of a sidelink transmission resource;
wherein a time interval is represented based on a number of time units, and one time unit includes M consecutive slots.

80. The method according to any one of claims 1 to 79, further comprising:
determining, by the first terminal device, a first reservation period based on one or more of the following:

a second reservation period indicated by indication information in sidelink control information (SCI); and
a number of time units in a resource pool;
wherein the first reservation period is represented based on a number of time units, the second reservation period is represented based on milliseconds, and one time unit includes M consecutive slots.

81. The method according to claim 80, wherein the first reservation period $P'_{rsvp}$ satisfies the following equation:

$$P'_{rsvp} = \left\lceil \frac{T'_{max}}{10240 \text{ ms}} \times P_{rsvp} \right\rceil$$

wherein $P_{rsvp}$ represents the second reservation period, and $T'_{max}$ represents a number of time units included in a resource pool during 10240 ms.

82. The method according to any one of claims 1 to 81, wherein a period of PSFCHs is represented based on a number of time units; wherein one time unit includes M consecutive slots.

83. The method according to claim 82, wherein the period of PSFCHs is indicated based on fourth indication information, and the fourth indication information belongs to resource pool configuration information.

84. A terminal device, wherein the terminal device is a first terminal device, and the terminal device comprises:

a first determining module, configured to determine a demodulation reference signal (DMRS) pattern for a first channel transmitted in a first time unit;
wherein the first time unit includes M consecutive slots, and M is a positive integer greater than 1.

85. The terminal device according to claim 1, wherein the first channel includes a first physical sidelink shared channel (PSSCH).

86. The terminal device according to claim 2, wherein the DMRS pattern for the first PSSCH is determined based on first information, and the first information includes one or more of the following:

second information, used to determine a time domain position of the first PSSCH DMRS symbol; and
third information, used to determine a symbol interval between two adjacent PSSCH DMRS symbols.

87. The terminal device according to claim 3, wherein the second information is used to indicate one or more of the following information:

a time domain position of the first PSSCH DMRS symbol in a slot;
a time domain position of the first PSSCH DMRS symbol in a time unit;
a time domain offset of the first PSSCH DMRS symbol relative to the first symbol corresponding to a PSSCH transmission resource;
a time domain offset of the first PSSCH DMRS symbol relative to the first symbol in a slot;
a time domain offset of the first PSSCH DMRS symbol relative to the first symbol in a time unit;
a time domain offset of the first PSSCH DMRS symbol relative to the first symbol corresponding to a physical sidelink control channel (PSCCH) transmission resource; and
a time domain offset of the first PSSCH DMRS symbol relative to the last symbol corresponding to a PSCCH transmission resource.

88. The terminal device according to claim 3 or 4, wherein the symbol interval between two adjacent PSSCH DMRS symbols has one or more values, and the one or more values includes a first value, and the first value indicates that the symbol interval between two adjacent PSSCH DMRS symbols is greater than 14.

89. The terminal device according to any one of claims 3 to 5, wherein the first information is determined based on one or more of the following: sidelink bandwidth part (BWP) configuration information, resource pool configuration information, PC5-radio resource control (RRC) configuration information, information predefined in a protocol, preconfigured information, configuration information from a network device, and indication information from a terminal device.

90. The terminal device according to any one of claims 3 to 6, wherein the first information is used to configure one or more candidate DMRS patterns of a PSSCH, and the DMRS pattern for the first PSSCH is a target DMRS pattern in the one or more candidate DMRS patterns.

91. The terminal device according to claim 7, wherein sidelink control information (SCI) transmitted in the first time unit indicates the target PSSCH DMRS pattern.

92. The terminal device according to any one of claims 3 to 8, wherein the DMRS pattern for the first PSSCH is determined based on fourth information, and the fourth information is used to indicate a correspondence between the first information and a first index.

93. The terminal device according to claim 9, wherein sidelink control information (SCI) in the first time unit indicates the first index.

94. The terminal device according to any one of claims 3 to 10, wherein

if the first time unit is used to transmit one PSSCH, DMRSs are sequentially mapped to all symbols used for transmitting the PSSCH in the first time unit based on the first information; or
if the first time unit is used to transmit a plurality of PSSCHs and the plurality of PSSCHs are used to transmit a same transport block (TB), DMRSs are sequentially mapped to all symbols used for transmitting PSSCHs in the first time unit based on the first information; or

if the first time unit is used to transmit a plurality of PSSCHs and the plurality of PSSCHs are used to transmit a same TB, DMRSs are sequentially mapped to symbols respectively corresponding to the plurality of PSSCHs based on the first information; or

if the first time unit is used to transmit a plurality of PSSCHs and the plurality of PSSCHs are used to transmit different TBs, DMRSs are sequentially mapped to all symbols used for transmitting PSSCHs in the first time unit based on the first information; or

if the first time unit is used to transmit a plurality of PSSCHs and the plurality of PSSCHs are used to transmit different TBs, DMRSs are sequentially mapped to symbols respectively corresponding to the plurality of PSSCHs based on the first information.

95. The terminal device according to claim 2, wherein the DMRS pattern for the first PSSCH is determined based on a first DMRS pattern.

96. The terminal device according to claim 12, wherein the first DMRS pattern corresponds to a first number of symbols in a slot.

97. The terminal device according to claim 13, wherein the first number of symbols is one of the following: a maximum number of symbols available for PSSCH transmission in a slot in a case where a PSSCH is transmitted based on a single slot; and

a number of symbols available for PSSCH transmission occupied by the first PSSCH in a slot.

98. The terminal device according to claim 13 or 14, wherein the first PSSCH includes a plurality of slots, and the plurality of slots correspond to a same first DMRS pattern; or each of the plurality of slots corresponds to a respective first DMRS patterns.

99. The terminal device according to any one of claims 13 to 15, wherein the first PSSCH is one of a plurality of PSSCHs transmitted in the first time unit, and the plurality of PSSCHs correspond to a same first DMRS pattern; or each of the plurality of PSSCHs corresponds to a respective first DMRS patterns.

100.
The terminal device according to any one of claims 13 to 16, wherein a value of the first number of symbols is one of one or plurality of candidate values, and each candidate value of at least a portion of the one or plurality of candidate values corresponds to one or more DMRS patterns.

101.
The terminal device according to claim 17, wherein

each candidate value of the one or plurality of candidate values corresponds to one or more DMRS patterns; or each candidate value of a portion of the plurality of candidate values corresponds to one or more DMRS patterns, and remaining candidate values of the plurality of candidate values other than the portion of the plurality of candidate values do not correspond to a DMRS pattern.

102.
The terminal device according to any one of claims 12 to 18, wherein a time interval of a DMRS symbol relative to the first symbol of the first PSSCH is determined based on the first DMRS pattern, and positions of one or more DMRS symbols are determined based on the time interval and a position of the first symbol of a PSSCH in a first slot, wherein the first slot is used to transmit the first PSSCH.

103.
The terminal device according to claim 19, wherein if a symbol position corresponding to a first DMRS symbol exceeds a position of the last symbol available for PSSCH transmission in the first slot, the first DMRS symbol is not mapped in the first slot, wherein the first DMRS symbol is one DMRS symbol of the one or more DMRS symbols.

104.
The terminal device according to claim 12, wherein the first DMRS pattern corresponds to a first sidelink subcarrier spacing, the first time unit corresponds to a second sidelink subcarrier spacing, and the DMRS pattern for the first PSSCH is determined based on the following information:

the first DMRS pattern;
the first sidelink subcarrier spacing; and
the second sidelink subcarrier spacing.

105.
The terminal device according to claim 21, wherein the DMRS pattern for the first PSSCH is determined based on the following information:

the first DMRS pattern; and
a proportional relationship between the second sidelink subcarrier spacing and the first sidelink subcarrier spacing.

106.
The terminal device according to any one of claims 12 to 22, wherein the first DMRS pattern is used to determine a relative position between each PSSCH DMRS symbol and a target symbol in a slot; wherein
the target symbol is one of the following:

the first symbol in the slot;
the first symbol available for sidelink transmission in the slot; and
the first symbol available for PSSCH transmission in the slot.

107.
The terminal device according to any one of claims 12 to 23, wherein sidelink control information (SCI) transmitted in the first time unit indicates the first DMRS pattern.

108.
The terminal device according to any one of claims 12 to 24, wherein the first DMRS pattern is determined based on information predefined in a protocol, preconfigured information, configuration information from a network device, or indication information sent by a terminal device.

109.
The terminal device according to any one of claims 2 to 25, wherein the last PSSCH DMRS symbol of the first PSSCH determined based on the DMRS pattern for the first PSSCH is a first target symbol, and time domain resources for transmitting the first PSSCH latter than the first target symbol occupy P symbols, and if the P symbols meet a first condition, at least one symbol of the P symbols is used to map a DMRS.

110.
The terminal device according to claim 26, wherein the first condition includes one or more of the following:

a number of the P symbols being greater than or equal to a first threshold; and
a ratio of the number of the P symbols to a symbol interval between two adjacent PSSCH DMRS symbols of the first PSSCH being greater than or equal to a second threshold.

111. The terminal device according to claim 26 or 27, wherein the at least one symbol is the last symbol of the P symbols.

112.
The terminal device according to any one of claims 2 to 28, wherein the DMRS for the first PSSCH occupies a first physical resource block (PRB) in frequency domain, every H1 subcarriers in the first PRB are used to map the DMRS, and H1 is a positive integer greater than or equal to 1.

113.
The terminal device according to claim 29, wherein H1 is equal to 1 or 2.

114.
The terminal device according to any one of claims 1 to 30, wherein the first channel includes a first PSCCH.

115.
The terminal device according to claim 31, wherein a portion of symbols corresponding to the first PSCCH are used to map a DMRS.

**116.**
The terminal device according to claim 32, wherein the portion of symbols are the first symbol of the first PSCCH.

**117.**
The terminal device according to claim 32 or 33, wherein a DMRS for the first PSCCH occupies a second PRB in frequency domain, and every H2 subcarriers in the second PRB are used to map the DMRS, and H2 is a positive integer greater than or equal to 1.

**118.**
The terminal device according to claim 34, wherein H2 is equal to 1 or 2.

**119.**
The terminal device according to any one of claims 1 to 35, wherein a value of M is determined based on one or more of the following:

information predefined in a protocol;
resource pool configuration information; and
sidelink BWP configuration information.

**120.**
The terminal device according to claim 36, wherein the M slots are M consecutive physical slots; or the M slots are consecutive slots available for sidelink transmission.

**121.**
The terminal device according to any one of claims 1 to 37, wherein the first time unit includes a first guard symbol, the first guard symbol includes B consecutive symbols, the B symbols are the last B symbols in the first time unit, and B is a positive integer greater than 1.

**122.**
The terminal device according to any one of claims 1 to 38, wherein if the first time unit includes a first time domain resource for transmitting a physical sidelink feedback channel (PSFCH), the first time unit includes second guard symbols, the second guard symbols include B consecutive symbols, the B symbols in the second guard symbol are earlier than the first time domain resource, and B is a positive integer greater than 1.

**123.**
The terminal device according to claim 38 or 39, wherein a value of B is equal to 4, or the value of B is equal to 8.

**124.**
The terminal device according to claim 40, wherein

the value of B is equal to 4, and a sidelink subcarrier spacing corresponding to the first time unit is 480 kHz; or
the value of B is equal to 8, and a sidelink subcarrier spacing corresponding to the first time unit is 960 kHz.

**125.**
The terminal device according to any one of claims 38 to 41, wherein a value of B is determined based on one or more of the following information:

information predefined in a protocol;
resource pool configuration information; and
sidelink BWP configuration information.

**126.**
The terminal device according to claim 42, wherein the resource pool configuration information or the sidelink BWP configuration information includes first indication information, and the value of B is determined based on the first indication information;
wherein the first indication information is used to indicate one or more of the following:

the value of B;
a time domain position of the first symbol available for sidelink transmission in one slot or time unit;
a length or a number of symbols available for sidelink transmission in one time unit; and
a number of slots included in one time unit;
wherein one time unit includes M consecutive slots.

**127.**
The terminal device according to any one of claims 38 to 41, wherein the value of B is determined based on a first sidelink subcarrier spacing and a second sidelink subcarrier spacing;
the first sidelink subcarrier spacing is determined based on sidelink BWP configuration information, the sidelink BWP configuration information is used to configure a BWP corresponding to the first time unit, and the second subcarrier spacing is determined based on information predefined in a protocol, resource pool configuration information or sidelink BWP configuration information.

**128.**
The terminal device according to claim 44, wherein the second subcarrier spacing is 120 kHz.

**129.**
The terminal device according to any one of claims 1 to 45, wherein the first time unit includes two adjacent slots, a third guard symbol is set between symbols used for sidelink transmission in the two slots, the third guard symbol includes C symbols, and C is a positive integer greater than or equal to 1.

**130.**
The terminal device according to claim 46, wherein a value of C is 1 or 2.

**131.**
The terminal device according to claim 46 or 47, wherein the third guard symbol corresponds to the last C symbols in the previous slot of the two slots.

**132.**
The terminal device according to any one of claims 46 to 48, wherein a value of C is determined based on one or more of the following:

information predefined in a protocol;
resource pool configuration information; and
sidelink BWP configuration information.

**133.**
The terminal device according to any one of claims 1 to 49, wherein if the first time unit is used to transmit a plurality of PSSCHs, a fourth guard symbol is set between transmission resources of two adjacent PSSCHs of the plurality of PSSCHs, the fourth guard symbol includes D symbols, and D is a positive integer greater than or equal to 1.

**134.**
The terminal device according to claim 50, wherein a value of D is 1 or 2.

**135.**
The terminal device according to claim 50 or 51, wherein the fourth guard symbol corresponds to the last D symbols of the last slot of slots occupied by the previous PSSCH of the two PSSCHs.

**136.**
The terminal device according to any one of claims 50 to 52, wherein a value of D is determined based on one or more of the following:

information predefined in a protocol;
resource pool configuration information; and
sidelink BWP configuration information.

**137.**

The terminal device according to any one of claims 1 to 53, wherein

at least one slot of the M slots does not include a guard symbol; and/or,
the last slot of the M slots includes a guard symbol, and remaining slots of the M slots other than the last slot do not include a guard symbol; and/or
if the first time unit includes a time domain resource for transmitting a PSFCH, the last slot and/or a second last slot of the M slots includes a guard symbol; and/or
a guard symbol is set between symbols used for sidelink transmission in adjacent slots of the M slots.

**138.**
The terminal device according to any one of claims 1 to 54, wherein the first time unit includes second time domain resources for transmitting a PSCCH, a starting symbol of the second time domain resources is an (A+1)-th symbol in the first time unit, and A is a positive integer greater than 1.

**139.**
The terminal device according to claim 55, wherein a PSCCH occupies Q PRBs in frequency domain, the PSCCH is used to schedule a PSSCH, a frequency domain starting position of the Q PRBs is the same as a frequency domain starting position of the PSSCH, and Q is a positive integer greater than or equal to 1.

**140.**
The terminal device according to claim 56, wherein a value of Q is determined based on one or more of the following:

information predefined in a protocol;
resource pool configuration information; and
sidelink BWP configuration information.

**141.**
The terminal device according to any one of claims 1 to 57, wherein the first time unit includes third time domain resources for transmitting a PSSCH, a starting symbol of the third time domain resources is an (A+1)-th symbol in the first time unit, and A is a positive integer greater than 1.

**142.**
The terminal device according to claim 58, wherein

if the first time unit does not include a PSFCH transmission resource, an ending symbol of the third time domain resources is a symbol preceding a symbol corresponding to a first guard symbol; or
if the first time unit includes a PSFCH transmission resource, an ending symbol of the third time domain resources is a symbol preceding a symbol corresponding to a second guard symbol;
wherein the first guard symbol includes the last B symbols in the first time unit, the second guard symbol includes B symbols earlier than PSFCH transmission resources, and B is a positive integer greater than 1.

**143.**
The terminal device according to any one of claims 55 to 59, wherein a value of A is determined based on one or more of the following information:

information predefined in a protocol;
resource pool configuration information; and
sidelink BWP configuration information.

**144.**
The terminal device according to claim 60, wherein the resource pool configuration information or the sidelink BWP configuration information includes second indication information, and a value of A is determined based on the second indication information;
wherein the second indication information is used to indicate one or more of the following:

the value of A;
a time domain position of the first symbol available for transmitting a PSSCH in one time unit;
a time domain position of the first symbol available for transmitting a PSCCH in one time unit; and

**EP 4 679 910 A1**

a time domain position of the first symbol available for sidelink transmission in one slot or time unit;
wherein one time unit includes M consecutive slots.

**145.**
The terminal device according to any one of claims 55 to 61, wherein a value of A is determined based on a first sidelink subcarrier spacing and a second sidelink subcarrier spacing;
wherein the first sidelink subcarrier spacing is determined based on sidelink BWP configuration information, the sidelink BWP configuration information is used to configure a BWP corresponding to the first time unit, and the second subcarrier spacing is determined based on information predefined in a protocol, resource pool configuration information or sidelink BWP configuration information.

**146.**
The terminal device according to claim 62, wherein the second subcarrier spacing is 120 kHz.

**147.**
The terminal device according to any one of claims 55 to 63, wherein

    a value of A is equal to 4; or,
    the value of A is equal to 8.

**148.**
The terminal device according to claim 64, wherein

    the value of A is equal to 4, and a sidelink subcarrier spacing corresponding to the first time unit is 480 kHz; or
    the value of A is equal to 8, and a sidelink subcarrier spacing corresponding to the first time unit is 960 kHz.

**149.**
The terminal device according to any one of claims 1 to 65, wherein data transmitted in the first A symbols in the first time unit are repeated data of data transmitted in a target symbol of the first time unit;
wherein the target symbol includes one or more symbols of remaining symbols in the first time unit other than the first A symbols, and A is a positive integer greater than 1.

**150.**
The terminal device according to claim 66, wherein the target symbol is one of the following:

    an (A+1)-th symbol to a 2A-th symbol in the first time unit; and
    an (A+1)-th symbol in the first time unit.

**151.**
The terminal device according to any one of claims 1 to 67, wherein the first time unit includes fourth time domain resources for transmitting a PSFCH, the fourth time domain resources include K symbols, and K is a positive integer greater than 1.

**152.**
The terminal device according to claim 68, wherein a value of K is determined based on one or more of the following:

    information predefined in a protocol;
    resource pool configuration information; and
    sidelink BWP configuration information.

**153.**
The terminal device according to claim 68 or 69, wherein the fourth time domain resources are located in the first slot of the first time unit or the last slot of the first time unit.

**154.**
The terminal device according to any one of claims 68 to 70, wherein the K symbols include K1 symbols and K2 symbols, the K1 symbols are used to transmit the PSFCH, and data transmitted in the K2 symbols are repeated data of data transmitted in the K1 symbols, wherein K1 and K2 are positive integers, and K is equal to a sum of K1 and K2.

78

**155.**

The terminal device according to claim 71, wherein a value of K1 or K2 is determined based on one or more of the following:

> information predefined in a protocol;
> resource pool configuration information; and
> sidelink BWP configuration information.

**156.**

The terminal device according to claim 71 or 72, wherein

> K1 is equal to 1, and K2 is equal to A; or
> K1 is equal to A, and K2 is equal to A;
> wherein A is a positive integer greater than 1, and a value of A is determined based on a time domain position of the first symbol corresponding to transmission resources of the PSSCH in the first time unit.

**157.**

The terminal device according to any one of claims 71 to 73, wherein
if K1 is greater than 1, each of the K1 symbols is used to transmit a PSFCH.

**158.**

The terminal device according to any one of claims 71 to 74, wherein

> if K1 is equal to 1, data transmitted in each symbol of the K2 symbols is repeated data of the data transmitted in the K1 symbols; or
> if K1 is greater than 1, data transmitted in every L symbols from an end to a start of the K2 symbols are repeated data of the data transmitted in the K1 symbols; or
> if K1 is greater than 1, data transmitted in every L symbols from the start to the end of the K2 symbols are repeated data of the data transmitted in the K1 symbols;
> wherein L is equal to K1.

**159.**

The terminal device according to any one of claims 68 to 75, wherein the PSFCH occupies X PRBs in frequency domain, and X is a positive integer greater than or equal to 1.

**160.**

The terminal device according to claim 76, wherein

> in a case where X is greater than 1, sidelink feedback information transmitted over the PSFCH is carried in a first sequence, a length of the first sequence is equal to N, and the first sequence is mapped to one PRB of the X PRBs, and data transmitted over remaining PRBs of the X PRBs other than the one PRB is determined based on the first sequence; or
> in a case where X is greater than 1, sidelink feedback information transmitted over the PSFCH is carried in a second sequence, a length of the second sequence is determined based on a value of X multiplied by N, and the second sequence is mapped to the X PRBs;
> wherein N is equal to a number of subcarriers included in a PRB.

**161.**

A terminal device according to any one of claims 1 to 77, wherein the first time unit includes a transmission resource for first stage sidelink control information (SCI), the first stage SCI includes an information field for indicating time domain resource assignment, a value of the information field for indicating time domain resource assignment is determined based on time offsets of remaining (W-1) transmission resources of W transmission resources other than the first transmission resource relative to the first transmission resource, and the time offsets are represented based on a number of time units, wherein a value of W is determined based on a number of transmission resources indicated by the first stage SCI, and one time unit includes M consecutive slots.

**162.**

The terminal device according to any one of claims 1 to 78, wherein sidelink transmission resources corresponding to sidelink transmission or sidelink reception are determined based on first DCI, and the first DCI includes third indication information;

wherein the third indication information is used to indicate one of the following:

a time interval between reception of the first DCI and a sidelink transmission resource;

a time interval between a slot in which the first DCI is located and a first time unit in which a sidelink transmission resource is located; and

a time interval between start time of a downlink slot carrying the first DCI and start time of a sidelink transmission resource;

wherein a time interval is represented based on a number of time units, and one time unit includes M consecutive slots.

**163.**

The terminal device according to any one of claims 1 to 79, further comprising:

a second determining module, configured to determine a first reservation period based on one or more of the following:

a second reservation period indicated by indication information in sidelink control information (SCI); and

a number of time units in a resource pool;

wherein the first reservation period is represented based on a number of time units, the second reservation period is represented based on milliseconds, and one time unit includes M consecutive slots.

**164.**

The terminal device according to claim 80, wherein the first reservation period $P'_{rsvp}$ satisfies the following equation:

$$P'_{rsvp} = \left\lceil \frac{T'_{max}}{10240 \text{ ms}} \times P_{rsvp} \right\rceil$$

wherein $P_{rsvp}$ represents the second reservation period, and $T'_{max}$ represents a number of time units included in a resource pool during 10240 ms.

**165.**

The terminal device according to any one of claims 1 to 81, wherein a period of PSFCHs is represented based on a number of time units; wherein one time unit includes M consecutive slots.

**166.**

The terminal device according to claim 82, wherein the period of PSFCHs is indicated based on fourth indication information, and the fourth indication information belongs to resource pool configuration information.

**167.**

A terminal device, comprising a transceiver, a memory and a processor, wherein the memory is configured to store a computer program, and the processor is configured to call the computer program stored in the memory, and control the transceiver to receive signals or transmit signals, to enable the terminal device to perform the method according to any one of claims 1 to 83.

**168.**

An apparatus, comprising a processor, configured to call a program from a memory, to enable the apparatus to perform the method according to any one of claims 1 to 83.

**169.**

A chip, comprising a processor, configured to call a program from a memory, to enable a device equipped with the chip to perform the method according to any one of claims 1 to 83.

**170.**

A computer-readable storage medium, wherein a computer program is stored thereon, and the computer program enables a computer to perform the method according to any one of claims 1 to 83.

**171.**

A computer program product, comprising a computer program, wherein the computer program enables a computer to perform the method according to any one of claims 1 to 83.

**172.**
A computer program, wherein the computer program enables a computer to perform the method according to any one of claims 1 to 83.

FIG. 1

FIG. 2

110

FIG. 3

120b                           120b

Sidelink communication

FIG. 4

**Communication group**

Terminal device 1

Resource assignment

Resource assignment

Terminal device 2

Terminal device 3

Sidelink communication

FIG. 5

Terminal device 2

Terminal device 6

**Terminal device 1**

Terminal device 3

Terminal device 5

Terminal device 4

FIG. 6

Terminal device 1          Terminal device 2

Sidelink data

FIG. 7

Communication
group

Terminal device 2

Terminal device 1

Terminal device 3

Terminal device 4

FIG. 8

FIG. 9A

FIG. 9B

Slot 0    Slot 1    Slot 2    Slot 3    Slot 4    Slot 5    Slot 6    Slot 7

PSCCH    PSSCH    PSFCH

FIG. 10

PSCCH of 3 symbols

PSCCH of 2 symbols

FIG. 11

|       | Symbol #1 | Symbol #2 | Symbol #3 |
|-------|-----------|-----------|-----------|
| RE#11 |           |           |           |
| RE#10 |           |           |           |
| RE#9  | DM-RS     | DM-RS     | DM-RS     |
| RE#8  |           |           |           |
| RE#7  |           |           |           |
| RE#6  |           |           |           |
| RE#5  | DM-RS     | DM-RS     | DM-RS     |
| RE#4  |           |           |           |
| RE#3  |           |           |           |
| RE#2  |           |           |           |
| RE#1  | DM-RS     | DM-RS     | DM-RS     |
| RE#0  |           |           |           |

FIG. 12

FIG. 13

FIG. 14

1510

1511

1514

Time point 1

Time point 2

1512

1513

Time point 3

Time point 4

1

2

3

4

5

FIG. 15

RRC

N candidate TCI states

MAC

K activated TCI states

DCI

One or two used TCI states

FIG. 16

A first terminal device performs sidelink communication in a first time unit

S1710

FIG. 17

☐ GP ▨ AGC ☐ PSCCH/PSSCH

Slot n — Slot n+1

Time unit

FIG. 18A

□ GP ▨ AGC ⊟ PSCCH/PSSCH

Slot n — Slot n+1

Time unit

FIG. 18B

□ GP ▨ AGC ⊟ PSCCH/PSSCH ▦ PSFCH

Slot n — Slot n+1

Time unit

FIG. 18C

□ GP ▨ AGC ⊟ PSCCH/PSSCH ▦ PSFCH

Slot n — Slot n+1

Time unit

FIG. 18D

□ GP ▨ AGC ⊟ PSCCH/PSSCH

Slot n — Slot n+1 — Slot n+2 — Slot n+3

Time unit

FIG. 19A

□ GP ▨ AGC ⊟ PSCCH/PSSCH

Slot n — Slot n+1 — Slot n+2 — Slot n+3

Time unit

FIG. 19B

□ GP ▨ AGC ⊟ PSCCH/PSSCH ▦ PSFCH

Slot n — Slot n+1 — Slot n+2 — Slot n+3

Time unit

FIG. 19C

□ GP ▨ AGC ⊟ PSCCH/PSSCH ▦ PSFCH

Slot n — Slot n+1 — Slot n+2 — Slot n+3

Time unit

FIG. 19D

☐ GP ▨ AGC ☐ PSCCH/PSSCH ▓ PSFCH

|← Slot n →|← Slot n+1 →|← Slot n+2 →|← Slot n+3 →|

|← Time unit →|

FIG. 19E

☐ GP ▨ AGC ☐ PSCCH/PSSCH ▓ PSFCH

|← Slot n →|← Slot n+1 →|← Slot n+2 →|← Slot n+3 →|← Slot n+4 →|← Slot n+5 →|← Slot n+6 →|← Slot n+7 →|

|← Time unit →|

FIG. 19F

Slot index: 0 1 2 3 4 5 6 7 8 9 10 11 12 13 14 15 16 17 18 19 t

Time unit index: 0 1 2 3 4 5 6 7 8 9

R1 R2 R3

t1

t2

FIG. 20

☐ GP ▨ AGC ☐ PSSCH ▦ PSCCH ▓ PSFCH

|← Slot n →|← Slot n+1 →|← Slot n+2 →|← Slot n+3 →|

|← Time unit #1 →|← Time unit #2 →|

FIG. 21

☐ GP ▨ AGC ☐ PSSCH ▦ PSCCH ▓ PSFCH

|← Slot n →|← Slot n+1 →|← Slot n+2 →|← Slot n+3 →|← Slot n+4 →|← Slot n+5 →|← Slot n+6 →|← Slot n+7 →|

|← Time unit #1 →|← Time unit #2 →|

FIG. 22

☐ GP ▨ AGC ☐ PSSCH 1 ☰ PSSCH 2 ▦ PSCCH ▓ PSFCH

|← Slot n →|← Slot n+1 →|← Slot n+2 →|← Slot n+3 →|

|← Time unit #1 →|← Time unit #2 →|

FIG. 23

☐ GP ▨ AGC ☐ PSSCH 1 ☰ PSSCH 2 ⊠ PSSCH 3 ☰ PSSCH 4 ⊡ PSCCH ▩ PSFCH

←Slot n→ ←Slot n+1→ ←Slot n+2→ ←Slot n+3→ ←Slot n+4→ ←Slot n+5→ ←Slot n+6→ ←Slot n+7→
←——————Time unit #1——————→ ←——————Time unit #2——————→

FIG. 24

☐ GP ▨ AGC ☐ PSSCH 1 ☰ PSSCH 2 ⊡ PSCCH ▩ PSFCH

←Slot n→ ←Slot n+1→ ←Slot n+2→ ←Slot n+3→ ←Slot n+4→ ←Slot n+5→ ←Slot n+6→ ←Slot n+7→
←——————Time unit #1——————→ ←——————Time unit #2——————→

FIG. 25

☐ GP ▨ AGC ☐ PSSCH 1 ☰ PSSCH 2 ⊡ PSCCH ▩ PSFCH

←Slot n→ ←Slot n+1→ ←Slot n+2→ ←Slot n+3→ ←Slot n+4→ ←Slot n+5→ ←Slot n+6→ ←Slot n+7→
←——————Time unit #1——————→ ←——————Time unit #2——————→

FIG. 26

☐ GP ▨ AGC ☐ PSSCH 1 ☰ PSSCH 2 ⊡ PSCCH ▩ PSFCH

←————Slot n————→ ←————Slot n+1————→ ←————Slot n+2————→ ←————Slot n+3————→
←——————Time unit #1——————→ ←——————Time unit #2——————→

FIG. 27

☐ GP ▨ AGC ☐ PSSCH 1 ☰ PSSCH 2 ⊠ PSSCH 3 ☰ PSSCH 4 ⊡ PSCCH ▩ PSFCH

←Slot n→ ←Slot n+1→ ←Slot n+2→ ←Slot n+3→ ←Slot n+4→ ←Slot n+5→ ←Slot n+6→ ←Slot n+7→
←——————Time unit #1——————→ ←——————Time unit #2——————→

FIG. 28

☐ GP ▨ AGC ☐ PSSCH 1 ☰ PSSCH 2 ⊡ PSCCH ▩ PSFCH

←Slot n→ ←Slot n+1→ ←Slot n+2→ ←Slot n+3→ ←Slot n+4→ ←Slot n+5→ ←Slot n+6→ ←Slot n+7→
←——————Time unit #1——————→ ←——————Time unit #2——————→

FIG. 29

☐ GP ▨ AGC ☐ PSSCH 1 ☰ PSSCH 2 ⊡ PSCCH ▩ PSFCH

←Slot n→ ←Slot n+1→ ←Slot n+2→ ←Slot n+3→ ←Slot n+4→ ←Slot n+5→ ←Slot n+6→ ←Slot n+7→
←——————Time unit #1——————→ ←——————Time unit #2——————→

FIG. 30

□ GP ▨ AGC ▢ PSSCH 1 ▤ PSSCH 2 ▦ PSCCH ▨ PSFCH

FIG. 31

A first terminal device receives or transmits a first PSFCH in a first time unit — S3210

FIG. 32

FIG. 33

FIG. 34

FIG. 35

**FIG. 36**

**FIG. 37**

A first terminal device determines a DMRS pattern for a first channel transmitted in a first time unit

S3810

**FIG. 38**

**FIG. 39**

**FIG. 40**

**FIG. 41**

☐ GP ◩ AGC ☐ PSSCH ⊡ PSCCH ▦ PSFCH ⊞ PSSCH DMRS

**FIG. 42**

☐ GP ◩ AGC ☐ PSSCH 1 ☰ PSSCH 2 ⊡ PSCCH ▦ PSFCH ☐ PSSCH DMRS

**FIG. 43A**

☐ GP ◩ AGC ☐ PSSCH 1 ☰ PSSCH 2 ⊡ PSCCH ▦ PSFCH ⊞ PSSCH DMRS

**FIG. 43B**

☐ GP ◩ AGC ☐ PSSCH 1 ☰ PSSCH 2 ⊡ PSCCH ▦ PSFCH ⊞ PSSCH DMRS

**FIG.43C**

☐ GP ◩ AGC ☐ PSSCH 1 ☰ PSSCH 2 ⊡ PSCCH ▦ PSFCH ⊞ PSSCH DMRS

**FIG.44A**

☐ GP ◩ AGC ☐ PSSCH 1 ☰ PSSCH 2 ⊡ PSCCH ▦ PSFCH ⊞ PSSCH DMRS

**FIG. 44B**

☐ GP ◩ AGC ☐ PSSCH 1 ☰ PSSCH 2 ⊡ PSCCH ▦ PSFCH ⊞ PSSCH DMRS

**FIG. 45**

□ GP ◩ AGC ☐ PSSCH 1 ☰ PSSCH 2 ⊡ PSCCH ▦ PSFCH ⊞ PSSCH DMRS

←Slot n→←Slot n+1→←Slot n+2→←Slot n+3→←Slot n+4→←Slot n+5→←Slot n+6→←Slot n+7→
←————————Time unit #1————————→←————————Time unit #2————————→

FIG. 46A

□ GP ◩ AGC ☐ PSSCH 1 ☰ PSSCH 2 ⊡ PSCCH ▦ PSFCH ⊞ PSSCH DMRS

←Slot n→←Slot n+1→←Slot n+2→←Slot n+3→←Slot n+4→←Slot n+5→←Slot n+6→←Slot n+7→
←————————Time unit #1————————→←————————Time unit #2————————→

FIG. 46B

□ GP ◩ AGC ☐ PSSCH ⊡ PSCCH ▦ PSFCH ⊞ PSSCH DMRS

←————Slot n————→←———Slot n+1———→←———Slot n+2———→←———Slot n+3———→
←————————Time unit #1————————→←————————Time unit #2————————→

FIG. 47A

□ GP ◩ AGC ☐ PSSCH ⊡ PSCCH ▦ PSFCH ⊞ PSSCH DMRS

←————Slot n————→←———Slot n+1———→←———Slot n+2———→←———Slot n+3———→
←————————Time unit #1————————→←————————Time unit #2————————→

FIG.47B

□ GP ◩ AGC ☐ PSSCH ⊡ PSCCH ▦ PSFCH ⊞ PSSCH DMRS

←————Slot n————→←———Slot n+1———→←———Slot n+2———→←———Slot n+3———→
←————————Time unit #1————————→←————————Time unit #2————————→

FIG.47C

DMRS symbol positions (1,6,11)
of a first DMRS pattern

DMRS symbol positions (3,10) of
a first DMRS pattern

←Slot n→←Slot n+1→←Slot n+2→←Slot n+3→←Slot n+4→←Slot n+5→←Slot n+6→←Slot n+7→
←————————Time unit #1————————→←————————Time unit #2————————→

□ GP ◩ AGC ☐ PSSCH ⊡ PSCCH ▦ PSFCH ⊞ PSSCH DMRS

FIG. 48

DMRS symbol positions (1,6,11) of a first DMRS pattern

DMRS symbol positions (3,10) of a first DMRS pattern

←Slot n→←Slot n+1→←Slot n+2→←Slot n+3→←Slot n+4→←Slot n+5→←Slot n+6→←Slot n+7→

←————Time unit #1————→←————Time unit #2————→

□ GP ⧄AGC □ PSSCH 1▤ PSSCH 2⦙ PSCCH▧ PSFCH▦ PSSCH DMRS

FIG. 49A

DMRS symbol positions (1,6,11) of a first DMRS pattern

DMRS symbol positions (1,6,11) of a first DMRS pattern

←Slot n→←Slot n+1→←Slot n+2→←Slot n+3→←Slot n+4→←Slot n+5→←Slot n+6→←Slot n+7→

←————Time unit #1————→←————Time unit #2————→

□ GP ⧄ AGC□ PSSCH 1 ▤ PSSCH 2⦙ PSCCH▧ PSFCH ▦PSSCH DMRS

FIG. 49B

DMRS symbol positions (1,6,11) of a first DMRS pattern

DMRS symbol positions (3,10) of a first DMRS pattern

←Slot n→←Slot n+1→←Slot n+2→←Slot n+3→←Slot n+4→←Slot n+5→←Slot n+6→←Slot n+7→

←————Time unit #1————→←————Time unit #2————→

□ GP ⧄AGC □ PSSCH 1▤ PSSCH 2 ⦙ PSCCH▧ PSFCH▦ PSSCH DMRS

FIG. 50

DMRS symbol positions (3,10) of a first DMRS pattern

DMRS symbol positions (1,6,11) of a first DMRS pattern

DMRS symbol positions (3,10) of a first DMRS pattern

DMRS symbol positions (1,6,11) of a first DMRS pattern

←Slot n→←Slot n+1→←Slot n+2→←Slot n+3→←Slot n+4→←Slot n+5→←Slot n+6→←Slot n+7→

←————Time unit #1————→←————Time unit #2————→

□ GP ⧄AGC □ PSSCH 1▤ PSSCH 2 ⦙ PSCCH▧ PSFCH ▦PSSCH DMRS

FIG. 51

DMRS symbol positions (1,5) of a first DMRS pattern

DMRS symbol positions (1,6,11) of a first DMRS pattern

DMRS symbol positions (1,6,11) of a first DMRS pattern

DMRS symbol positions (1,5) of a first DMRS pattern

DMRS symbol positions (1,5) of a first DMRS pattern

DMRS symbol positions (3,10) of a first DMRS pattern

A DMRS symbol position (0) of a first DMRS pattern

←Slot n→←Slot n+1→←Slot n+2→←Slot n+3→←Slot n+4→←Slot n+5→←Slot n+6→←Slot n+7→

←————Time unit #1————→←————Time unit #2————→

□ GP ⧄AGC ▭PSSCH⦙ PSCCH▧ PSFCH ▦ PSSCH DMRS

FIG. 52

DMRS symbol positions (1,5) of a first DMRS pattern · DMRS symbol positions (1,6,11) of a first DMRS pattern · DMRS symbol positions (3,10) of a first DMRS pattern · DMRS symbol positions (1,5) of a first DMRS pattern · DMRS symbol positions (1,5) of a first DMRS pattern · DMRS symbol positions (3,10) of a first DMRS pattern · A DMRS symbol position (0) of a first DMRS pattern

←Slot n→ ←Slot n+1→ ←Slot n+2→ ←Slot n+3→ ←Slot n+4→ ←Slot n+5→ ←Slot n+6→ ←Slot n+7→

←—————Time unit #1—————→ ←—————Time unit #2—————→

☐ GP ▨ AGC ▢ PSSCH 1 ▤ PSSCH 2 ▨ PSCCH ▨ PSFCH ⊞ PSSCH DMRS

FIG. 53

DMRS symbol positions (3,8) of a first DMRS pattern · DMRS symbol positions (1,6,11) of a first DMRS pattern · DMRS symbol positions (1,6,11) of a first DMRS pattern · DMRS symbol positions (3,8) of a first DMRS pattern · DMRS symbol positions (3,8) of a first DMRS pattern · DMRS symbol positions (3,10) of a first DMRS pattern · DMRS symbol positions (3,10) of a first DMRS pattern · A DMRS symbol position (0) of a first DMRS pattern

←Slot n→ ←Slot n+1→ ←Slot n+2→ ←Slot n+3→ ←Slot n+4→ ←Slot n+5→ ←Slot n+6→ ←Slot n+7→

←—————Time unit #1—————→ ←—————Time unit #2—————→

☐ GP ▨ AGC ▢ PSSCH 1 ▤ PSSCH 2 ▨ PSCCH ▨ PSFCH ⊞ PSSCH DMRS

FIG.54

←Slot n→ ←Slot n+1→ ←Slot n+2→ ←Slot n+3→ ←Slot n+4→ ←Slot n+5→ ←Slot n+6→ ←Slot n+7→

←—————Time unit #1—————→ ←—————Time unit #2—————→

☐ GP ▨ AGC ▢ PSSCH ▨ PSCCH ▨ PSFCH ⊞ PSSCH DMRS

FIG. 55

Terminal device 5600

Communication module 5610

FIG. 56

Apparaus 5700

Processor 5710

⇕

⇕ ⇕

Memory 5720

Transceiver 5730

FIG. 57

## INTERNATIONAL SEARCH REPORT

| International application No. |
| --- |
| **PCT/CN2023/080632** |

| A. | CLASSIFICATION OF SUBJECT MATTER |
| --- | --- |

H04W 72/0446(2023.01)i

According to International Patent Classification (IPC) or to both national classification and IPC

| B. | FIELDS SEARCHED |
| --- | --- |

Minimum documentation searched (classification system followed by classification symbols)

IPC: H04W; H04Q; H04B; H04L

Documentation searched other than minimum documentation to the extent that such documents are included in the fields searched

Electronic data base consulted during the international search (name of data base and, where practicable, search terms used)

CNTXT: EPTXT; WOTXT; WPABSC; WPABS; ENTXTC; 3GPP; CJFD: 时隙聚合, 聚合时隙, 超级时隙, 多时隙, 多个时隙, 时隙组, 图案, DMRS, DM-RS, PSSCH, 间隔, super slot, slot group, multislot, multi-slot, aggragate slot, slot aggregation, interval, pattern

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 112566062 A (BEIJING SAMSUNG COMMUNICATION TECHNOLOGY RESEARCH CO., LTD. et al.) 26 March 2021 (2021-03-26) description, paragraphs [0052]-[0237] | 1-172 |
| X | CN 115462155 A (IDAC HOLDINGS, INC.) 09 December 2022 (2022-12-09) description, paragraphs [0057], [0254]-[0394] and [0441]-[0451] | 1-172 |
| X | CN 111602439 A (GUANGDONG OPPO MOBILE COMMUNICATIONS CO., LTD.) 28 August 2020 (2020-08-28) description, page 5, line 15-page 8, line 18 | 1-172 |
| X | CN 114391264 A (LG ELECTRONICS INC.) 22 April 2022 (2022-04-22) description, paragraphs [0104]-[0272] | 1-172 |
| A | CN 115580934 A (SHANGHAI TUILUO COMMUNICATION TECHNOLOGY PARTNERSHIP ENTERPRISE (LIMITED PARTNERSHIP)) 06 January 2023 (2023-01-06) entire description | 1-172 |

| ☑ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **17 November 2023** | **23 November 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/080632** |

**C. DOCUMENTS CONSIDERED TO BE RELEVANT**

| Category* | Citation of document, with indication, where appropriate, of the relevant passages | Relevant to claim No. |
| --- | --- | --- |
| A | US 2023047000 A1 (HUAWEI TECHNOLOGIES CO., LTD.) 16 February 2023 (2023-02-16) <br> entire description | 1-172 |
| A | WO 2022027660 A1 (HUAWEI TECHNOLOGIES CO., LTD.) 10 February 2022 (2022-02-10) <br> entire description | 1-172 |

Form PCT/ISA/210 (second sheet) (July 2022)

**INTERNATIONAL SEARCH REPORT**
Information on patent family members

International application No.

**PCT/CN2023/080632**

| Patent document cited in search report | | | Publication date (day/month/year) | Patent family member(s) | | | Publication date (day/month/year) |
|---|---|---|---|---|---|---|---|
| CN | 112566062 | A | 26 March 2021 | WO | 2021060936 | A1 | 01 April 2021 |
| | | | | EP | 4018742 | A1 | 29 June 2022 |
| | | | | US | 2022346118 | A1 | 27 October 2022 |
| | | | | KR | 20210036853 | A | 05 April 2021 |
| CN | 115462155 | A | 09 December 2022 | EP | 4115674 | A1 | 11 January 2023 |
| | | | | BR | 112022017721 | A2 | 08 November 2022 |
| | | | | KR | 20220152259 | A | 15 November 2022 |
| | | | | TW | 202147799 | A | 16 December 2021 |
| | | | | WO | 2021178788 | A1 | 10 September 2021 |
| CN | 111602439 | A | 28 August 2020 | MX | 2020007065 | A | 09 September 2020 |
| | | | | ES | 2942004 | T3 | 29 May 2023 |
| | | | | EP | 4192171 | A1 | 07 June 2023 |
| | | | | EP | 3726901 | A1 | 21 October 2020 |
| | | | | EP | 3726901 | A4 | 27 January 2021 |
| | | | | EP | 3726901 | B1 | 15 March 2023 |
| | | | | TW | 201931879 | A | 01 August 2019 |
| | | | | TWI | 805673 | B | 21 June 2023 |
| | | | | BR | 112020013675 | A2 | 01 December 2020 |
| | | | | CA | 3087605 | A1 | 11 July 2019 |
| | | | | JP | 2021510035 | A | 08 April 2021 |
| | | | | JP | 7282094 | B2 | 26 May 2023 |
| | | | | US | 2020336276 | A1 | 22 October 2020 |
| | | | | KR | 20200106520 | A | 14 September 2020 |
| | | | | AU | 2018399356 | A1 | 06 August 2020 |
| | | | | WO | 2019134370 | A1 | 11 July 2019 |
| | | | | WO | 2019134370 | A8 | 06 August 2020 |
| | | | | WO | 2019134096 | A1 | 11 July 2019 |
| CN | 114391264 | A | 22 April 2022 | WO | 2021034075 | A1 | 25 February 2021 |
| | | | | EP | 4002946 | A1 | 25 May 2022 |
| | | | | US | 2022295524 | A1 | 15 September 2022 |
| | | | | KR | 20220050920 | A | 25 April 2022 |
| CN | 115580934 | A | 06 January 2023 | None | | | |
| US | 2023047000 | A1 | 16 February 2023 | EP | 4132171 | A1 | 08 February 2023 |
| | | | | EP | 4132171 | A4 | 04 October 2023 |
| | | | | WO | 2021204128 | A1 | 14 October 2021 |
| WO | 2022027660 | A1 | 10 February 2022 | CN | 116261844 | A | 13 June 2023 |

Form PCT/ISA/210 (patent family annex) (July 2022)